(19) Europäisches Patentamt
European Patent Office
Office européen des brevets

(11) **EP 2 549 324 A1**

(12) **EUROPEAN PATENT APPLICATION**
published in accordance with Art. 153(4) EPC

(43) Date of publication:
**23.01.2013 Bulletin 2013/04**

(51) Int Cl.:
*G02F 1/133* (2006.01)    *G02F 1/1337* (2006.01)
*G02F 1/1368* (2006.01)    *G09G 3/20* (2006.01)
*G09G 3/36* (2006.01)

(21) Application number: **11756378.3**

(22) Date of filing: **17.03.2011**

(86) International application number:
**PCT/JP2011/056343**

(87) International publication number:
**WO 2011/115194 (22.09.2011 Gazette 2011/38)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.03.2010  JP 2010065100**

(71) Applicant: **Sharp Kabushiki Kaisha
Osaka-shi, Osaka 545-8522 (JP)**

(72) Inventors:
• **NAKANISHI Yohei
Osaka-shi,
Osaka 545-8522 (JP)**

• **MIZUSAKI Masanobu
Osaka-shi,
Osaka 545-8522 (JP)**
• **KATAYAMA Takashi
Osaka-shi,
Osaka 545-8522 (JP)**

(74) Representative: **Müller - Hoffmann & Partner
Patentanwälte
Innere Wiener Strasse 17
81667 München (DE)**

(54) **LIQUID CRYSTAL DISPLAY DEVICE**

(57)    A liquid crystal display device **(100)** as an embodiment of the present invention has a plurality of pixels **(P)**, each of which includes subpixels **(Spa, Spb)** that are defined by subpixel electrodes **(124a, 124b)**, respectively. In each pixel **(P)**, after TFTs **(130a, 130b)** that have been ON have turned OFF, the average potential of the subpixel electrode **(124a)** has varied from a potential corresponding to a source signal voltage that was supplied to a source line **(Ls)** when the TFTs **(130a, 130b)** were ON. Meanwhile, the average potential of the subpixel electrode **(124b)** corresponds to the source signal voltage that was supplied to the source line **(Ls)** when the TFTs **(130a, 130b)** were ON.

*FIG.1*

(a)

(b)

EP 2 549 324 A1

## Description

## TECHNICAL FIELD

The present invention relates to a liquid crystal display device and more particularly relates to a liquid crystal display device with pixels, each of which is made up of multiple subpixels.

## BACKGROUND ART

Liquid crystal displays (LCDs) have been used in not only small display devices such as the monitor screen of a cellphone but also TV sets with a big screen. TN (twisted nematic) mode LCDs, which would often be used in the past, achieved relatively narrow viewing angles, but LCDs of various other modes with wider viewing angles have recently been developed one after another. Examples of those wider viewing angle modes include IPS (in-plane switching) mode and VA (vertical alignment) mode. Among those wide viewing angle modes, the VA mode is adopted in a lot of LCDs because the VA mode would achieve a sufficiently high contrast ratio.

However, it is known that the display quality achieved by a VA mode LCD when the viewer is located right in front of the screen (which will be referred to herein as "when viewed straight on") is significantly different from the one achieved when the viewer is located obliquely with respect to the screen (which will be referred to herein as "when viewed obliquely"), which is a problem with the VA mode LCD. Particularly when a grayscale tone is displayed, if adjustments are made so as to optimize the display performance when viewed straight on, then the display performance (including the hue and the gamma characteristic) achieved when viewed obliquely will be quite different from the one achieved when viewed straight on. The optic axis direction of a liquid crystal molecule is the major axis direction of that molecule. When a grayscale tone is displayed, the optic axis direction of a liquid crystal molecule is somewhat tilted with respect to the principal surface of the substrate. And if the viewing angle (or viewing direction) is changed in such a state so as to view the screen obliquely and parallel to the optic axis direction of the liquid crystal molecules, the resultant display performance will be totally different from the one achieved when viewed straight on. Specifically, when viewed obliquely, the displayed image will look more whitish as a whole than when viewed straight on, which is called a "whitening" phenomenon. To minimize such a whitening phenomenon, it is known that a single pixel may be divided into multiple (typically two) subpixels and different effective voltages may be applied to those subpixels (see Patent Documents Nos. 1 and 2, for example).

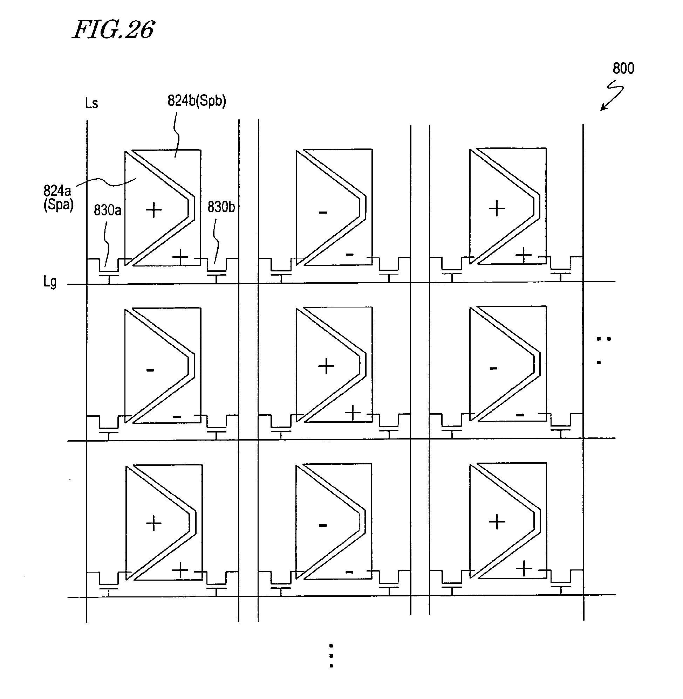

FIG. 26 illustrates a liquid crystal display device 800 as disclosed in Patent Document No. 1. In this liquid crystal display device 800, each pair of subpixel electrodes 824a and 824b are connected to two different source lines Ls via their associated TFTs 830a and 803b, respectively. And this liquid crystal display device 800 is driven so that the two subpixel electrodes 824a and 824b have mutually different potentials. In FIG. 26, a subpixel, of which the subpixel electrode has a higher potential than that of a counter electrode, is identified by "+" and a subpixel, of which the subpixel electrode has a lower potential than that of the counter electrode, is identified by "-". The relations in potential between the subpixel electrodes and the counter electrode will also be referred to herein as "polarities".

If the subpixel electrodes 824a and 824b have mutually different potentials in this manner, then two different voltages are applied to the respective liquid crystal layers of the subpixels Spa and Spb, and the subpixels Spa and Spb will have different potentials. As a result, the whitening phenomenon can be reduced. In the liquid crystal display device 800, however, two source lines need to be provided for each column of pixels. Consequently, the aperture ratio decreases and the power dissipated by the source driver increases.

FIG. 27 illustrates a liquid crystal display device 900 as disclosed in Patent Document No. 2. Only one pixel P thereof is illustrated schematically in FIG. 27. In this liquid crystal display device 900, the subpixel electrodes 924a and 924b are arranged in the column direction (i.e., y direction). These two subpixel electrodes 924a and 924b are connected to the same source line Ls via two different TFTs 930a and 930b, respectively. And this liquid crystal display device 900 is driven so that the two subpixel electrodes 924a and 924b have different average potentials according to storage capacitor signals supplied to storage capacitor lines Lcsa and Lcsb. For example, if the average potential of one of the two subpixel electrodes 924a and 924b increases from a potential corresponding to the source signal voltage supplied to the source line Ls, the other average potential decreases from the potential corresponding to the source signal voltage supplied to the source line Ls. If the subpixel electrodes 924a and 924b have two different average potentials in this manner, then mutually different voltages are applied to the respective liquid crystal layers of the subpixels and the subpixels Spa and SPb come to have different potentials. As a result, the whitening phenomenon can be reduced. In this liquid crystal display device 900, a single source line is provided for each column of pixels, and therefore, the decrease in aperture ratio and the increase in power dissipation can be both checked.

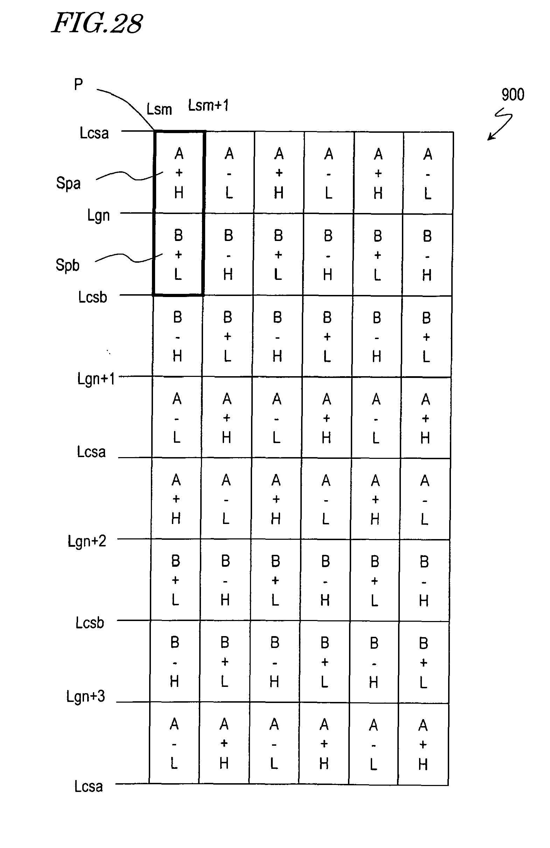

FIG. 28 schematically illustrates multiple pixels P of the liquid crystal display device 900. In FIG. 28, source lines provided for mth and (m+1)th columns of pixels are identified by Lsm and Lsm+1, respectively, and gate lines provided for nth to (n+3)th rows of pixels are identified by Lgn to Lgn+3, respectively. Also, in FIG. 28, a subpixel, in which the effective voltage applied to its liquid crystal layer changes as the storage capacitor signal voltage supplied to the storage capacitor line Lcsa varies, is identified by "A", while a subpixel, in which the effective voltage applied to its liquid crystal layer changes as the storage capacitor signal voltage supplied to the storage capacitor line **Lcsb** varies, is identified by "B". Furthermore, in FIG. **28,** "+" and "-" indicate the polarities of subpixels. And in each single pixel **P** shown in FIG. **28,** one subpixel with the higher luminance is identified by "H" and the other subpixel with the lower luminance is identified by "L". In the following description, in each single pixel **P,** one subpixel with the higher luminance will be sometimes referred to herein as a "bright subpixel" and the other subpixel with the lower luminance as a "dark subpixel", respectively.

In the liquid crystal display device **900,** pixels that are adjacent to each other in the row direction have mutually opposite polarities, so do pixels that are adjacent to each other in the column direction. But pixels that are obliquely adjacent to each other have the same polarity. For example, the polarity of the pixels located at the row n, column m position and at the row n+1, column m+1 position is positive, while the polarity of the pixels located at the row n+1, column m position and at the row n, column m+1 position is negative. Such a driving method is called a "dot inversion drive", by which the image persistence on the screen can be reduced.

## CITATION LIST

### PATENT LITERATURE

Patent Document No. 1: Japanese Laid-Open Patent Publication No. 2006-209135
Patent Document No. 2: Japanese Laid-Open Patent Publication No. 2005-189804

## SUMMARY OF INVENTION

### TECHNICAL PROBLEM

In the liquid crystal display device **900,** as the dot inversion drive is adopted, bright subpixels identified by "H" in FIG. **28** are arranged obliquely. That is why if an input signal to represent a line that runs horizontally (i.e., in the row direction) on the display screen is entered, the line sometimes looks smeared when the display screen of the liquid crystal display device **900** is viewed from a close position because the bright subpixels are arranged obliquely in the row of pixels. As a result, the display quality is debased. Also, Patent Document No. 2 says that if the area of each bright subpixel is smaller than that of each dark subpixel, the viewing angle characteristic can be improved efficiently when low grayscales are displayed. However, if the bright and dark subpixels have an uneven area ratio in the liquid crystal display device **900,** then the subpixels cannot be arranged in matrix and lines often look smeared.

The present inventors perfected our invention in order to overcome these problems by providing a liquid crystal display device with improved display quality.

## SOLUTION TO PROBLEM

A liquid crystal display device according to the present invention includes an active-matrix substrate, a counter substrate, and a liquid crystal layer which is interposed between the active-matrix substrate and the counter substrate. The liquid crystal display device has a plurality of pixels which are arranged in columns and rows to form a matrix pattern. Each of the plurality of pixels has a first subpixel and a second subpixel. The length of each said pixel as measured in a column direction is defined by at least one of the first and second subpixels. The active-matrix substrate includes: a plurality of pixel electrodes, each of which includes first and second subpixel electrodes that define the first and second subpixels, respectively; a plurality of first thin-film transistors, each of which has a gate, a source and a drain that is electrically connected to the first subpixel electrode; a plurality of second thin-film transistors, each of which has a gate, a source and a drain that is electrically connected to the second subpixel electrode; a plurality of gate lines, each of which is electrically connected to the respective gates of the first and second thin-film transistors; a plurality of source lines, each of which is electrically connected to the respective sources of the first and second thin-film transistors; a plurality of storage capacitor electrodes, each of which is electrically connected to the first subpixel electrode and the drain of the first thin-film transistor; and a plurality of storage capacitor lines, each of which is electrically connected to at least one of a plurality of storage capacitor counter electrodes that form storage capacitors with the plurality of storage capacitor electrodes. The counter substrate has a counter electrode. After the first and second thin-film transistors that have been in OFF state have turned ON in an arbitrary one of the pixels, an average potential of the first subpixel electrode has varied from a potential corresponding to a source signal voltage that was supplied to the source line when the first and second thin-film transistors were ON, while an average potential of the second subpixel electrode corresponds to the source signal voltage that was supplied to the source line when the first and second thin-film transistors were ON.

In one embodiment, the plurality of storage capacitor lines include a first storage capacitor line, which is associated with the first subpixel of one pixel in two of the pixels that are adjacent to each other in the row direction, and a second storage capacitor line, which is associated with the first subpixel of the other pixel.

In one embodiment, the one pixel has a different polarity from the other pixel.

In one embodiment, after the respective first and second thin-film transistors of the two adjacent pixels that have been in ON state have turned OFF, the first change in the voltage of a storage capacitor signal supplied to the first storage capacitor line occurs in a different direction from the first change in the voltage of a storage capacitor signal supplied to the second storage capacitor line.

In one embodiment, it is not until a gate signal voltage supplied to a gate line that is electrically connected to the respective gates of the first and second thin-film transistors of the two adjacent pixels has changed into an OFF-state voltage that the voltages of the storage capacitor signals supplied to the first and second storage capacitor lines change.

In one embodiment, the potential of the first subpixel electrode changes in one direction in one of the respective first subpixels of the plurality of pixels, in which the potential of the first subpixel electrode is higher than that of the counter electrode, and changes in another direction in another one of the first subpixels in which the potential of the first subpixel electrode is lower than that of the counter electrode.

In one embodiment, one of the first and second subpixels has a larger area than the other subpixel.

In one embodiment, the area of the one subpixel is 1.5 to 4 times as large as that of the other subpixel.

In one embodiment, the one subpixel has a lower luminance than the other subpixel.

In one embodiment, the one subpixel is the first subpixel. After the first and second thin-film transistors that have been in ON state have turned OFF in an arbitrary one of the pixels, the first change in the voltage of the storage capacitor signal supplied to the storage capacitor line that is associated with the first subpixel, in which the first subpixel electrode has a lower potential than the counter electrode, is increase, while the first change in the voltage of the storage capacitor signal supplied to the storage capacitor line that is associated with the first subpixel, in which the first subpixel electrode has a higher potential than the counter electrode, is decrease.

In one embodiment, the one subpixel is the second subpixel. After the first and second thin-film transistors that have been in ON state have turned OFF in an arbitrary one of the pixels, the first change in the voltage of the storage capacitor signal supplied to the storage capacitor line that is associated with the first subpixel, in which the first subpixel electrode has a higher potential than the counter electrode, is increase, while the first change in the voltage of the storage capacitor signal supplied to the storage capacitor line that is associated with the first subpixel, in which the first subpixel electrode has a lower potential than the counter electrode, is decrease.

In one embodiment, the first subpixel includes the storage capacitor.

In one embodiment, the second subpixel includes no storage capacitors.

In one embodiment, the active-matrix substrate further includes multiple pairs of storage capacitor electrodes, each pair of which are electrically connected to the second subpixel electrode and the drain of the second thin-film transistor, respectively. In each of the multiple pairs of storage capacitor electrodes, one storage capacitor electrode and a storage capacitor counter electrode, which is electrically connected to a storage capacitor line associated with the first subpixel of an arbitrary one of pixels, form a storage capacitor, while the other storage capacitor electrode and a storage capacitor counter electrode, which is electrically connected to a storage capacitor line associated with the first subpixel of a pixel that is adjacent to the arbitrary pixel in the row direction, form another storage capacitor.

In one embodiment, after the first and second thin-film transistors have turned OFF, the first change in the voltage of a storage capacitor signal supplied to the storage capacitor line that is associated with one of the pair of storage capacitor electrodes occurs in a different direction from the first change in the voltage of a storage capacitor signal supplied to the storage capacitor line associated with the other storage capacitor electrode.

In one embodiment, the plurality of source lines runs in the column direction, and the plurality of gate lines runs in a row direction.

In one embodiment, the first and second subpixels are adjacent to each other in the row direction.

In one embodiment, among ones of the pixels that are arranged in the column direction, the first and second subpixels are arranged in line.

In one embodiment, among ones of the pixels that are arranged in the row direction, the first and second subpixels are arranged alternately.

In one embodiment, the first and second subpixels are arranged so that one of the first and second subpixels surrounds the other subpixel.

In one embodiment, among ones of the pixels that form two adjacent rows in the column direction, the potential of the first subpixel electrodes varies according to a storage capacitor signal supplied to the same storage capacitor line.

In one embodiment, each of the first and second subpixel electrodes includes a trunk portion that runs in the row and column directions and a branch portion that is extended from the trunk portion.

In one embodiment, at least one of the active-matrix substrate and the counter substrate further includes an alignment film.

In one embodiment, the alignment film includes an optical alignment film.

In one embodiment, the liquid crystal display device further includes alignment sustaining layers which are arranged between the active-matrix substrate and the liquid crystal layer and between the counter substrate and the liquid crystal layer, respectively.

In one embodiment, the active-matrix substrate further includes a plurality of drain electrodes, each of which is connected to the drain of the first thin-film transistor and the storage capacitor electrode.

In one embodiment, each of the plurality of drain electrodes is arranged so as to overlap with the edge of at least one of the first and second subpixel electrodes.

In one embodiment, each of the plurality of drain electrodes overlaps with a region where the reference alignment azimuth of liquid crystal molecules in at least one liquid crystal domain in the liquid crystal layer intersects with the edge of at least one of the first and second subpixel electrodes.

In one embodiment, each of the first and second subpixels has four liquid crystal domains, in any two of which the reference alignment azimuths of liquid crystal molecules are different from each other substantially by an integral multiple of 90 degrees.

In one embodiment, in each of the first and second subpixels, regions corresponding to the four liquid crystal domains are arranged in line in the column direction. In two adjacent ones of the four liquid crystal domains, the reference alignment azimuths of the liquid crystal molecules are different from each other by approximately 90 degrees.

## ADVANTAGEOUS EFFECTS OF INVENTION

A liquid crystal display device according to the present invention achieves improved display quality.

## BRIEF DESCRIPTION OF DRAWINGS

[FIG. **1**] **(a)** schematically illustrates a first embodiment of a liquid crystal display device according to the present invention and **(b)** is an equivalent circuit diagram of the liquid crystal display device.

[FIG. **2**] A schematic representation of the liquid crystal display device shown in FIG. **1**.

[FIG. **3**] A diagram showing the voltage waveforms of respective kinds of signals applied to the liquid crystal display device shown in FIG. **1**.

[FIG. **4**] **(a)** and **(b)** are graphs showing variations in luminance in an oblique direction.

[FIG. **5**] An equivalent circuit diagram of a liquid crystal display device as a second embodiment of the present invention.

[FIG. **6**] A schematic representation of the liquid crystal display device shown in FIG. **5**.

[FIG. **7**] An equivalent circuit diagram of the liquid crystal display device shown in FIG. **5**.

[FIG. **8**] A diagram showing the voltage waveforms of respective kinds of signals applied to the liquid crystal display device shown in FIG. **7** in one vertical scanning period.

[FIG. **9**] A diagram showing the voltage waveforms of respective kinds of signals applied to the liquid crystal display device shown in FIG. **7** in another vertical scanning period.

[FIG. **10**] A schematic representation of a liquid crystal display device as a third embodiment of the present invention.

[FIG. **11**] An equivalent circuit diagram of a liquid crystal display device as a fourth embodiment of the present invention.

[FIG. **12**] A schematic representation of the liquid crystal display device shown in FIG. **11**.

[FIG. **13**] A schematic representation of a liquid crystal display device as a fifth embodiment of the present invention.

[FIG. **14**] An equivalent circuit diagram of the liquid crystal display device shown in FIG. **13**.

[FIG. **15**] A diagram showing the voltage waveforms of respective kinds of signals applied to the liquid crystal display device shown in FIG. **13** in one vertical scanning period.

[FIG. **16**] A diagram showing the voltage waveforms of respective kinds of signals applied to the liquid crystal display device shown in FIG. **13** in another vertical scanning period.

[FIG. **17**] **(a)** and **(b)** are schematic representations of a liquid crystal display device as a sixth embodiment of the present invention.

[FIG. **18**] A schematic representation illustrating one pixel of the liquid crystal display device shown in FIG. 17 on a larger scale.

[FIG. **19**] **(a)** and **(b)** are schematic representations of a liquid crystal display device as a seventh embodiment of the present invention.

[FIG. **20**] **(a)** is a schematic representation showing the tilt directions of liquid crystal molecules in the vicinity of the alignment film of the active-matrix substrate in the liquid crystal display device shown in FIG. **19**, **(b)** is a schematic representation showing the tilt directions of liquid crystal molecules in the vicinity of the alignment film of its counter substrate, and **(c)** is a schematic representation showing the alignment directions of liquid crystal domains of first and second subpixels.

[FIG. **21**] A schematic representation of a liquid crystal display device as an eighth embodiment of the present invention.

[FIG. **22**] **(a)** is a schematic representation showing the tilt directions of liquid crystal molecules in the vicinity of the alignment film of the active-matrix substrate in the liquid crystal display device shown in FIG. **21**, **(b)** is a schematic representation showing the tilt directions of liquid crystal molecules in the vicinity of the alignment film of its counter substrate, and **(c)** is a schematic representation showing the alignment directions of liquid crystal domains of first and second subpixels.

[FIG. **23**] A schematic representation of a liquid crystal display device as a ninth embodiment of the present invention.

[FIG. **24**] **(a)** is a schematic representation showing the tilt directions of liquid crystal molecules in the vicinity of the alignment film of the active-matrix substrate in the liquid crystal display device shown in FIG. **23**, **(b)** is a schematic representation showing the tilt directions of liquid crystal molecules in the vicinity of the alignment film of its counter substrate, and **(c)** is a schematic representation showing the alignment directions of liquid crystal domains of first and second subpixels.

[FIG. **25**] A schematic representation of a liquid crystal display device as a tenth embodiment of the present invention.

[FIG. **26**] A schematic representation of a known liquid crystal display device.

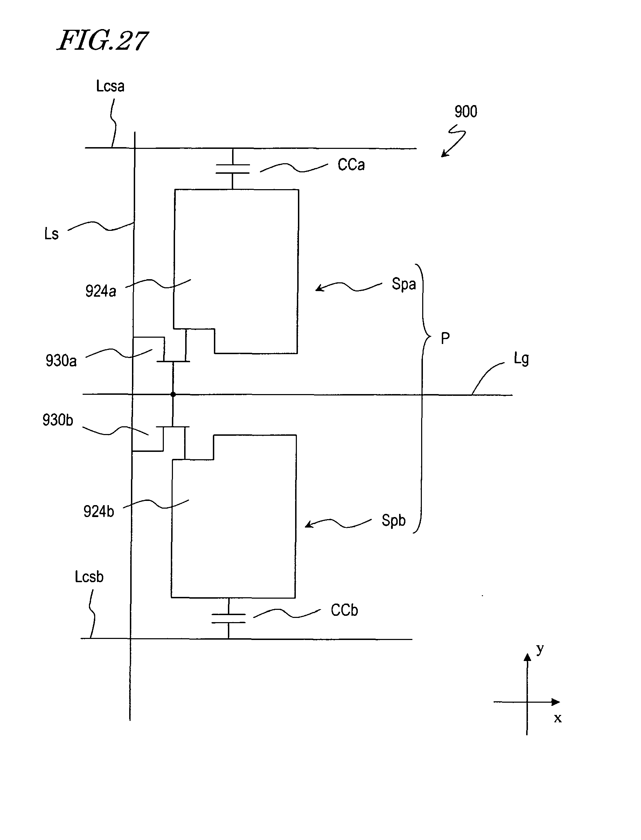

[FIG. **27**] A schematic representation of another known liquid crystal display device.

[FIG. **28**] A schematic representation showing the bright and dark pattern and polarities of subpixels in the liquid crystal display device shown in FIG. **27.**

## DESCRIPTION OF EMBODIMENTS

Hereinafter, embodiments of a liquid crystal display device according to the present invention will be described with reference to the accompanying drawings. It should be noted that the present invention is in no way limited to the embodiments to be described below.

(EMBODIMENT 1)

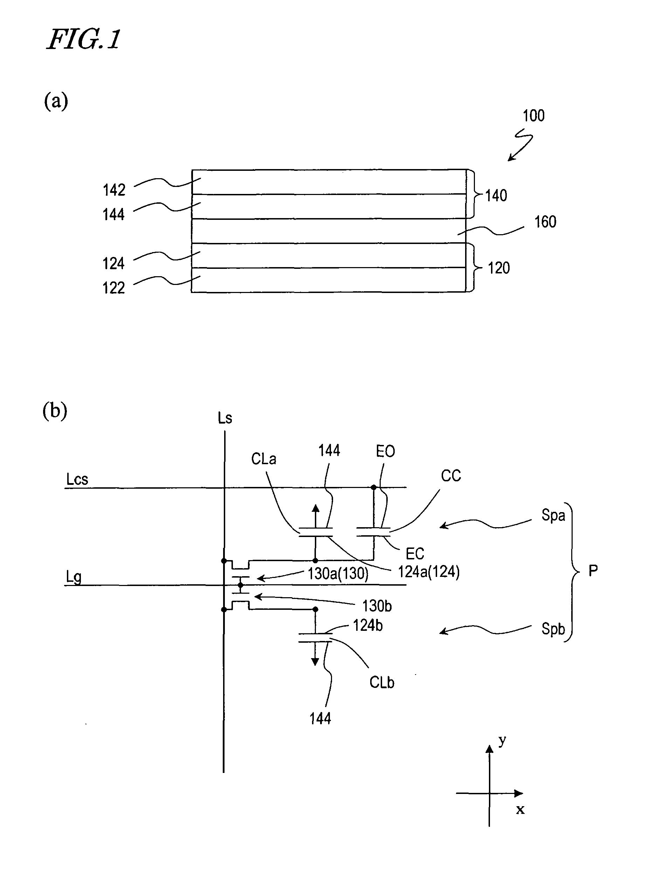

First of all, a first embodiment of a liquid crystal display device according to the present invention will be described. FIG. **1(a)** schematically illustrates a liquid crystal display device **100** as a first embodiment of the present invention. The liquid crystal display device **100** includes an active-matrix substrate **120,** a counter substrate **140,** and a liquid crystal layer **160** interposed between the active-matrix substrate **120** and the counter substrate **140.** The active-matrix substrate **120** includes an insulating substrate **122** and pixel electrodes **124.** The counter substrate **140** includes a transparent insulating substrate **142** and a counter electrode **144.** Although not shown in FIG. **1(a),** the active-matrix substrate **120** typically further includes gate lines, storage capacitor lines, an insulating layer, source lines, thin-film transistors and an alignment film. The counter substrate **140** typically further includes a color filter layer and an alignment film. Also, a polarizer is arranged outside of each of the active-matrix substrate **120** and the counter substrate **140.**

The alignment films may be vertical alignment films and the liquid crystal layer **160** may be a vertical alignment liquid crystal layer, for example. As used herein, the "vertical alignment liquid crystal layer" refers to a liquid crystal layer in which the axis of its liquid crystal molecules (which will be sometimes referred to herein as an "axial direction") defines an angle of approximately 85 degrees or more with respect to the surface of the vertical alignment films. The liquid crystal layer **160** includes a nematic liquid crystal material with negative dielectric anisotropy. Using such a liquid crystal material along with two polarizers that are arranged as crossed Nicols, this device conducts a display operation in a normally black mode. If the liquid crystal display device **100** is either a transmissive device or a transflective device, the device **100** further includes a backlight.

The liquid crystal display device **100** has pixels which are arranged in columns and rows to form a matrix pattern. Each of those pixels is defined by its associated pixel electrode **124** and has two or more subpixels that could have different luminances. Typically, a display operation is conducted in colors using red, green and blue pixels, which are realized by arranging red, green and blue color filters in a color filter layer. A color display pixel consisting of those red, green and blue pixels functions as a display unit of an arbitrary color. Optionally, each color display unit may include not only the red, green and blue pixels but also another pixel (such as a yellow pixel) as well.

FIG. **1(b)** illustrates an equivalent circuit diagram of the liquid crystal display device **100.** As described above, in the liquid crystal display device **100,** a number of pixels **P** are arranged in columns and rows to form a matrix pattern. Only one of those pixels **P** and its surrounding region are illustrated in FIG. **1(b).**

The pixel **P** includes subpixels **Spa** and **Spb.** At least at a particular middle grayscale, the subpixel **Spa** has a different luminance from the subpixel **Spb.** Typically, in an arbitrary frame or field, one subpixel has a luminance that is equal to or higher than that of the other subpixel. Nevertheless, in some grayscales, these subpixels **Spa** and **Spb** may have substantially the same luminance. Such a subpixel **Spa** or **Spb** that can have a relatively low luminance in an arbitrary frame or field will be sometimes referred to herein as a "dark subpixel" while the other subpixel that can have a relatively high luminance in that frame or field will be referred to herein as a "bright subpixel". By providing those subpixels **Spa** and **Spb** with mutually different luminances for a single pixel **P,** the viewing angle dependence of the $\gamma$ characteristic can be reduced.

The subpixel **Spa** may have a different area from the subpixel **Spb.** For example, the subpixel **Spa** may have either a smaller area or a larger area than the subpixel **Spb.** Specifically, the area of one of these subpixels **Spa** and **Spb** may be 1.5 to 4 times as large as that of the other subpixel. If the sum of the respective areas of these subpixels **Spa** and **Spb** is represented as 100%, it is recommended that the subpixel with the larger area have an area ratio of 60% to 70% and the subpixel with the smaller area have an area ratio of 30% to 40%. Also, it will be beneficial if one of these subpixels **Spa** and **Spb** that has the lower luminance has a larger area than the other subpixel with the higher luminance. Or the areas of these subpixels **Spa** and **Spb** may be equal to each other.

The active-matrix substrate **120** includes a pixel electrode **124,** thin-film transistors (TFTs) **130,** a source line **Ls,** a gate line **Lg,** a storage capacitor electrode **EC,** and a storage capacitor line **Lcs.** The pixel electrode **124** includes a subpixel electrode **124a** associated with the subpixel **Spa** and a subpixel electrode **124b** associated with the subpixel **Spb.** The gate line **Lg** and the storage capacitor electrode **EC** run in the row direction (i.e., in the x direction), while the source line **Ls** runs in the column direction (i.e., in the y direction).

Each of the TFTs **130** includes a gate, a source and a drain. The TFTs **130** are provided for the subpixels **Spa** and **Spb,** respectively. In the following description, the TFT **130** associated with the subpixel **Spa** will be referred to herein as a TFT **130a** and the TFT **130** associated with the subpixel **Spb** will be referred to herein as a TFT **130b.**

The pixel **P** includes a storage capacitor electrode **EC** which is electrically connected to the drain of the TFT **130a** and the subpixel electrode **124a.** A storage capacitor counter electrode **EO,** which forms a storage capacitor along with the storage capacitor electrode **EC,** is electrically connected to the storage capacitor line **Lcs.** In the following description, the storage capacitor line **Lcs** will be sometimes referred to herein as a CS line **Lcs.**

The source line **Ls** is electrically connected to the respective sources of the TFTs **130a** and **130b.** The gate line **Lg** is electrically connected to the respective gates of the TFTs **130a** and **130b.**

In the equivalent circuit shown in FIG. **1(b),** the counter electrode **144** is illustrated as being separately provided for each of the subpixel electrodes **124a** and **124b.** Typically, however, a single counter electrode **144** is provided for the respective pixel electrodes **124** of all pixels **P** that are arranged in the display area. Nevertheless, the counter electrode **144** could be divided into multiple sections that are provided for a number of blocks.

The subpixel **Spa** includes a liquid crystal capacitor **CLa** and a storage capacitor **CC.** The liquid crystal capacitor **CLa** is formed by the subpixel electrode **124a,** the counter electrode **144** and the liquid crystal layer **160** interposed between them. The storage capacitor **CC** is formed by the storage capacitor electrode **EC,** the storage capacitor counter electrode **EO** and an insulating layer interposed between them.

The subpixel **Spb** also includes a liquid crystal capacitor **CLb,** which is formed by the subpixel electrode **124b,** the counter electrode **144** and the liquid crystal layer **160** interposed between them. In this example, however, the subpixel **Spb** has no storage capacitors.

In this description, the subpixels **Spa** and **Spb** will be sometimes referred to herein as a "first subpixel **Spa"** and a "second subpixel **Spb**", respectively, and the subpixel electrodes **124a** and **124b** as a "first subpixel electrode **124a"** and a "second subpixel electrode **124b",** respectively. Also, the TFTs **130a** and **130b** will be sometimes referred to herein as a "first thin-film transistor **130a"** and a "second thin-film transistor **130b",** respectively.

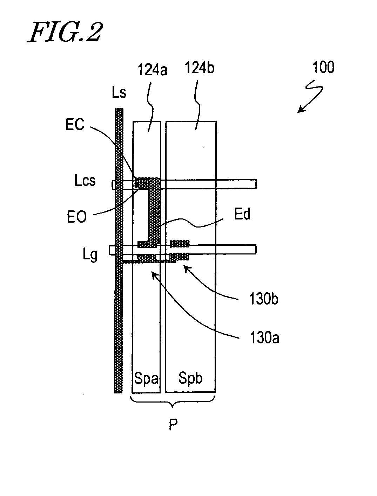

FIG. **2** schematically illustrates the liquid crystal display device **100.** In FIG. **2,** illustration of the counter substrate **140** is omitted to avoid complicating the drawing excessively. FIG. **2** corresponds to a top view of the active-matrix substrate **120.**

In the liquid crystal display device **100,** the subpixels **Spa** and **Spb** are adjacent to each other in the row direction (i.e., in the x direction). The length of these subpixels **Spa** and **Spb** are different when measured in the row direction but are substantially equal to each other when measured in the column direction. That is why the area of the subpixel **Spa** is different from that of the subpixel **Spb.** The length of the pixel **P** as measured in the column direction (i.e., in the y direction) is defined by the subpixels **Spa** and **Spb.** Also, the subpixels **Spa** and **Spb** are defined by the subpixel electrodes **124a** and **124b,** respectively.

The TFTs **130a** and **130b** each have their source, channel and drain provided in the semiconductor layer. A dopant has been introduced into the semiconductor layer, except its portions to be the channel regions of the TFTs **130a** and **130b,** thereby increasing its carrier concentration.

The respective gates of the TFTs **130a** and **130b** are electrically connected in common to the same gate line **Lg.** The TFTs **130a** and **130b** change their states in the same pattern in response to a gate signal voltage supplied to the gate line **Lg.** The respective sources of the TFTs **130a** and **130b** are electrically connected to the source line **Ls** through contact holes that have been cut through an insulating layer.

The drain of the TFT **130a** is electrically connected to the storage capacitor electrode **EC** via the drain electrode **Ed.** The subpixel electrode **124a** is electrically connected to the storage capacitor electrode **EC** through a contact hole that has been cut through the insulating layer. The storage capacitor electrode **EC** is arranged so as to overlap with the CS line **Lcs,** and a storage capacitor is formed between the storage capacitor electrode **EC** and the CS line **Lcs.** In this case, a part of the CS line **Lcs** that forms a storage capacitor with the storage capacitor electrode **EC** becomes a storage capacitor counter electrode **EO.** Although the storage capacitor counter electrode **EO** forms an integral part of the CS line **Lcs** in this example, the storage capacitor counter electrode **EO** may be provided separately from the CS line **Lcs.** Also, the subpixel electrode **124b** is electrically connected to the drain of the TFT **130b** through a contact hole that has been cut through the insulating layer. The subpixel electrodes **124a** and **124b** are arranged so as to cross the gate line **Lg** and the CS line **Lcs.**

In this liquid crystal display device **100,** a write operation on the pixel **P** may be performed in the following manner. First of all, a gate signal voltage supplied to the gate line **Lg** changes from an OFF-state voltage into an ON-state voltage. If the TFTs **130a** and **130b** turn ON in response to the ON-state voltage supplied to the gate line **Lg,** a source signal supplied to the source line **Ls** is applied to the subpixel electrodes **124a** and **124b** via the TFTs **130a** and **130b.**

Thereafter, when the gate signal voltage supplied to the gate line **Lg** changes into the OFF-state voltage, the TFTs **130a** and **130b** turn OFF. Strictly speaking, right after the TFTs **130a** and **130b** have turned OFF, the potentials of the subpixel electrodes **124a** and **124b** decrease to substantially the same degree due to a feedthrough phenomenon that has been caused by the parasitic capacitance of the TFTs **130a** and **130b.** However, the potentials of the subpixel electrodes **124a** and **124b** are still substantially equal to each other.

After that, the storage capacitor signal voltage supplied to the CS line **Lcs** changes. As a result, the potential of the subpixel electrode **124a** changes as the storage capacitor signal voltage varies. Specifically, after some gate line **Lg** has been selected and until the same gate line **Lg** is selected next time, the storage capacitor signal voltage changes so that the high-voltage period becomes substantially as long as the low-voltage period. For example, the storage capacitor signal may have an oscillating waveform in which the high and low voltages alternate at regular intervals.

If the first change in the storage capacitor signal voltage supplied to the CS line **Lcs** after the TFTs **130a** and **130b** have turned OFF is increase, the average potential of the subpixel electrode **124a** rises. On the other hand, if the first change in the storage capacitor signal voltage supplied to the CS line **Lcs** is decrease, the average potential of the subpixel electrode **124a** falls. The storage capacitor signal voltage may change either before or after a point in time when the gate signal voltage supplied to the next gate line **Lg** selected (which is typically adjacent to the selected gate line) changes from the OFF-state voltage into the ON-state voltage. By supplying a storage capacitor signal to the CS line **Lcs** in this manner, the effective voltage applied to the subpixel **Spa** can be different from the one applied to the subpixel **Spb.** Strictly speaking, as there is electrostatic capacitance between the source line **Ls** and the subpixel electrode **124a, 124b** or the drain electrode **Ed,** the average potential of the subpixel electrode **124a, 124b** is affected by a variation in the source signal voltage supplied to the source line **Ls** after its associated gate line **Lg** has been inactivated. However, that influence is not so significant.

In this manner, in the liquid crystal display device **100,** the subpixels **Spa** and **Spb** are adjacent to each other in the row direction and are both arranged so as to overlap with the CS line **Lcs.** However, the subpixel **Spa** does have a storage capacitor **CC** associated with the CS line **Lcs,** but the subpixel **Spb** has no storage capacitors associated with the CS line **Lcs.** That is why the effective voltage applied to the liquid crystal layer of the subpixel **Spa** can be changed with respect to the one applied to the liquid crystal layer of the subpixel **Spb.** As a result, the viewing angle characteristic can be improved by taking advantage of this.

Taking this pixel **P** as an example, if the potential of the subpixel electrode **124a, 124b** is higher than that of the counter electrode **144** in one vertical scanning period, the potential of the subpixel electrode **124a, 124b** becomes lower than that of the counter electrode **144** in the next vertical scanning period (i.e., in the next field or frame period). In this manner, the polarity of the pixel **P** inverts every vertical scanning period. In the following description, if the potential of the subpixel electrode is higher than that of the counter electrode, then that state will be identified by "+ (positive)". On the other hand, if the potential of the subpixel electrode is lower than that of the counter electrode, that state will be identified by "- (negative)". The polarity indicates the direction of an electric field applied to the liquid crystal layer.

By inverting the polarity in this manner, the DC components of the liquid crystal layer can be cut down mostly but cannot be removed completely by doing just that. As described above, after the TFTs have turned OFF, the potentials of the subpixel electrodes decrease due to the feedthrough phenomenon. Also, the decrease in voltage due to the feedthrough phenomenon occurs in a particular direction irrespective of the polarity. That is why just by inverting the polarity, the DC components caused as a result of the feedthrough phenomenon cannot be removed sufficiently. For that reason, if a display operation is carried out at the same grayscale level, the voltage applied to the counter electrode is suitably adjusted so as to substantially agree with the center value of the potential of the subpixel electrode that inverts every vertical scanning period (which will also be referred to herein as the "DC level of the drain voltage" or the "effective level of the drain voltage").

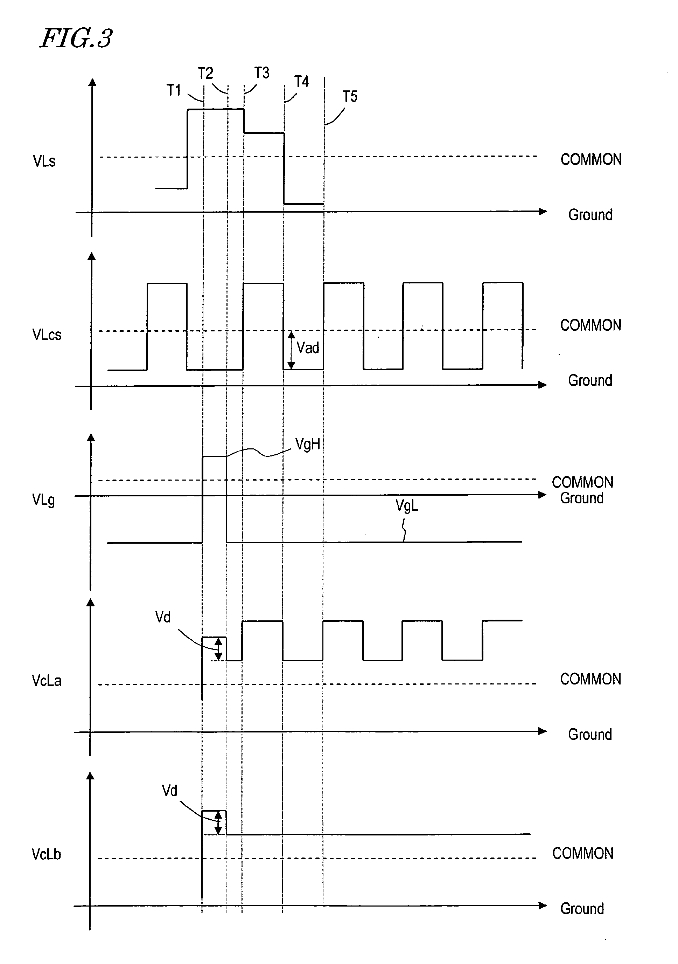

The liquid crystal display device **100** may be driven in the following manner, for example. FIG. **3** shows the waveforms of voltages applied to the liquid crystal display device **100.** In FIG. **3,** VLs denotes the voltage waveform of a source signal supplied to the source bus line **Ls** with respect to the potential **COMMON** of the counter electrode **144** indicated by the dotted line. VLcs denotes the voltage waveform of a storage capacitor signal supplied to the CS line **Lcs.** VLg denotes the voltage waveform of a gate signal supplied to the gate line **Lg.** VCLa denotes the potential of the subpixel electrode **124a** with respect to the potential **COMMON** of the counter electrode **144.** And VCLb denotes the potential of the subpixel electrode **124b** with respect to the potential **COMMON** of the counter electrode **144.**

First, at a time **T1,** the gate signal voltage **VLg** supplied to the gate line **Lg** changes from an OFF-state voltage into an ON-state voltage to turn the TFTs **130a** and **130b** ON simultaneously. As a result, the voltage **VLs** on the source line **Ls** is applied to the subpixel electrodes **124a** and **124b** of the subpixels **Spa** and **Spb** to charge the liquid crystal capacitors **CLa** and **CLb.** In the same way, the storage capacitor **CC** of the subpixels **Spa** is also charged with the voltage on the source line **Ls.** In the following description, the potentials of the subpixel electrodes **124a** and **124b** will be identified herein by Vs.

Next, at a time **T2,** the gate signal voltage **VLg** on the gate line **Lg** changes from the ON-state voltage into the OFF-state voltage to turn the TFTs **130a** and **130b** OFF simultaneously and electrically isolate all of the liquid crystal capacitors **CLa** and **CLb** and the storage capacitor **CC** from the source line **Ls.** It should be noted that immediately after the gate signal voltage **VLg** has changed into the OFF-state voltage, due to the feedthrough phenomenon caused by a parasitic capacitance of the TFTs **130a** and **130b** and other factors, the potentials **VCLa** and **VCLb** of the respective subpixel electrodes **124a** and **124b** decrease by voltages **Vda** and **Vdb** to:

$$VCLa = Vs - Vda$$

$$VCLb = Vs - Vdb$$

respectively. As the subpixels have mutually different capacitances, the potentials **Vda** and **Vdb** are not exactly, but roughly, the same. Thus, these potentials **Vda** and **Vdb** will both be identified herein by Vd in the following description. In this case, the voltage **VLcs** on the CS bus line **Lcs** is:

$$Vcs = Vcom - Vad$$

Next, at a time **T3**, the voltage **VLcs** on the CS line **Lcs** changes from Vcom-Vad to Vcom+Vad. As the voltage on the CS line **Lcs** changes in this manner, the potential **VCLa** of the subpixel electrode changes into:

$$VCLa = Vs - Vd + 2 \times Kca \times Vad$$

where Kca=CCS/(CLC(V)+CCS). In this case, CCS corresponds to the capacitance value of the storage capacitor CC and CLC(V) corresponds to the capacitance value of the liquid crystal capacitor **CLa** to which the potential difference **V** is applied.
Next, at a time **T4,** the voltage **VLcs** on the CS line **Lcs** changes from Vcom+Vad to Vcom-Vad by twice as much as Vad. As a result, the potential **VCLa** of the subpixel electrode **124a** changes from

$$VCLa = Vs - Vd + 2 \times Kca \times Vad$$

into

$$VCLa = Vs - Vd$$

Next, at a time **T5,** the voltage **VLcs** on the CS line **Lcs** changes from Vcom-Vad to Vcom+Vad by twice as much as Vad. As a result, the potential **VCLa** of the subpixel electrode **124a** changes from

$$VCLa = Vs - Vd$$

into

$$VCLa = Vs - Vd + 2 \times Kca \times Vad$$

In this manner, every time a period of time that is an integral number of times as long as one horizontal scanning period (horizontal write period) 1H has passed, the voltage **VLcs** on the CS line **Lcs** and the potential **VCLa** of the subpixel electrode **124a** alternate their levels at the times **T4** and **T5.** Meanwhile, the subpixel **Spb** has no storage capacitors and the potential **VCLb** of the subpixel electrode **124b** remains Vs-Vd. Consequently, the average potentials **VCLa** and **VCLb** of the subpixel electrodes **124a** and **124b** become:

$$VCLa = Vs - Vd + Kca \times Vad$$

$$VCLb = Vs - Vd$$

respectively.
Therefore, the effective voltages **V1** and **V2** applied to the respective liquid crystal layers of the subpixels **Spa** and **Spb** become:

$$V1 = VCLa - Vcom$$

$$V2 = VCLb - Vcom$$

That is to say,

$$V1 = Vs - Vd + Kca \times Vad - Vcom$$

$$V2 = Vs - Vd - Vcom$$

respectively.
As a result, the difference Δ**V** (=V1-V2) between the effective voltages applied to the respective liquid crystal layers of the subpixels **Spa** and **Spb** becomes ΔV=Kca×Vad (where Kca=CCS/(CLC(V)+CCS)). Thus, mutually different voltages can be applied and the subpixels **Spa** and **Spb** can have mutually different luminances.

In the liquid crystal display device **900** disclosed in Patent Document No. 2, two different subpixels **Spa** and **Spb** have their own storage capacitors that are associated with mutually different CS lines **Lcsa** and **Lcsb.** And the average potential of one of the two subpixel electrodes **924a** and **924b** increases from a potential corresponding to the source signal voltage supplied to the source line **Ls,** while the average potential of the other subpixel electrode decreases from the potential corresponding to the source signal voltage supplied to the source line **Ls.** In the liquid crystal display device **100,** on the other hand, the average potential of the subpixel electrode **124a** does change from the potential corresponding to the source signal voltage supplied to the source line **Ls** but that of the subpixel electrode **124b** does not change from the potential corresponding to the source signal voltage supplied to the source line **Ls.** Consequently, in this liquid crystal display device **100,** by increasing the variation in the storage capacitor signal voltage supplied to the CS line **Lcs** than in the liquid crystal display device **900,** the voltage difference ΔV between the subpixels **Spa** and **Spb** can be as large as in the liquid crystal display device **900.**

In this example, the average potential of the subpixel electrode **124a** is set to be higher than a potential corresponding to the source signal voltage by using the variation in the storage capacitor signal voltage supplied to the CS line **Lcs.** However, this is just an example of the present invention. Alternatively, the average potential of the subpixel electrode **124a** may also be set to be lower than the potential corresponding to the source signal voltage by using the variation in the storage capacitor signal voltage supplied to the CS line **Lcs.**

If the average potential of the subpixel electrode **124a** is set to be higher than the potential corresponding to the source signal voltage by using the variation in the storage capacitor signal voltage supplied to the CS line **Lcs,** a source signal voltage, of which the absolute value of the potential difference from that of the counter electrode is larger than in the liquid crystal display device **900,** may be supplied to the source line **Ls.** On the other hand, if the average potential of the subpixel electrode **124a** is set to be lower than the potential corresponding to the source signal voltage by using the variation in the storage capacitor signal voltage supplied to the CS line **Lcs,** a source signal voltage, of which the absolute value of the potential difference from that of the counter electrode is smaller than in the liquid crystal display device **900,** may be supplied to the source line **Ls.**

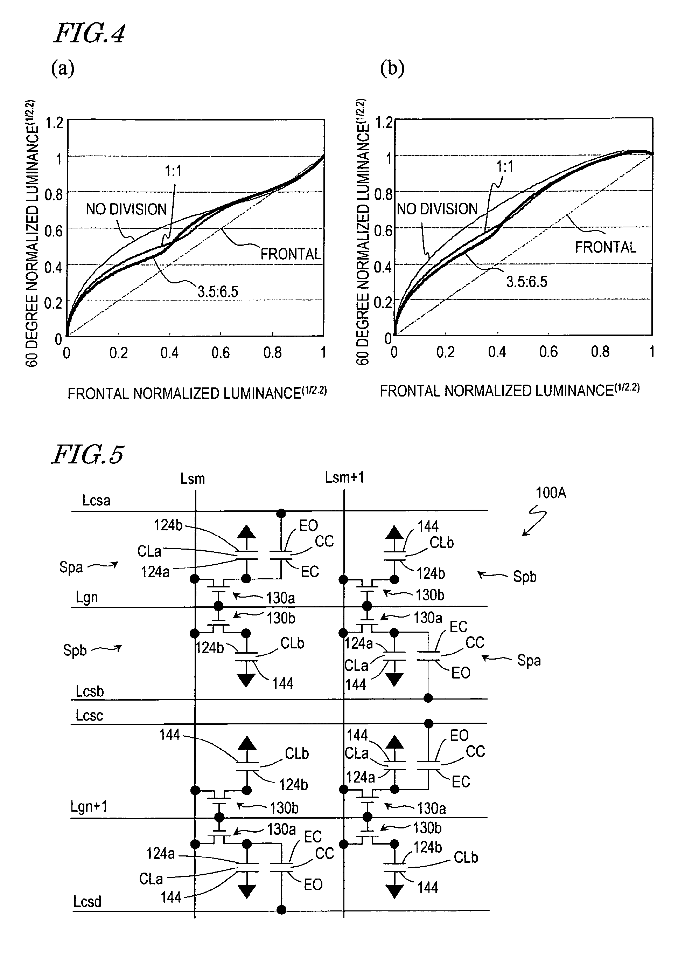

Hereinafter, variations in luminance in the frontal and oblique directions will be described with reference to FIG. **4.** Specifically, FIGS. **4(a)** and **4(b)** are graphs showing how the oblique normalized luminance varies with respect to the frontal normalized luminance. In FIG. **4(a),** the oblique direction defines a tilt angle of 60 degrees with respect to a normal to the display screen in the polarization axis direction. On the other hand, in FIG. **4(b),** the oblique direction is defined by tilting a normal to the display screen 60 degrees toward the oblique 45 degree direction of the polarization axis direction. These luminance variations will be described with reference to FIG. **4(a)** first.

In FIG. **4(a),** the abscissa represents the frontal normalized luminance$^{(1/2.2)}$, which is the frontal luminance that has been normalized so as to be equal to 1.0 when the maximum grayscale level is displayed. It should be noted that by raising the frontal luminance to the $(1/2.2)^{th}$ power, the frontal normalized luminance$^{(1/2.2)}$ corresponds to the normalized one of the frontal grayscale level. For example, the abscissa 0.5 corresponds to a frontal normalized luminance of 0.22 ($\fallingdotseq 0.5^{2.2}$), which corresponds to grayscale level #127 out of 255 grayscales. Also, by raising the frontal luminance to the $(1/2.2)^{th}$ power, the variation in luminance can be represented sufficiently even in a range where the luminance is relatively low.

Also, in FIG. **4(a),** the ordinate represents the 60 degree normalized luminance$^{(1/2.2)}$, which is obtained by normalizing the luminance as measured in the direction that is defined by tilting a normal to the display screen 60 degrees in the polarization axis direction so that the luminance when the maximum grayscale level is displayed becomes equal to 1.0. By raising the luminance to the $(1/2.2)^{th}$ power, the 60 degree normalized luminance$^{(1/2.2)}$ corresponds to the normalized one of the oblique grayscale level.

Furthermore, in FIG. **4(a),** "no division" indicates a variation in luminance in a liquid crystal display device that has no subpixels, "1: 1" indicates a variation in luminance in a liquid crystal display device in which bright and dark subpixels have an area ratio of one to one, and "3.5: 6.5" indicates a variation in luminance in a liquid crystal display device in which bright and dark subpixels have an area ratio of 3.5 to 6.5. Also, in FIG. **4(a),** "frontal" indicates a variation in luminance in the frontal direction, which is linearly proportional to the abscissa, for your reference.

In a liquid crystal display device with no subpixels, a variation in luminance in the oblique direction is quite different from a variation in luminance in the frontal direction. Particularly, since the oblique normalized luminance is relatively high at low grayscale levels, video will look relatively whitish when viewed obliquely, a sufficient contrast cannot be obtained, and depth is not sensed easily. Such a phenomenon is also called a "whitening phenomenon".

On the other hand, by providing subpixels, the difference between the frontal and oblique normalized luminances can be reduced so much particularly at low grayscale levels that the variation in luminance in the oblique direction can be closer to the variation in luminance in the frontal direction. Furthermore, by setting the area of a dark subpixel to be larger than that of a bright subpixel, the variation in luminance in the oblique direction can be even closer to the variation in luminance in the frontal direction at low grayscale levels.

FIG. **4(b)** shows a variation in luminance as measured in the direction that is defined by tilting a normal to the display screen 60 degrees toward the oblique 45 degree direction of the polarization axis direction. In FIG. **4(b),** the abscissa represents the same thing as in FIG. **4(a),** while the ordinate represents the 60 degree normalized luminance$^{(1/2.2)}$, which is the luminance that has been measured in the direction defined by tilting a normal to the display screen 60 degrees toward the oblique 45 degree direction of the polarization axis direction and that has been normalized so as to be equal to 1.0 when the maximum grayscale level is displayed. It should be noted that by raising the luminance to the $(1/2.2)^{th}$ power, the 60 degree normalized luminance$^{(1/2.2)}$ corresponds to the normalized one of the oblique grayscale level.

If no subpixels are provided, the variation in luminance in such a tilt direction that crosses the polarization axis is quite different from the variation in luminance in the frontal direction. And when measured obliquely toward the oblique 45 degree direction of the polarization axis direction, the variation in luminance in the oblique direction is more significantly different from the variation in luminance in the frontal direction. On the other hand, by providing subpixels, the variation in luminance in the oblique direction can be closer to the variation in luminance in the frontal direction particularly at low grayscale levels. Furthermore, if the dark subpixel has a larger area than the bright subpixel, the variation in luminance in the oblique direction can be even closer to the variation in luminance in the frontal direction at low grayscale levels.

Consequently, by providing subpixels **Spa** and **Spb** that can have mutually different luminances, the viewing angle characteristic can be improved. In particular, it is beneficial that the dark one of those subpixels **Spa** and **Spb** has a larger area than the bright one.

The liquid crystal display device **100** may be fabricated in the following manner, for example.

The active-matrix substrate **120** may be fabricated as follows. First of all, gate lines **Lg,** CS lines **Lcs** and storage capacitor counter electrodes **EO** are formed on an insulating substrate **122,** which may be glass substrate, for example. In this example, the gate lines **Lg,** CS lines **Lcs** and storage capacitor counter electrodes **EO** are formed in the same process step and are made of the same material.

Next, source lines **Ls,** drain electrodes **Ed** and storage capacitor electrodes **EC** are formed on an insulating layer that covers the gate lines **Lg** and the CS lines **Lcs.** Part of that insulating layer functions as the gate insulating film of the TFTs **130.** The source lines **Ls,** the drain electrodes **Ed** and the storage capacitor electrodes **EC** are formed in the same process step and are made of the same material.

Subsequently, a semiconductor layer is formed on the insulating layer. The semiconductor layer is an amorphous semiconductor layer (which is typically an amorphous silicon layer), for example. The semiconductor layer may also be a polycrystalline semiconductor layer (which is typically a polysilicon layer) or an oxide semiconductor layer. If necessary, a dopant may be introduced into a predetermined region of the semiconductor layer as described above.

Thereafter, an interlayer insulating layer is deposited over the semiconductor layer and pixel electrodes **124** are formed on the interlayer insulating layer. The pixel electrodes **124** may be made of a transparent conductor film (which is typically indium tin oxide), for example. After that, an alignment film is formed to cover the pixel electrodes **124.**

It should be noted that the gate lines **Lg,** CS lines **Lcs,** storage capacitor counter electrodes **EO,** source lines **Ls,** drain electrodes **Ed,** storage capacitor electrodes **EC,** and pixel electrodes **124** are formed by depositing a conductive material and exposing to a radiation through a photomask, and etching, part of the material through a photoresist pattern. The semiconductor layer is formed by depositing a semiconductor material and then exposing to a radiation through a photomask, and etching, part of the material through a photoresist pattern. In this manner, the active-matrix substrate **120** is completed.

On the other hand, the counter substrate **140** is fabricated in the following manner. First of all, a counter electrode **144** is formed on a transparent insulating substrate **142,** which may be a glass substrate, for example. Also, the surface of the counter substrate **140** is covered with an alignment film. If necessary, a color filter layer is provided for the counter substrate **140.** The color filter layer includes red, green and blue color filters and a black matrix that surrounds those color filters. In this manner, the counter substrate **140** is completed.

Thereafter, the active-matrix substrate **120** and the counter substrate **140** are bonded together. For example, a sealing agent is applied in a rectangular pattern to one of the active-matrix substrate **120** and the counter substrate **140,** and a liquid crystal material is dripped onto the area that is surrounded with the sealing agent. After that, the active-matrix substrate **120** and the counter substrate **140** are bonded together to cure the sealing agent. By dripping the liquid crystal material, the liquid crystal material can be applied uniformly and quickly, and the mother glass substrate can be processed at a time. On top of that, the liquid crystal material can be used more efficiently with a lesser percentage of the liquid crystal material disposed of.

Alternatively, the sealing agent may also be applied in a partially notched rectangular pattern onto one of the active-matrix substrate **120** and the counter substrate **140,** and then the active-matrix substrate **120** and the counter substrate **140** are bonded together to obtain a vacant cell. After that, a liquid crystal material may be injected into the gap between the active-matrix substrate **120** and the counter substrate **140.** And then the sealing agent is cured. The sealing agent may have a thermosetting property and may be cured by being subjected to a heating treatment. Thereafter, a phase plate is attached, if necessary, to each of the active-matrix substrate **120** and the counter substrate **140** and then polarizers are attached to them. In this manner, the liquid crystal display device **100** can be fabricated.

(EMBODIMENT 2)

Hereinafter, a second embodiment of a liquid crystal display device according to the present invention will be described. FIG. **5** illustrates an equivalent circuit diagram of the liquid crystal display device **100A** of this embodiment. In FIG. **5,** illustrated are four pixels that are located at row n, column m position, row n+1, column m position, row n, column m+1 position and row n+1, column m+1 position, respectively.

In this liquid crystal display device **100A,** two CS lines are provided for each row of pixels. Specifically, CS lines **Lcsa** and **Lcsb** are provided for the n$^{th}$ row of pixels **P,** and CS lines **Lcsc** and **Lcsd** are provided for the (n+1)$^{th}$ row of pixels **P.**

First of all, the configuration of the n$^{th}$ row of pixels **P** will be described. Specifically, in the pixel **P** at the row n, column m position, the subpixel **Spa** includes a liquid crystal capacitor **CLa** and a storage capacitor **CC.** The liquid crystal capacitor **CLa** is formed of a subpixel electrode **124a,** a counter electrode **144,** and a liquid crystal layer **160** interposed between them. The storage capacitor **CC** is formed of a storage capacitor electrode **EC,** a storage capacitor counter electrode **EO** and an insulating layer interposed between them. On the other hand, the subpixel **Spb** does have a liquid crystal capacitor **CLb** but has no storage capacitors. The liquid crystal capacitor **CLb** is formed of a subpixel electrode **124b,** the counter electrode **144** and the liquid crystal layer **160** interposed between them.

In the pixel **P** at the row n, column m+1 position, the subpixel **Spa** includes a liquid crystal capacitor **CLa** and a storage capacitor **CC.** The liquid crystal capacitor **CLa** is formed of the subpixel electrode **124a,** the counter electrode **144,** and the liquid crystal layer **160** interposed between them. The storage capacitor **CC** is formed of a storage capacitor electrode **EC,** a storage capacitor counter electrode **EO** and an insulating layer interposed between them. On the other hand, the subpixel **Spb** does have a liquid crystal capacitor **CLb** but has no storage capacitors. The liquid crystal capacitor **CLb** is formed of the subpixel electrode **124b,** the counter electrode **144** and the liquid crystal layer **160** interposed between them.

As can be seen, in both of the pixel **P** at the row n, column m position and the pixel **P** at the row n, column m+1 position, the subpixel **Spa** includes a liquid crystal capacitor **CLa** and a storage capacitor **CC.** Specifically, in the subpixel **Spa** at the row n, column m position, the storage capacitor **CC** is provided for the CS line **Lcsa.** On the other hand, in the subpixel **Spa** at the row n, column m+1 position, the storage capacitor **CC** is provided for the CS line **Lcsb.** That is why as the voltage of a storage capacitor signal supplied to the CS lines **Lcsa** and **Lcsb** varies, the potential of the subpixel electrode **124a,** and eventually the effective voltage applied to the liquid crystal layer of the subpixel **Spa,** change. On the other hand, the subpixel **Spb** has no storage capacitors. That is why even if the voltage of the storage capacitor signal supplied to the CS lines **Lcsa** and **Lcsb** varies, the potential of the pixel electrode **124b** does not change. As a result, the effective voltage applied to the liquid crystal layer of the subpixel **Spb** does not change, either.

Although not described in detail, in the subpixel **Spa** of the pixels **P** located at the row n, column m+2 position, the row n, column m+4 position, and so on, a storage capacitor **CC** is provided for the CS line **Lcsa.** Meanwhile, in the subpixel **Spa** of the pixels **P** located at the row n, column m+3 position, the row n, column m+5 position, and so on, a storage capacitor **CC** is provided for the CS line **Lcsb.** In this manner, the respective subpixels **Spa** of each pair of pixels that are adjacent to each other in the row direction have storage capacitors **CC** that are provided for two different CS lines **Lcsa** and **Lcsb.**

Although not described in detail, in the subpixel **Spa** of the pixels **P** located at the row n+1, column m position, the row n+1, column m+2 position, the row n+1, column m+4 position, and so on, a storage capacitor **CC** is provided for the CS line **Lcsd.** Meanwhile, in the subpixel **Spa** of the pixels **P** located at the row n, column m+1 position, the row n, column m+3 position, the row n, column m+5 position, and so on, a storage capacitor **CC** is provided for the CS line **Lcsc.** In this manner, the respective subpixels **Spa** of each pair of pixels that are adjacent to each other in the row direction have storage capacitors **CC** that are provided for two different CS lines.

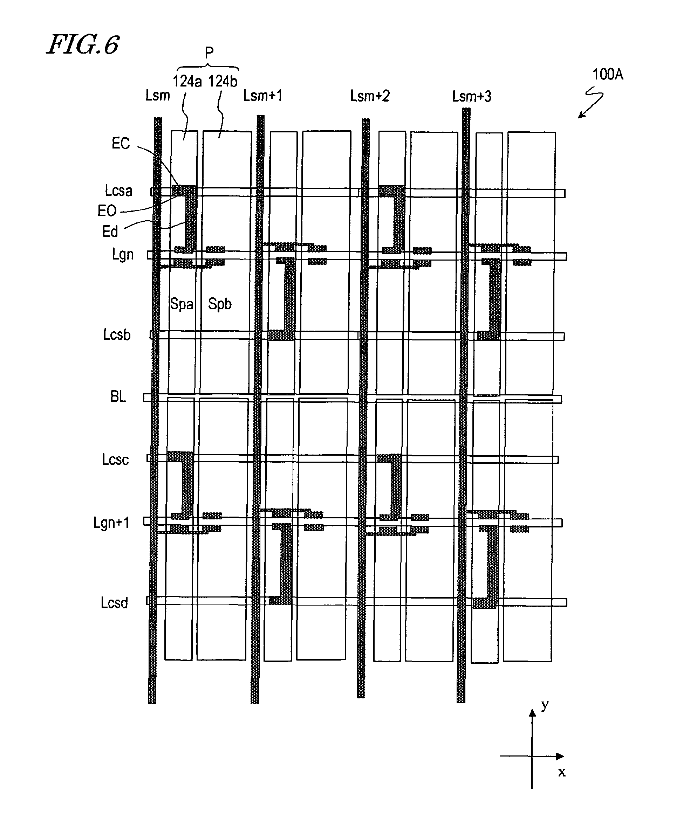

FIG. **6** schematically illustrates the liquid crystal display device **100A.** In the liquid crystal display device **100A** of this embodiment, the subpixels **Spa** and **Spb** of each pixel **P** are arranged in the row direction. In each column of pixels **P,** the respective subpixels **Spa** are arranged in line, so are the respective subpixels **Spb.**

The respective subpixel electrodes **124a** and **124b** of the pixel at the row n, column m position and the pixel at the row n, column m+1 position run over and across the gate line **Lg** and the CS lines **Lcsa** and **Lcsb.** Also, a linear opaque member **BL** is arranged between two adjacent rows of pixels. The opaque member **BL** is formed in the same process step, and made of the same material, as the gate lines **Lg,** CS lines **Lcs** and storage capacitor counter electrodes **EO.** Optionally, the opaque member **BL** may form part of the black matrix (BM) of the counter substrate.

Each of the subpixels **Spa** and **Spb** typically has four liquid crystal domains in which liquid crystal molecules have mutually different average alignment directions. The four liquid crystal domains of each of the subpixels **Spa** and **Spb** may be arranged in the column direction, for example. The two CS lines **Lcs** and one gate line **Lg** that are associated with one row of pixels are arranged so as to overlap with the three boundaries between the four liquid crystal domains of the subpixel **Spa, Spb** that are arranged in the column direction. Thus, the subpixel electrodes **124a** and **124b** are each evenly divided into four sections by the CS lines **Lcs** and the gate line **Lg.** Optionally, those liquid crystal domains may be produced using an alignment film that induces alignment of at least liquid crystal molecules that are located around the center of each liquid crystal domain in mutually different reference alignment directions when no voltage is applied. Alternatively, the subpixel electrodes **124a** and **124b** may have fine line slits that run in different directions. Still alternatively, the subpixel electrodes **124a** and **124b** may have ribs or slits that run in different directions.

In the liquid crystal display device **100A,** the subpixel electrode **124a** has a smaller area than the subpixel electrode **124b.** For example, if the sum of the respective areas of the subpixel electrodes **124a** and **124b** is represented as 100%, the area of the subpixel electrode **124a** may account for 30-40% and that of the subpixel electrode **124b** may account for 60-70%. The luminances of the subpixels **Spa** and **Spb** may have any relation. However, if the subpixel **Spa** with the smaller area is used as a bright subpixel and the subpixel **Spb** with the larger area is used as a dark subpixel as already described with reference to FIG. **4,** the viewing angle characteristic can be improved particularly at low grayscale levels.

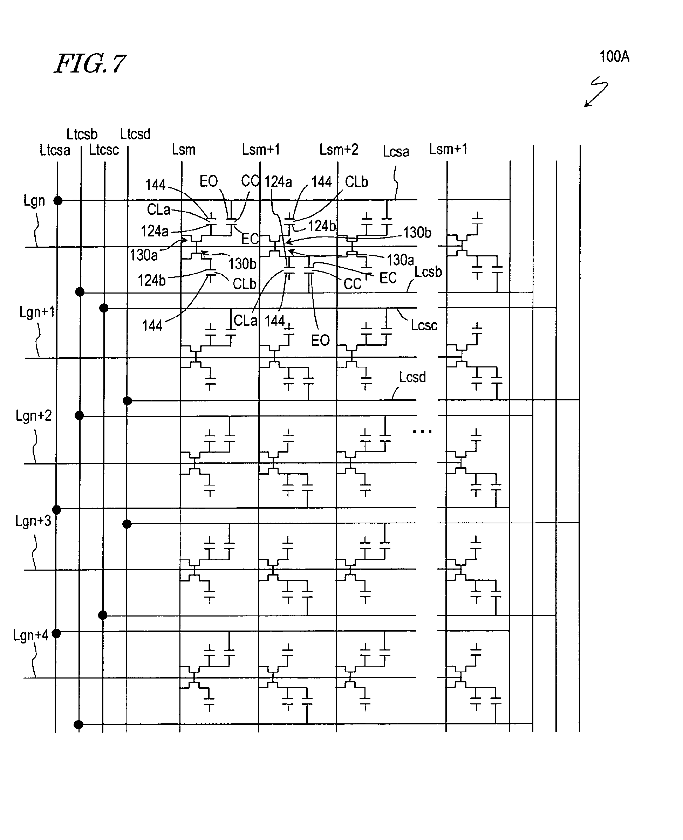

FIG. **7** illustrates an equivalent circuit diagram of the liquid crystal display device **100A.** The equivalent circuit shown in FIG. **7** is that of multiple pixels **P.** In FIG. **7,** the source lines provided for the $m^{th}$ through $(m+2)^{th}$ columns of pixels are identified by Lsm to Lsm+2, respectively, while the gate lines provided for the $n^{th}$ through $(n+4)^{th}$ rows of pixels are identified by Lgn to Lgn+4, respectively.

The CS lines **Lcsa** to **Lcsd** are supplied with storage capacitor signals through storage capacitor trunk lines **Ltcsa** to **Ltcsd,** respectively. Specifically, the CS lines **Lcsa** and **Lcsb** provided for the $n^{th}$ row of pixels are supplied with storage capacitor signals through the storage capacitor trunk lines **Ltcsa** and **Ltcsb,** respectively. The CS lines **Lcsc** and **Lcsd** provided for the $(n+1)^{th}$ row of pixels are supplied with storage capacitor signals through the storage capacitor trunk lines **Ltcsc** and **Ltcsd,** respectively.

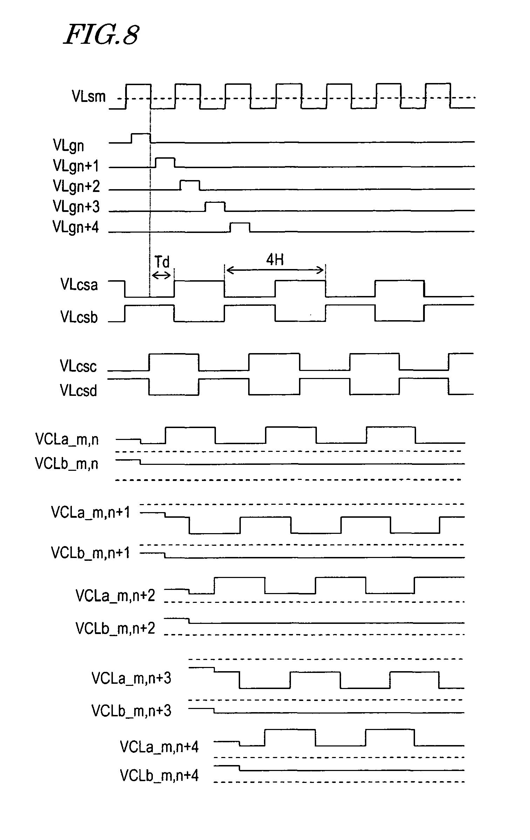

The liquid crystal display device **100A** shown in FIG. **7** may be driven in the following manner, for example. FIG. **8** shows the waveforms of voltages applied to the liquid crystal display device **100A.** In FIG. **8,** VLsm indicates the voltage waveform of a source signal supplied to the source line **Lsm** with respect to the voltage applied to the counter electrode **144** as indicated by the dotted line. VLgn to VLgn+4 indicate the voltage waveforms of a gate signal supplied to the gate lines **Lgn** through **Lgn+4.** VLcsa to VLcsd indicate the voltage waveforms of a storage capacitor signal supplied to the CS lines **Lcsa** through **Lcsd.** VCLa_m, n through VCLa_m, n+4 indicate the respective potentials of the subpixel electrodes **124a** of the pixels at the row n, column m position, the row n+1, column m position, the row n+2, column m position, the row n+3, column m position, and the row n+4, column m position with respect to the potential of the counter electrode **144.** VCLb_m, n through VCLb_m, n+4 indicate the respective potentials of the subpixel electrodes **124b** of the pixels at the row n, column m position, the row n+1, column m position, the row n+2, column m position, the row n+3, column m position, and the row n+4, column m position with respect to the potential of the counter electrode **144.** It should be noted that to avoid an overly complicated description, every pixel represented by the input signal is supposed to have the same grayscale level.

In this example, each of the storage capacitor signal voltages **VLcsa** through **VLcsd** supplied to the storage capacitor trunk lines **Ltcsa** through **Ltcsd,** respectively, is an oscillation voltage including a rectangular wave with a duty ratio of one to one, and one period of oscillation thereof is four times as long as one horizontal scanning period (i.e., 4H). Look at the storage capacitor signal voltages **VLcsa** and **VLcsb,** and it can be seen that the phase of the storage capacitor signal voltage **VLcsb** is 2H behind that of the storage capacitor signal voltage **VLcsa.** Also, look at the storage capacitor signal voltages **VLcsc** and **VLcsd,** and it can be seen that the phase of the storage capacitor signal voltage **VLcsd** is 2H behind that of the storage capacitor signal voltage **VLcsc.** Furthermore, look at the storage capacitor signal voltages **VLcsa** and **VLcsc,** and it can be seen that the phase of the storage capacitor signal voltage **VLcsa** is 1H behind that of the storage capacitor signal voltage **VLcsc.**

Now take a look how the storage capacitor signal voltages **VLcsa** through **VLcsd** supplied to the CS lines **Lcsa** through **Lcsd** and the gate signal voltage **VLg** supplied to the gate line **Lg** vary. And it can be seen that the time when the gate signal voltage **VLg** supplied to the gate line **Lg** that is associated with each of the CS lines **Lcsa** through **Lcsd** changes from the ON-state voltage into the OFF-state voltage agrees with the middle of a period in which the storage capacitor signal voltage **VLcsa** through **VLcsd** has a constant level. And the time lag **Td** between the time when the gate signal voltage **Vlg** changes into the OFF-state voltage and the time when the storage capacitor signal voltage **VLcsa** through **VLcsd** changes is 1H. However, Td does not have to have this value but may also have any value as long as the Td value is larger than OH but shorter than the interval (e.g., 2H in this case) at which the storage capacitor signal voltages **VLcsa** and **VLcsb** invert.

Hereinafter, it will be described with reference to FIGS. **7** and **8** how to perform a write operation on pixels **P** in this liquid crystal display device **100A.** First of all, it will be described how to write a voltage on the $n^{th}$ row of pixels **P.** In this example, attention is paid to the pixel at the row n, column m position and the pixel at the row n, column m+1 position. When the gate signal voltage supplied to the gate line **Lgn** changes from the OFF-state voltage into the ON-state voltage, the TFTs **130a** and **130b** at the row n, column m and row n, column m+1 positions turn ON. Once the $n^{th}$ row of pixels are selected in this manner, the source signal voltage supplied to the source line **Lsm** is applied to the subpixel electrodes **124a** and **124b** at the row n, column m position, and the source signal voltage supplied to the source line **Lsm+1** is applied to the subpixel electrodes **124a** and **124b** at the row n, column m+1 position.

In this example, the potential of the subpixel electrodes **124a** and **124b** at the row n, column m position is higher than that of the counter electrode **144**. Also, although not shown in FIG. **8,** the potential of the subpixel electrodes **124a** and **124b** at the row n, column m+1 position is lower than that of the counter electrode **144**. Thus, the relation between the potential of the subpixel electrodes **124a** and **124b** at the row n, column m position and that of the counter electrode **144** is different from the relation between the potential of the subpixel electrodes **124a** and **124b** at the row n, column m+1 position and that of the counter electrode **144.**

Thereafter, when the gate signal voltage supplied to the gate line **Lgn** changes from the ON-state voltage into the OFF-state voltage, the TFTs **130a** and **130b** at the row n, column m and row n, column m+1 positions turn OFF. Strictly speaking, right after the TFTs **130a** and **130b** have turned OFF, the potentials of the subpixel electrodes **124a** and **124b** decrease to substantially the same degree due to a feedthrough phenomenon that has been caused by the parasitic capacitance of the TFTs **130a** and **130b**. At this point in time, the potentials of the subpixel electrodes **124a** and **124b** at the row n, column m position are substantially equal to each other, so are the potentials of the subpixel electrodes **124a** and **124b** at the row n, column m+1 position.

After that, the storage capacitor signal voltages supplied to the CS lines **Lcsa** and **Lcsb** change. As a result, the average potential of the subpixel electrode **124a** changes from the potential corresponding to the source signal voltage supplied to the source lines **Sm** and **Sm+1.** On the other hand, since the subpixel **Spb** has no storage capacitors, the potential of the subpixel electrode **124b** does not change irrespective of the variation in the voltage of the storage capacitor signal supplied to the CS lines **Lcsa** and **Lcsb.** And the potential of the subpixel electrode **124b** corresponds to the source signal voltage supplied to the source lines **Sm** and **Sm+1.**

In the pixel **P** at the row n, column m position, the first change of the storage capacitor signal voltage **VLcsa** after the TFT **130a** has turned OFF is increase, and the average potential of the subpixel electrode **124a** increases as the storage capacitor signal voltage **VLcsa** rises. Since the average potential of the subpixel electrode **124a** increases as a positive one, the luminance of the subpixel **Spa** becomes higher than that of the subpixel **Spb.**

On the other hand, in the pixel **P** at the row n, column m+1 position, the first change of the storage capacitor signal voltage **VLcsb** after the TFT **130a** has turned OFF is decrease, and the average potential of the subpixel electrode **124a** decreases as the storage capacitor signal voltage **VLcsb** falls. Since the average potential of the subpixel electrode **124a** decreases as a negative one, the luminance of the subpixel **Spa** becomes higher than that of the subpixel **Spb.**

In this manner, a write operation is carried out on the $n^{th}$ row of pixels. As described above, the polarity of the pixel **P** at the row n, column m+1 position is inverse of that of the pixel **P** at the row n, column m position. Although not described in detail in the foregoing description, each pair of pixels that are adjacent to each other in the row direction on the $n^{th}$ row have mutually inverse polarities. As also described above, in the pixel **P** at the row n, column m position, the subpixel **Spa** associated with the CS line **Lcsa** is a bright subpixel. On the other hand, in the pixel **P** at the row n, column m+1 position, the subpixel **Spa** associated with the CS line **Lcsb** is a bright subpixel. As a result, the subpixel **Spa** associated with the CS line **Lcs** becomes a bright subpixel and the subpixel **Spb** not associated with the CS line **Lcs** becomes a dark subpixel.

Hereinafter, it will be described how to write a voltage on the $(n+1)^{th}$ row of pixels **P.** In this example, attention is paid to the pixel at the row n+1, column m position and the pixel at the row n+1, column m+1 position.

When the gate signal voltage supplied to the gate line **Lgn+1** changes from the OFF-state voltage into the ON-state voltage, the TFTs **130a** and **130b** at the row n+1, column m and row n+1, column m+1 positions turn ON. Once the $(n+1)^{th}$ row of pixels are selected in this manner, the source signal voltage supplied to the source line **Lsm** is applied to the subpixel electrodes **124a** and **124b** at the row n+1, column m position, and the source signal voltage supplied to the source line **Lsm+1** is applied to the subpixel electrodes **124a** and **124b** at the row n+1, column m+1 position. In this example, the potential of the subpixel electrodes **124a** and **124b** at the row n+1, column m position is lower than that of the counter electrode **144**. Also, although not shown in FIG. **8,** the potential of the subpixel electrodes **124a** and **124b** at the row n+1, column m+1 position is higher than that of the counter electrode **144.** Thus, the relation between the potential of the subpixel electrodes **124a** and **124b** at the row n+1, column m position and that of the counter electrode **144** is different from the relation between the potential of the subpixel electrodes **124a** and **124b** at the row n+1, column m+1 position and that of the counter electrode **144.**

Thereafter, when the gate signal voltage supplied to the gate line **Lgn+1** changes from the ON-state voltage into the OFF-state voltage, the TFTs **130a** and **130b** at the row n+1, column m and row n+1, column m+1 positions turn OFF. In this case, the feedthrough phenomenon also arises as described above.

After that, the storage capacitor signal voltages supplied to the CS lines **Lcsc** and **Lcsd** change in opposite directions, and therefore, the potential of the subpixel electrode **124a** at the row n+1, column m position and that of the subpixel electrode **124a** at the row n+1, column m+1 position change in opposite directions, too. In the pixel **P** at the row n+1, column m position, the first change of the storage capacitor signal voltage **VLcsc** after the TFT **130a** has turned OFF is decrease, the average potential of the subpixel electrode **124a** decreases as a negative one, and the luminance of the subpixel **Spa** becomes higher than that of the subpixel **Spb**. On the other hand, in the pixel **P** at the row n+1, column m+1 position, the first change of the storage capacitor signal voltage **VLcsd** after the TFT **130a** has turned OFF is increase, the average potential of the subpixel electrode **124a** increases as a positive one, and the luminance of the subpixel **Spa** becomes higher than that of the subpixel **Spb.**

In this manner, a write operation is performed on the (n+1)$^{th}$ row of pixels **P.** Any two of those pixels of the (n+1)$^{th}$ row that are adjacent to each other in the row direction have mutually opposite polarities. Also, in each of the (n+1)$^{th}$ row of pixels **P,** a subpixel **Spa** associated with the CS line **Lcs** is a bright subpixel and a subpixel **Spb** not associated with the CS line **Lcs** is a dark subpixel. A write operation will be performed in the same way on the (n+2)$^{th}$ row of pixels **P** and so on.

In this manner, the liquid crystal display device **100A** performs a dot inversion drive, and pixels that are adjacent to each other in the row direction or in the column direction have mutually different polarities but pixels that are obliquely adjacent to each other have the same polarity. For example, the polarities of the pixels at the row n, column m position and at the row n+1, column m+1 position are positive, while those of the pixels at the row n+1, column m position and at the row n, column m+1 position are negative.

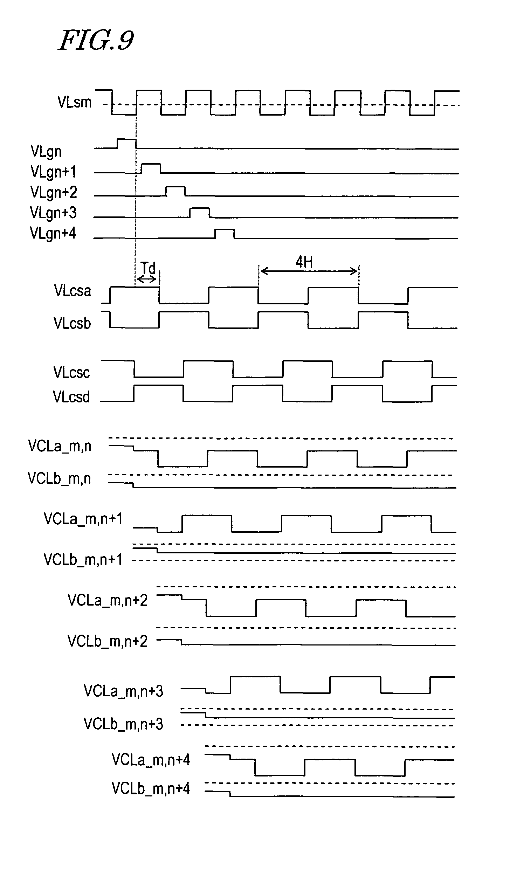

FIG. **9** shows the waveforms of voltages to be applied in the vertical scanning period (which may be a field period or a frame period) that follows the one shown in FIG. **8.** Comparing FIGS. **8** and **9** to each other, it can be seen that the polarity of the source signal voltage supplied to the source line **Ls** has inverted from that in the previous vertical scanning period, thus minimizing the image persistence on the display screen. Also, the phase of the storage capacitor signal voltage supplied to the CS lines **Lcsa** through **Lcsd** has also inverted from that in the previous vertical scanning period. Since the polarity of the source signal voltage and the phase of the storage capacitor signal voltage have both inverted in this manner, the subpixels **Spa** and **Spb** also become a bright subpixel and a dark subpixel, respectively, in this vertical scanning period. In this liquid crystal display device **100A,** as the storage capacitor signal voltage supplied to the CS line **Lcs** varies, the absolute value of the effective voltage applied to the liquid crystal layer of the subpixel **Spa** increases. As a result, the source signal line can have relatively small amplitude and increase in the power dissipated by the source driver can be minimized.

In the examples illustrated in FIGS. **8** and **9,** storage capacitor signals with different oscillation periods 4H are supplied to the four storage capacitor trunk lines. However, this is just an example of the present invention. Alternatively, storage capacitor signals with different oscillation periods 2H may be supplied to two storage capacitor trunk lines. In that case, in the equivalent circuit shown in FIG. **7,** equivalent storage capacitor signals are supplied to storage capacitor trunk lines **Ltcsa** and **Ltcsc** and equivalent storage capacitor signals are supplied to storage capacitor trunk lines **Ltcsb** and **Ltcsd.** In this manner, storage capacitor signals with different oscillation periods **NH** may be supplied to N storage capacitor trunk lines (where N is an even number that is equal to or greater than two).

(EMBODIMENT 3)

In the liquid crystal display device **100A** described above, the subpixel **Spa** associated with the CS line **Lcs** is supposed to have a smaller area than the subpixel **Spb** not associated with the CS line **Lcs.** However, this is only an example of the present invention. Alternatively, the subpixel associated with the CS line **Lcs** may also have a larger area than the subpixel not associated with the CS line **Lcs.** Also, in the liquid crystal display device **100A** described above, the subpixel **Spa** associated with the CS line **Lcs** is supposed to be a bright subpixel and the subpixel **Spb** not associated with the CS line **Lcs** is supposed to be a dark subpixel. However, the present invention is in no way limited to that specific embodiment. Alternatively, the subpixel associated with the CS line **Lcs** may be a dark subpixel and the subpixel not associated with the CS line **Lcs** may be a bright subpixel.

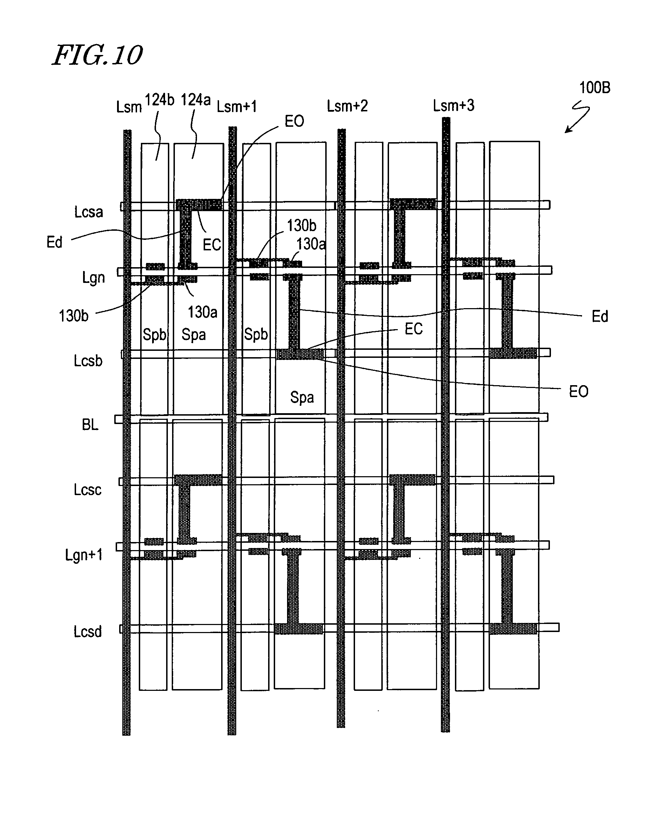

Hereinafter, a third embodiment of a liquid crystal display device according to the present invention will be described with reference to FIG. **10.** The liquid crystal display device **100B** of this embodiment has the same configuration as the liquid crystal display device **100A** described above except that the subpixel **Spa** has a larger area and a lower luminance than the subpixel **Spb.** Thus, their common features will not be described all over again to avoid redundancies. The equivalent circuit of the liquid crystal display device **100B** may be the same as what is shown in FIG. **5** or **7.**

In the liquid crystal display device **100B,** the respective lengths of the subpixel electrodes **124a** and **124b** are equal to each other when measured in the column direction. But when measured in the row direction, the length of the subpixel electrode **124a** is greater than that of the subpixel electrode **124b.** And the area of the subpixel electrode **124a** (and the subpixel **Spa** defined by the subpixel electrode **124a**) is larger than that of the subpixel electrode **124b** (and the subpixel **Spb** defined by the subpixel electrode **124b**)**.** These two subpixels **Spa** and **Spb** are adjacent to each other in the row direction. And in a column of pixels **P,** the subpixels **Spa** are arranged in line, so are the subpixels **Spb.**

Although not shown to avoid redundancies, if a positive source signal voltage has been applied to the subpixel electrodes **124a** and **124b** of a certain pixel **P,** then the first change of the storage capacitor signal voltage supplied to the CS line **Lcs** associated with that pixel **P** after the gate signal voltage supplied to the gate line **Lg** that selects that pixel **P** has turned into an OFF-state voltage is decrease. That is why the average potential of the subpixel electrode **124a** of that pixel **P** can be decreased and the subpixel **Spa** comes to have a lower luminance than the subpixel **Spb.** On the other hand, if a negative source signal voltage has been applied to the subpixel electrodes **124a** and **124b** of another pixel **P,** then the first change of the storage capacitor signal voltage supplied to the CS line **Lcs** associated with that pixel **P** after the gate signal voltage supplied to the gate line **Lg** that selects that pixel **P** has turned into an OFF-state voltage is increase. That is why the average potential of the subpixel electrode **124a** of that pixel **P** can be increased and the subpixel **Spa** comes to have a lower luminance than the subpixel **Spb.**

For example, if the source signal voltage supplied to the source line **Lsm** varies as shown in FIG. **8** in a vertical scanning period, then the storage capacitor signal voltage supplied to the CS line **Lcs** changes as shown in FIG. **9.** Or if the source signal voltage supplied to the source line **Lsm** varies as shown in FIG. **9** in another vertical scanning period, then the storage capacitor signal voltage supplied to the CS line **Lcs** changes as shown in FIG. **8.**

In the liquid crystal display devices **100A** and **100B** described above, one of the two subpixels **Spa** and **Spb** that has the smaller area is supposed to be a bright subpixel. However, this is just an example of the present invention. Alternatively, one of the two subpixels **Spa** and **Spb** that has the smaller area may also be a dark subpixel.

(EMBODIMENT 4)

In the liquid crystal display device described above, the subpixel **Spb** has no storage capacitors. However, the present invention is in no way limited to those specific embodiments. Optionally, the subpixel **Spb** may also have a storage capacitor.

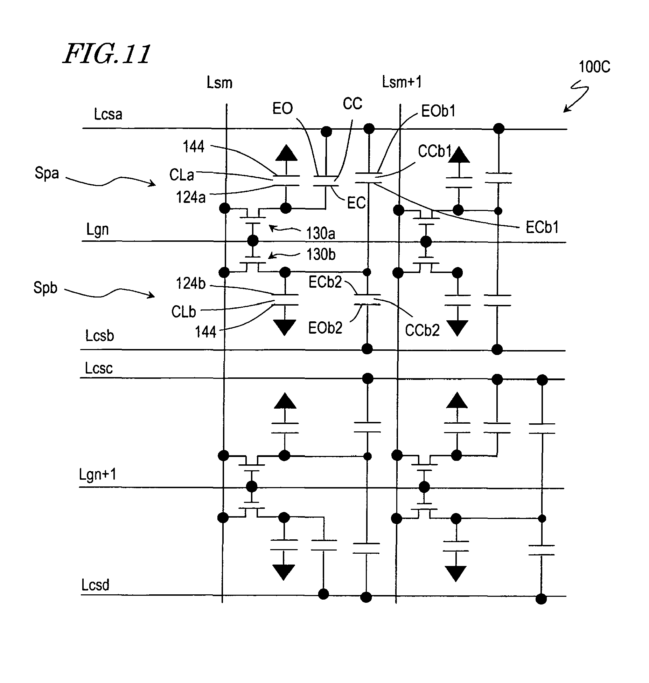

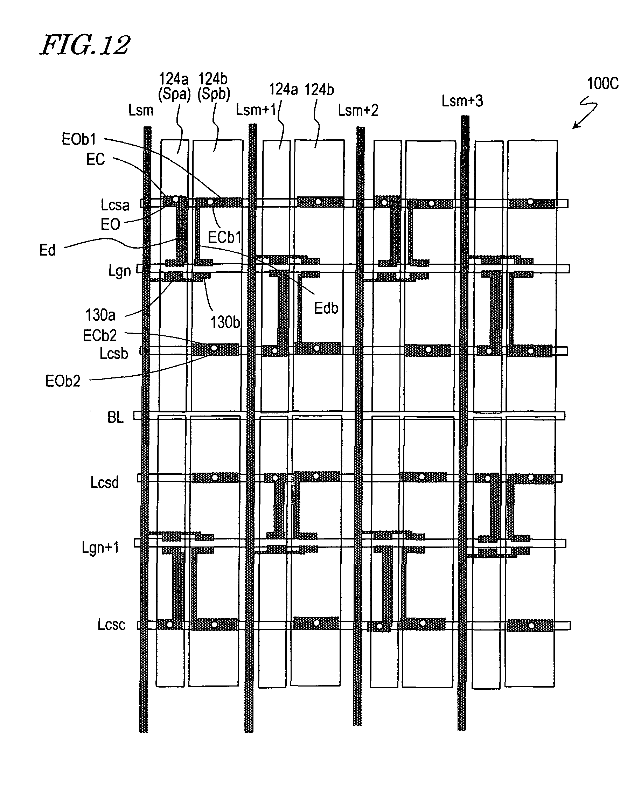

Hereinafter, a fourth embodiment of a liquid crystal display device according to the present invention will be described with reference to FIGS. **11** and **12.** The liquid crystal display device **100C** of this embodiment has the same configuration as the liquid crystal display device described above except that the subpixel **Spb** has a storage capacitor. Thus, their common features will not be described all over again to avoid redundancies.

FIG. **11** is an equivalent circuit diagram of the liquid crystal display device **100C.** In this liquid crystal display device **100C,** the active-matrix substrate **120** includes storage capacitor electrodes **ECb1** and **Ecb2.** A CS line **Lcsa** is electrically connected to a storage capacitor counter electrode **EOb1** that forms, along with the storage capacitor electrode **ECb1,** a storage capacitor **CCb1.** A CS line **Lcsb** is electrically connected to a storage capacitor counter electrode **EOb2** that forms, along with the storage capacitor electrode **ECb2,** a storage capacitor **CCb2.**

In the liquid crystal display device **100C,** the subpixel **Spb** includes storage capacitors **CCb1** and **CCb2** instead of the liquid crystal capacitor **CLb.** The storage capacitor **CCb1** is formed of the storage capacitor electrode **ECb1,** the storage capacitor counter electrode **EOb1,** and an insulating layer interposed between them. The storage capacitor **CCb2** is formed of the storage capacitor electrode **ECb2,** the storage capacitor counter electrode **EOb2,** and an insulating layer interposed between them. The respective areas of the storage capacitor electrodes **ECb1** and **ECb2** are equal to each other, so are those of the storage capacitors **CCb1** and **CCb2.** As can be seen, in the liquid crystal display device **100C,** the subpixel **Spb** includes the storage capacitors **CCb1** and **CCb2,** and therefore, leakage of electric charges from the liquid crystal capacitor **CLb** can be minimized.

Also, in this liquid crystal display device **100C,** the subpixel **Spa** includes a liquid crystal capacitor **CLa** and a storage capacitor **CC,** which is formed of a storage capacitor electrode **EC,** a storage capacitor counter electrode **EO** and an insulating layer interposed between them. Thus, in this liquid crystal display device **100C,** the subpixel **Spa** includes only one storage capacitor **CC,** while the subpixel **Spb** includes two storage capacitors **CCb1** and **CCb2.** For that reason, two storage capacitor electrodes **ECb1** and **ECb2** are provided for the subpixel **Spb.**

FIG. **12** schematically illustrates a liquid crystal display device **100C,** in which two CS lines **Lcs** are provided for each row of pixels **P.** Look at the nth row of pixels **P,** and it can be seen that CS lines **Lcsa** and **Lcsb** are provided for the nth row of pixels **P.**

The respective gates of the TFTs **130a** and **130b** are electrically connected in common to the same gate line **Lg.** The TFTs **130a** and **130b** change their states in the same pattern in response to a gate signal voltage supplied to the gate line **Lg.** The respective sources of the TFTs **130a** and **130b** are electrically connected to the source line **Ls** through contact holes that have been cut through an insulating layer.

The drain of the TFT **130a** is electrically connected to the storage capacitor electrode **EC** via the drain electrode **Ed.** The subpixel electrode **124a** is electrically connected to the storage capacitor electrode **EC** through a contact hole that has been cut through the insulating layer. The storage capacitor electrode **EC** is arranged so as to overlap with the CS line **Lcsa,** and a storage capacitor **CC** is formed between the storage capacitor electrode **EC** and the CS line **Lcsa.**

The drain of the TFT **130b** is electrically connected to the storage capacitor electrode **ECb1** and the subpixel electrode **124b** via the drain electrode **Edb.** The storage capacitor electrode **ECb1** is arranged so as to overlap with the CS line **Lcsa,** and a storage capacitor **CCb1** is formed between the storage capacitor electrode **ECb1** and the CS line **Lcsa.** On the other hand, the storage capacitor electrode **ECb2** that is electrically connected to the subpixel electrode **124b** through the insulating layer is arranged so as to overlap with the CS line **Lcsb,** and a storage capacitor **CCb2** is formed between the storage capacitor electrode **ECb2** and the CS line **Lcsb.**

In this case, a part of the CS line **Lcsa** that forms a storage capacitor with the storage capacitor electrode **ECb1** becomes a storage capacitor counter electrode **EOb1** and a part of the CS line **Lcsb** that forms a storage capacitor with the storage capacitor electrode **ECb2** becomes a storage capacitor counter electrode **EOb2.** Although the storage capacitor counter electrodes **EOb1** and **EOb2** form an integral part of the CS lines **Lcsa** and **Lcsb,** respectively, in this example, the storage capacitor counter electrodes **EOb1** and **EOb2** may be provided separately from the CS lines **Lcsa** and **Lcsb.**

In this liquid crystal display device **100C,** the respective lengths of the subpixel electrodes **124a** and **124b** are equal to each other when measured in the column direction. But when measured in the row direction, the length of the subpixel electrode **124a** is shorter than that of the subpixel electrode **124b.** And the area of the subpixel electrode **124a** is smaller than that of the subpixel electrode **124b.** To the respective lines of this liquid crystal display device **100C,** supplied are signals with the voltage waveforms shown in FIGS. **8** and **9,** for example.

Hereinafter, it will be described how to perform a write operation on pixels **P** in this liquid crystal display device **100C.** First of all, it will be described how to write a voltage on the $n^{th}$ row of pixels **P.** In this example, attention is paid to the pixel at the row n, column m position and the pixel at the row n, column m+1 position. When the gate signal voltage supplied to the gate line **Lgn** changes from the OFF-state voltage into the ON-state voltage, the TFTs **130a** and **130b** at the row n, column m and row n, column m+1 positions turn ON. Once the $n^{th}$ row of pixels are selected in this manner, the source signal voltage supplied to the source line **Lsm** is applied to the subpixel electrodes **124a** and **124b** at the row n, column m position, and the source signal voltage supplied to the source line **Lsm+1** is applied to the subpixel electrodes **124a** and **124b** at the row n, column m+1 position. In this example, the potential of the subpixel electrodes **124a** and **124b** at the row n, column m position is higher than that of the counter electrode **144,** and the potential of the subpixel electrodes **124a** and **124b** at the row n, column m+1 position is lower than that of the counter electrode **144.**

Thereafter, when the gate signal voltage supplied to the gate line **Lgn** changes from the ON-state voltage into the OFF-state voltage, the TFTs **130a** and **130b** at the row n, column m and row n, column m+1 positions turn OFF. Strictly speaking, right after the TFTs **130a** and **130b** have turned OFF, the potentials of the subpixel electrodes **124a** and **124b** decrease to substantially the same degree due to a feedthrough phenomenon that has been caused by the parasitic capacitance of the TFTs **130a** and **130b.** In this liquid crystal display device **100C,** each of the subpixels **Spa** and **Spb** includes both a liquid crystal capacitor and a storage capacitor unlike the liquid crystal display devices **100, 100A** and **100B** described above and some of the liquid crystal display devices to be described later. That is why this liquid crystal display device **100C** can be designed so that the subpixels **Spa** and **Spb** have substantially the same capacitance. Consequently, this liquid crystal display device **100C** can be designed so as to cause a potential drop to substantially the same degree due to the feedthrough voltage, and occurrence of flicker can be minimized.

After that, the storage capacitor signal voltage supplied to the CS line **Lcsa** changes, and the potential of the subpixel electrode **124a** changes. In this example, the first change of the storage capacitor signal voltage **VLcsa** after the TFT **130a** has turned OFF is increase, and therefore, the average potential of the subpixel electrode **124a** rises.

As described above, the subpixel **Spb** includes a storage capacitor **CCb1** associated with the CS line **Lcsa** and a storage capacitor **CCb2** associated with the CS line **Lcsb.** After the TFT **130b** has turned OFF, the storage capacitor signal voltages supplied to the CS lines **Lcsa** and **Lcsb** change in opposite directions. In this case, the magnitude of the variation in the average potential of the subpixel electrode **124b** due to the change in the storage capacitor signal voltage supplied to the CS line **Lcsa** is substantially equal to that of the variation in the average potential of the subpixel electrode **124b** due to the change in the storage capacitor signal voltage supplied to the CS line **Lcsb.** As a result, those variations in the average potential of the subpixel electrode **124b** that have been caused by the storage capacitors **CCb1** and **CCb2** cancel each other. Consequently, the average potential of the subpixel electrode **124b** corresponds to the source signal voltage supplied to the source line **Ls.** In this manner, in spite of the variations in the voltage of the storage capacitor signals supplied to the CS lines **Lcsa** and **Lcsb,** the potential of the subpixel electrode **124b** does not change, and the average potential of the subpixel electrode **124b** corresponds to the source signal voltage supplied to the source lines **Sm** and **Sm+1.**

In the pixel **P** at the row n, column m position, the average potential of the subpixel electrode **124a** increases as a positive one as the storage capacitor signal voltage **VLcsa** rises, and therefore, the luminance of the subpixel **Spa** becomes higher than that of the subpixel **Spb.** On the other hand, in the pixel **P** at the row n, column m+1 position, the average potential of the subpixel electrode **124a** decreases as a negative one as the storage capacitor signal voltage **VLcsa** falls, and therefore, the luminance of the subpixel **Spa** becomes higher than that of the subpixel **Spb.**

In this manner, a write operation is carried out on the $n^{th}$ row of pixels. Each pair of pixels that are adjacent to each other in the row direction on the $n^{th}$ row have mutually inverse polarities. Also, the subpixel **Spa** associated with only one of the two CS lines **Lcsa** and **Lcsb** that are provided for the $n^{th}$ row of pixels **P** becomes a bright subpixel and the subpixel **Spb** associated with both of the two CS lines **Lcsa** and **Lcsb** becomes a dark subpixel.

Next, it will be described how to write a voltage on the $(n+1)^{th}$ row of pixels **P**. In this example, attention is paid to the pixel at the row n+1, column m position and the pixel at the row n+1, column m+1 position.

When the gate signal voltage supplied to the gate line **Lgn+1** changes from the OFF-state voltage into the ON-state voltage, the TFTs **130a** and **130b** at the row n+1, column m and row n+1, column m+1 positions turn ON. Once the $(n+1)^{th}$ row of pixels are selected in this manner, the source signal voltage supplied to the source line **Lsm** is applied to the subpixel electrodes **124a** and **124b** at the row n+1, column m position, and the source signal voltage supplied to the source line **Lsm+1** is applied to the subpixel electrodes **124a** and **124b** at the row n+1, column m+1 position. In this example, the potential of the subpixel electrodes **124a** and **124b** at the row n+1, column m position is lower than that of the counter electrode **144,** and the potential of the subpixel electrodes **124a** and **124b** at the row n+1, column m+1 position is higher than that of the counter electrode **144.**

Thereafter, when the gate signal voltage supplied to the gate line **Lgn+1** changes from the ON-state voltage into the OFF-state voltage, the TFTs **130a** and **130b** at the row n+1, column m and row n+1, column m+1 positions turn OFF.

After that, the storage capacitor signal voltages supplied to the CS lines **Lcsc** and **Lcsd** change in opposite directions, and therefore, the potential of the subpixel electrode **124a** at the row n+1, column m position and that of the subpixel electrode **124a** at the row n+1, column m+1 position change in opposite directions, too. In the pixel **P** at the row n+1, column m position, the first change of the storage capacitor signal voltage **VLcsc** after the TFT **130a** has turned OFF is decrease, and the average potential of the subpixel electrode **124a** decreases. Also, as different influences of the storage capacitor signal voltages supplied to the CS lines **Lcsc** and **Lcsd** cancel each other, the average potential of the subpixel electrode **124b** that is associated with both of the CS lines **Lcsc** and **Lcsd** corresponds to the source signal voltage supplied to the source line **Lsm.** Since the average potential of the subpixel electrode **124a** decreases as a negative one, the subpixel **Spa** comes to have a higher luminance than the subpixel **Spb.** On the other hand, in the pixel **P** at the row n+1, column m+1 position, the first change of the storage capacitor signal voltage **VLcsd** after the TFT **130a** has turned OFF is increase, the average potential of the subpixel electrode **124a** increases as a positive one, and the luminance of the subpixel **Spa** becomes higher than that of the subpixel **Spb.**

In this manner, a write operation is performed on the $(n+1)^{th}$ row of pixels **P.** Any two of those pixels of the $(n+1)^{th}$ row that are adjacent to each other in the row direction have mutually opposite polarities. Also, in each of the $(n+1)^{th}$ row of pixels **P,** a subpixel **Spa** associated with only one of the two CS lines **Lcsc** and **Lcsd** becomes a bright subpixel and a subpixel **Spb** associated with both of those CS lines **Lcsc** and **Lcsd** becomes a dark subpixel.

In the foregoing description, the area of the subpixel **Spap** is supposed to be smaller than that of the subpixel **Spb,** the first change in the voltage of the storage capacitor signal supplied to a CS line that is associated with the positive subpixel **Spa** is increase, and the first change in the voltage of the storage capacitor signal supplied to a CS line that is associated with the negative subpixel **Spa** is decrease. However, this is just an example of the present invention. For example, the area of the subpixel **Spa** may be larger than that of the subpixel **Spb,** the first change in the voltage of the storage capacitor signal supplied to a CS line that is associated with the positive subpixel **Spa** may be decrease, and the first change in the voltage of the storage capacitor signal supplied to a CS line that is associated with the negative subpixel **Spa** may be decrease.

Furthermore, although one of the two subpixels **Spa** and **Spb** that has the smaller area is supposed to be a bright subpixel, this is just an example of the present invention. The subpixel with the smaller area may also be a dark subpixel.

In FIG. **12,** the subpixel **Spa** of the pixels at the row n, column m position and at the row n+1, column m position is associated with the storage capacitor lines **Lcsa** and **Lcsc,** while the subpixel **Spa** of the pixels at the row n, column m+1 position and the row n+1, column m+1 position is associated with the storage capacitor lines **Lcsb** and **Lcsd.** In this manner, in FIG. **12,** the distance between the storage capacitor lines that are associated with the respective subpixels **Spa** of two pixels that are adjacent to each other in the row direction is not constant. However, even in this liquid crystal display device **100C,** the distance between the storage capacitor lines that are associated with the respective subpixels **Spa** of two pixels that are adjacent to each other in the row direction may also be substantially constant as in the arrangements shown in FIGS. **6** and **10.**

(EMBODIMENT 5)

In the liquid crystal display device described above, two CS lines are provided for each row of pixels.

However, this is only an example of the present invention.

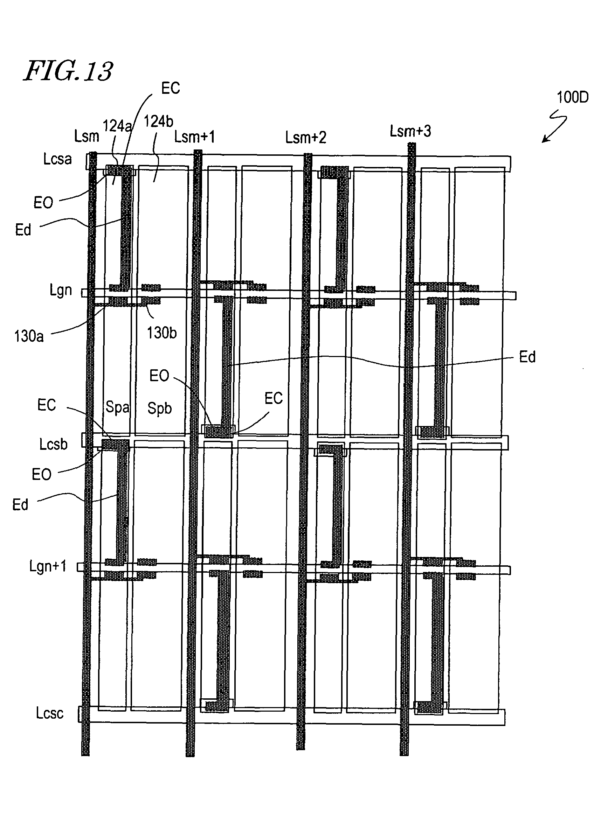

Hereinafter, a fifth embodiment of a liquid crystal display device according to the present invention will be described with reference to FIG. **13.** The liquid crystal display device **100D** of this embodiment has the same configuration as the liquid crystal display devices described above except that two rows of pixels that are adjacent to each other in the column direction share the same CS line in common. Thus, their common features will not be described all over again to avoid redundancies. In FIG. **13,** illustration of the counter substrate **140** is omitted to avoid an overly complicated illustration. And FIG. **13** corresponds to a top view of the active-matrix substrate **120.**

The respective lengths of the subpixel electrodes **124a** and **124b** are substantially equal to each other when measured in the column direction. But when measured in the row direction, the length of the subpixel electrode **124a** is shorter than that of the subpixel electrode **124b.** And the area of the subpixel **Spa** is smaller than that of the subpixel **Spb.** These two subpixels **Spa** and **Spb** are adjacent to each other in the row direction. And in a column of pixels **P,** the subpixels **Spa** are arranged in line, so are the subpixels **Spb.**

In this liquid crystal display device **100D,** a CS line **Lcs** is arranged between two rows of pixels that are adjacent to each other in the column direction and is associated with the respective subpixels **Spa** of those two rows of pixels. For example, a CS line **Lcsb** is electrically connected to both the storage capacitor counter electrode **EO** provided for the first subpixel **Spa** of the pixel at the row n+1, column m position and the storage capacitor counter electrode **EO** provided for the first subpixel **Spa** of the pixel at the row n, column m+1 position. That is why in response to a storage capacitor signal supplied to the CS line **Lcs,** the average potentials of the respective subpixel electrodes **124a** of the two rows of pixels vary. In this manner, in the liquid crystal display device **100D,** a single CS line is shared in common by two adjacent rows of pixels, and therefore, the number of CS lines **Lcs** to provide can be reduced and a high aperture ratio can be achieved eventually.

Also, in this liquid crystal display device **100D,** each storage capacitor counter electrode **EO** is arranged continuously with an associated CS line **Lcs** so as to form an integral part of the line **Lcs,** and a conductive member that makes the storage capacitor counter electrodes **EO** and the CS lines **Lcs** has a locally broadened width. Optionally, the storage capacitor counter electrodes **EO** may also be arranged so as to be entirely included in the CS lines **Lcs** and the conductive member may also have a uniform width.

In this liquid crystal display device **100D,** a write operation is performed on the pixels **P** in the following manner. In this example, attention is paid to the pixels **P** at the row n, column m position, the row n, column m+1 position, the row n+1, column m position and the row n+1, column m+1 position.

First of all, the gate signal voltage supplied to the gate line **Lgn** associated with the nth row changes into the ON-state voltage, when the TFTs **130a** and **130b** at the row n, column m position turn ON. Once the nth row of pixels are selected in this manner, the source signal voltage supplied to the source line **Lsm** is applied to the subpixel electrodes **124a** and **124b** at the row n, column m position and the source signal voltage supplied to the source line **Lsm+1** is applied to the subpixel electrodes **124a** and **124b** at the row n, column m+1 position. After that, the gate signal voltage supplied to the gate line **Lgn** changes from the ON-state voltage into an OFF-state voltage, and the TFTs **130a** and **130b** turn OFF. As described above, the potentials of the subpixel electrodes **124a** and **124b** both decrease due to the feedthrough phenomenon.

After the TFTs **130a** and **130b** on the nth row have turned OFF, the storage capacitor signal voltages supplied to the CS lines **Lcsa** and **Lcsb** change, and the potential of the subpixel electrode **124a** changes, too. Optionally, the storage capacitor signal voltage supplied to the CS line **Lcsa** may change either before or after the gate signal voltage supplied to the gate line **Lgn+1** associated with the (n+1)th row to be described later changes from the OFF-state voltage into the ON-state voltage. On the other hand, the storage capacitor signal voltage supplied to the CS line **Lcsb** changes after the gate signal voltage supplied to the gate line **Lgn+1** associated with the (n+1)th row to be described later changes from the OFF-state voltage into the ON-state voltage.

For example, if the potential of the subpixel electrodes **124a** and **124b** at the row n, column m position is higher than the potential of the counter electrode **144** and if the first change of the storage capacitor signal voltage supplied to the CS line **Lcsa** after the TFTs **130a** and **130b** have turned OFF is increase, then the average potential of the subpixel electrode **124a** increases and the luminance of the subpixel **Spa** becomes higher than that of the subpixel **Spb.** Conversely, if the first change of the storage capacitor signal voltage supplied to the CS line **Lcsa** is decrease, then the average potential of the subpixel electrode **124a** decreases and the luminance of the subpixel **Spb** becomes higher than that of the subpixel **Spa.**

On the other hand, if the potential of the subpixel electrodes **124a** and **124b** at the row n, column m position is lower than the potential of the counter electrode **144** and if the first change of the storage capacitor signal voltage supplied to the CS line **Lcsa** after the TFTs **130a** and **130b** have turned OFF is increase, then the average potential of the subpixel electrode **124a** increases and the luminance of the subpixel **Spb** becomes higher than that of the subpixel **Spa.** Conversely, if the first change of the storage capacitor signal voltage supplied to the CS line **Lcsa** is decrease, then the average potential of the subpixel electrode **124a** decreases and the luminance of the subpixel **Spa** becomes higher than that of the subpixel **Spb.**

Next, the gate signal voltage supplied to the gate line **Lgn+1** associated with the (n+1)th row changes into the ON-state voltage, when the TFTs **130a** and **130b** associated with that gate line **Lgn+1** turn ON. Once the (n+1)th row of pixels are selected in this manner, the source signal voltage supplied to the source line **Lsm** is applied to the subpixel electrodes **124a** and **124b** at the row n+1, column m position and the source signal voltage supplied to the source line **Lsm+1** is applied to the subpixel electrodes **124a** and **124b** at the row n+1, column m+1 position. For example, if the potential of the subpixel electrodes **124a** and **124b** at the row n, column m position is higher than that of the counter electrode **144,** a source signal voltage that is lower than the potential of the counter electrode **144** is applied to the subpixel electrodes **124a** and **124b** at the row n+1, column m position.

After that, the gate signal voltage supplied to the gate line **Lgn+1** changes from the ON-state voltage into an OFF-state voltage, and the TFTs **130a** and **130b** at the row n+1, column m position turn OFF.

Thereafter, as the storage capacitor signal voltages supplied to the CS lines **Lcsb** and **Lcsc** change, the potentials of the subpixel electrodes **124a** and **124b** change, too. Optionally, the storage capacitor signal voltage supplied to the CS line **Lcsb** may change either before or after the gate signal voltage supplied to the gate line **Lgn+2** (not shown) associated with the (n+2)th row changes from the OFF-state voltage into the ON-state voltage. On the other hand, the voltage supplied to the CS line **Lcsc** changes after the gate signal voltage supplied to the gate line **Lgn+2** associated with the (n+2)th row changes from the OFF-state voltage into the ON-state voltage.

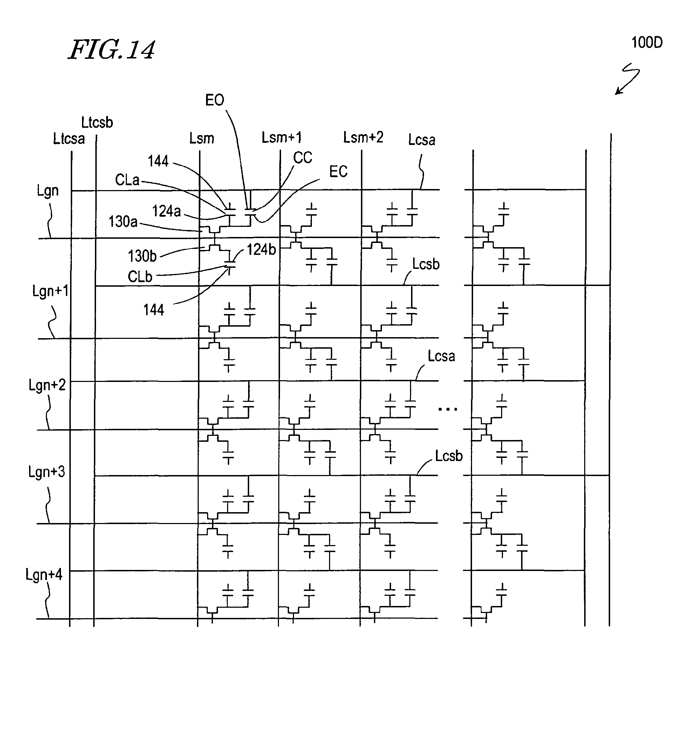

FIG. **14** illustrates an equivalent circuit diagram of the liquid crystal display device **100D.** The equivalent circuit shown in FIG. **14** is that of multiple pixels **P.** In FIG. **14,** the source lines provided for the mth through (m+2)th columns of pixels are identified by Lsm to Lsm+2, respectively, while the gate lines provided for the nth through (n+4)th rows of pixels are identified by Lgn to Lgn+4, respectively. Also, CS lines extended from the storage capacitor trunk lines **Ltcsa** and **Ltcsb** are identified by Lcsa and Lcsb, respectively.

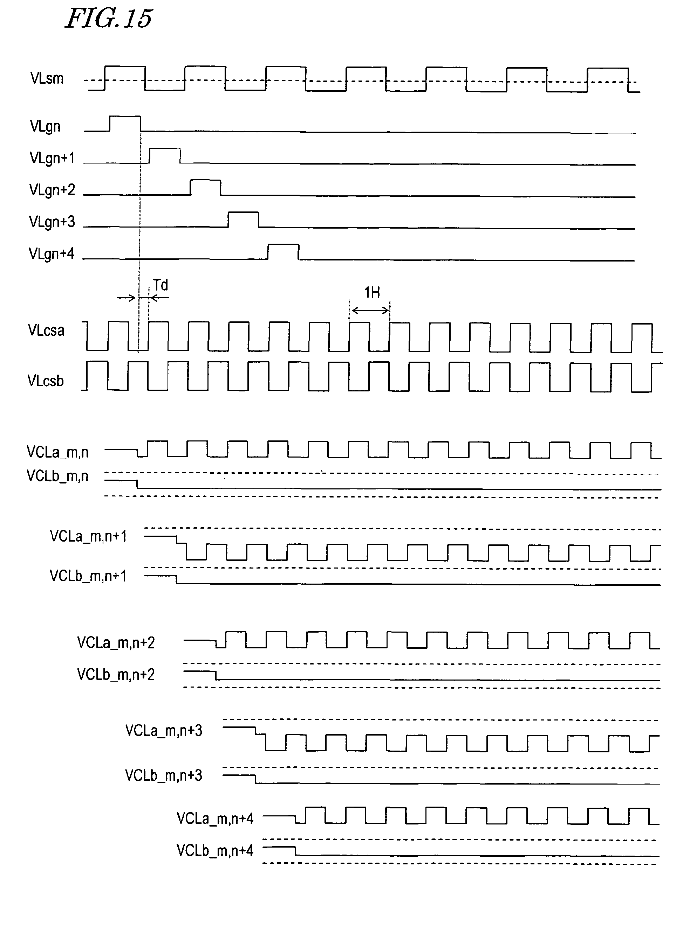

The liquid crystal display device **100D** shown in FIG. **14** may be driven in the following manner, for example. FIG. **15** shows the waveforms of voltages applied to the liquid crystal display device **100D.** In FIG. **15,** VLsm indicates the voltage waveform of a source signal supplied to the source line **Lsm** with respect to the voltage applied to the counter electrode **144** as indicated by the dotted line. VLgn to VLgn+4 indicate the voltage waveforms of a gate signal supplied to the gate lines **Lgn** through **Lgn+4.** VLcsa and VLcsb indicate the voltage waveforms of a storage capacitor signal supplied to the CS lines **Lcsa** and **Lcsb.** VCLa_m, n through VCLa_m, n+4 indicate the respective potentials of the subpixel electrodes **124a** of the pixels **P** at the row n, column m position, the row n+1, column m position, the row n+2, column m position, the row n+3, column m position, and the row n+4, column m position with respect to the potential of the counter electrode **144.** VCLb_m, n through VCLb_m, n+4 indicate the respective potentials of the subpixel electrodes **124b** of the pixels **P** at the row n, column m position, the row n+1, column m position, the row n+2, column m position, the row n+3, column m position, and the row n+4, column m position with respect to the potential of the counter electrode **144.** It should be noted that to avoid an overly complicated description, every pixel represented by the input signal is supposed to have the same grayscale level.

In this example, each of the storage capacitor signal voltages **VLcsa** and **VLcsb** supplied to the storage capacitor trunk lines **Ltcsa** and **Ltcsb,** respectively, is an oscillation voltage including a rectangular wave with a duty ratio of one to one, and one period of oscillation thereof is as long as one horizontal scanning period (i.e., 1H). Look at the storage capacitor signal voltages **VLcsa** and **VLcsb,** and it can be seen that the phase of the storage capacitor signal voltage **VLcsb** is 0.5H behind that of the storage capacitor signal voltage **VLcsa.**

Hereinafter, it will be described with reference to FIGS. **14** and **15** how to perform a write operation on pixels **P** in this liquid crystal display device **100D.** First of all, it will be described how to write a voltage on the nth row of pixels **P.** In this example, attention is paid to the pixel at the row n, column m position and the pixel at the row n, column m+1 position.

When the gate signal voltage supplied to the gate line **Lgn** associated with the nth row changes from the OFF-state voltage into the ON-state voltage, the TFTs **130a** and **130b** at the row n, column m and row n, column m+1 positions turn ON. Once the nth row of pixels are selected in this manner, the source signal voltage supplied to the source line **Lsm** is applied to the subpixel electrodes **124a** and **124b** at the row n, column m position, and the source signal voltage supplied to the source line **Lsm+1** is applied to the subpixel electrodes **124a** and **124b** at the row n, column m+1 position. The source signal voltage supplied to the source line **Lsm** is higher than the potential of the counter electrode **144.** Also, although not shown in FIG. **15,** the source signal voltage supplied to the source line **Lsm+1** is lower than the potential of the counter electrode **144.** Thus, the pixels **P** that are adjacent to each other in the row direction have mutually opposite polarities.

Thereafter, when the gate signal voltage supplied to the gate line **Lgn** changes from the ON-state voltage into the OFF-state voltage, the TFTs **130a** and **130b** at the row n, column m and row n, column m+1 positions turn OFF. Strictly speaking, right after the TFTs **130a** and **130b** have turned OFF, the potentials of the subpixel electrodes **124a** and **124b** decrease to substantially the same degree due to a feedthrough phenomenon that has been caused by the parasitic capacitance of the TFTs **130a** and **130b.**

After the TFTs **130a** and **130b** have turned OFF, the storage capacitor signal voltages **VLcsa** and **VLcsb** supplied to the CS lines **Lcsa** and **Lcsb** change in mutually opposite directions. As a result, the potential of the subpixel electrode **124a** varies.

In the pixel **P** at the row n, column m position, the first change of the storage capacitor signal voltage **VLcsa** after the TFTs **130a** and **130b** have turned OFF is increase, and the average potential of the subpixel electrode **124a** increases as a positive one. Thus, the luminance of the subpixel **Spa** becomes higher than that of the subpixel **Spb**. On the other hand, in the pixel **P** at the row n, column m+1 position, the first change of the storage capacitor signal voltage **VLcsb** after the TFTs **130a** and **130b** have turned OFF is decrease, and the average potential of the subpixel electrode **124a** decreases as a negative one. As a result, the luminance of the subpixel **Spa** becomes higher than that of the subpixel **Spb.**

In this manner, a write operation is carried out on the n$^{th}$ row of pixels **P.** Each pair of pixels that are adjacent to each other in the row direction on the n$^{th}$ row have mutually inverse polarities. And the bright and dark pattern of the two subpixels that form one of two pixels that are adjacent to each other in the row direction on the n$^{th}$ row is opposite to that of the two subpixels that form the other pixel.

Next, it will be described how to write a voltage on the (n+1)$^{th}$ row of pixels **P.** In this example, attention is paid to the pixel **P** at the row n+1, column m position and the pixel **P** at the row n+1, column m+1 position. When the gate signal voltage supplied to the gate line **Lgn+1** associated with the (n+1)$^{th}$ row changes from the OFF-state voltage into the ON-state voltage, the TFTs **130a** and **130b** at the row n+1, column m and row n+1, column m+1 positions turn ON. Once the (n+1)$^{th}$ row of pixels are selected in this manner, the source signal voltage supplied to the source line **Lsm** is applied to the subpixel electrodes **124a** and **124b** at the row n+1, column m position, and the source signal voltage supplied to the source line **Lsm+1** is applied to the subpixel electrodes **124a** and **124b** at the row n+1, column m+1 position. It should be noted that the polarity of the pixel **P** at the row n+1, column m position is different from that of the pixel **P** at the row n+1, column m+1 position. Also, the polarity of the pixel **P** at the row n+1, column m position is different from that of the pixel **P** at the row n, column m position. And the polarity of the pixel **P** at the row n+1, column m+1 position is different from that of the pixel **P** at the row n, column m+1 position.

Thereafter, when the gate signal voltage supplied to the gate line **Lgn+1** changes from the ON-state voltage into the OFF-state voltage, the TFTs **130a** and **130b** at the row n+1, column m and row n+1, column m+1 positions turn OFF. After the TFTs **130a** and **130b** have turned OFF, the storage capacitor signal voltages **VLcsb** and **VLcsa** supplied to the CS lines **Lcsb** and **Lcsa** change in mutually opposite directions.

In the pixel **P** at the row n+1, column m position, the first change of the storage capacitor signal voltage **VLcsb** after the TFTs **130a** and **130b** have turned OFF is decrease, and the average potential of the subpixel electrode **124a** decreases. Since the average potential of the subpixel electrode **124a** decreases as a negative one, the luminance of the subpixel **Spa** becomes higher than that of the subpixel **Spb**. On the other hand, in the pixel **P** at the row n+1, column m+1 position, the first change of the storage capacitor signal voltage **VLcsa** after the TFTs **130a** and **130b** have turned OFF is increase, and the average potential of the subpixel electrode **124a** increases. Since the average potential of the subpixel electrode **124a** increases as a positive one, the luminance of the subpixel **Spa** becomes higher than that of the subpixel **Spb.**

In this manner, a write operation is carried out on the (n+1)$^{th}$ row of pixels **P.** Each pair of pixels that are adjacent to each other in the row direction on the (n+1)$^{th}$ row have mutually inverse polarities. And the bright and dark pattern of the two subpixels that form one of two pixels that are adjacent to each other in the row direction on the (n+1)$^{th}$ row is opposite to that of the two subpixels that form the other pixel. A write operation will be performed in the same way on the (n+2)$^{th}$ row of pixels **P** and so on.

In this manner, in this liquid crystal display device **100D,** pixels that are adjacent to each other in the row direction or in the column direction have mutually different polarities but pixels that are obliquely adjacent to each other have the same polarity. For example, the polarities of the pixels at the row n, column m position and at the row n+1, column m+1 position are positive, while those of the pixels at the row n+1, column m position and at the row n, column m+1 position are negative. Also, pixels that are adjacent to each other in the row direction or in the column direction have mutually different bright and dark patterns, and bright subpixels are obliquely adjacent to each other.

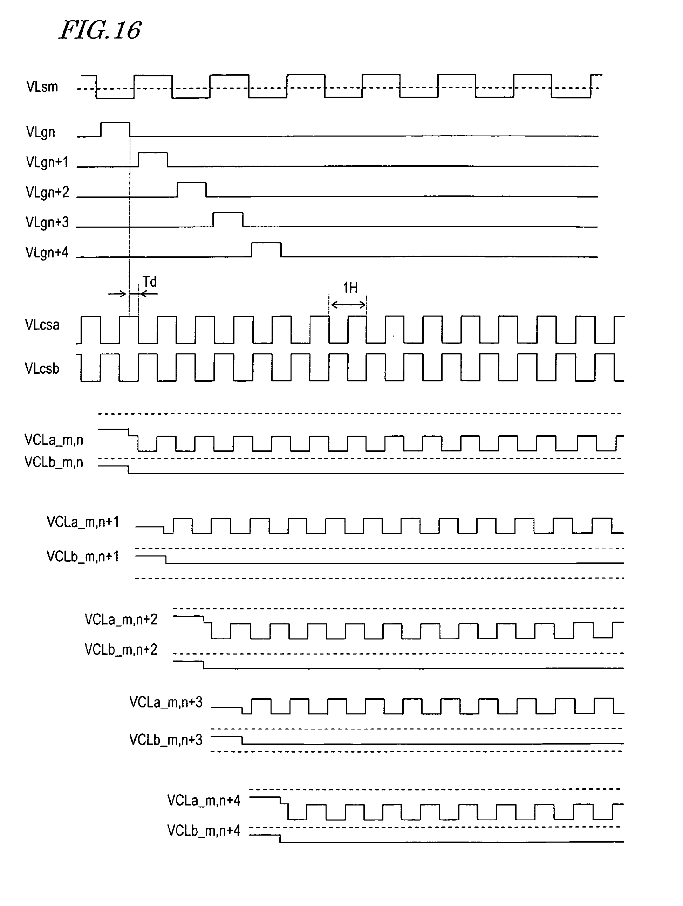

FIG. **16** shows the waveforms of voltages to be applied in the vertical scanning period (which may be a field period or a frame period) that follows the one shown in FIG. **15.**

Comparing FIGS. **15** and **16** to each other, it can be seen that the polarity of the source signal voltage supplied to the source line **Ls** has inverted from that in the previous vertical scanning period, thus minimizing the image persistence on the display screen. Also, the phase of the storage capacitor signal voltage supplied to the CS lines **Lcsa** and **Lcsb** has also inverted from that in the previous vertical scanning period. Since the polarity of the source signal voltage and the phase of the storage capacitor signal voltage have both inverted in this manner, the subpixels **Spa** and **Spb** also become a bright subpixel and a dark subpixel, respectively, in this vertical scanning period.

In the foregoing description, the storage capacitor signal supplied to a CS line is supposed to be an oscillation voltage including a rectangular wave with a duty ratio of one to one. However, this is just an example of the present invention. Alternatively, any other oscillation voltage such as a rectangular wave, of which the duty ratio is not one to one, a sinusoidal wave or a triangular wave may also be used. In any case, after a TFT connected to multiple subpixels has turned OFF, voltages applied to the respective storage capacitor counter electrodes of those subpixels just need to change and the magnitude of that change has only to be different from one subpixel to another.

In the example that has just been described with reference to FIGS. **15** and **16,** two different storage capacitor signals, of which one period of oscillation is 1H, are supposed to be supplied to two storage capacitor trunk lines. However, this is just an example of the present invention. Alternatively, four different storage capacitor signals, of which one period of oscillation is 8H, may be supplied to four storage capacitor trunk lines. Still alternatively, six different storage capacitor signals, of which one period of oscillation is 12H, may be supplied to six storage capacitor trunk lines. Speaking more generally, N different storage capacitor signals, of which one period of oscillation is $(2 \times N) \times K \times H$ (where K is a positive integer), may be supplied to N storage capacitor trunk lines (where N is an even number that is equal to or greater than two).

(EMBODIMENT 6)

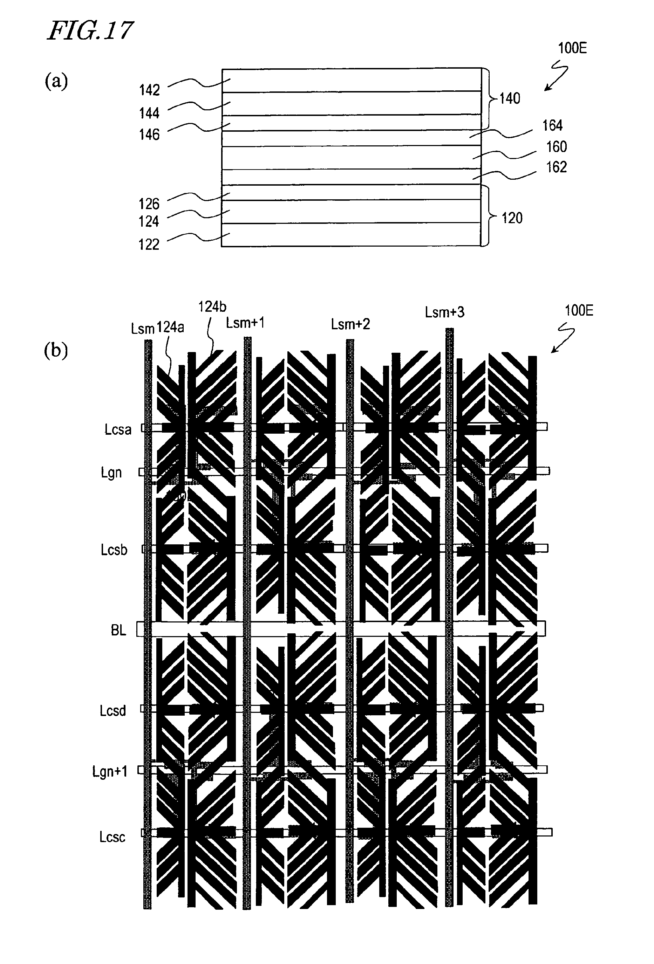

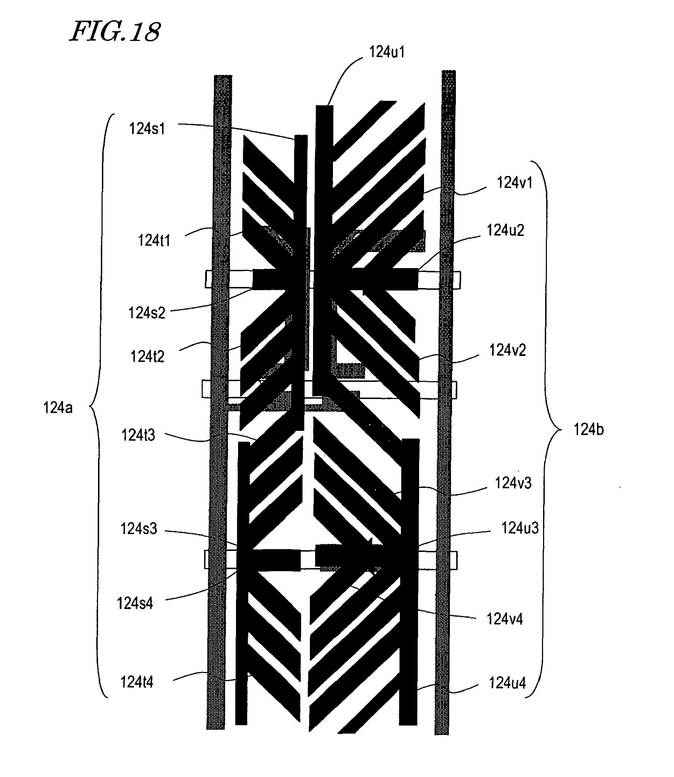

Hereinafter, a sixth embodiment of a liquid crystal display device according to the present invention will be described with reference to FIGS. **17** and **18.**

FIG. **17(a)** schematically illustrates a liquid crystal display device **100E** according to this embodiment. The liquid crystal display device **100E** of this embodiment has the same configuration as the liquid crystal display device described above except that an alignment sustaining layer is further provided and that the pixel electrodes have a fine line slit structure. Thus, their common features will not be described all over again to avoid redundancies.

The liquid crystal display device **100E** includes an active-matrix substrate **120,** a counter substrate **140,** and a liquid crystal layer **160.** The active-matrix substrate **120** includes an insulating substrate **122,** pixel electrodes **124** and an alignment film **126.** The counter substrate **140** includes a transparent insulating substrate **142,** a counter electrode **144** and an alignment film **146.** The liquid crystal display device **100E** further includes an alignment sustaining layer **162** between the alignment film **126** and the liquid crystal layer **160** and another alignment sustaining layer **164** between the alignment film **146** and the liquid crystal layer **160.** Although each of the alignment sustaining layers **162** and **164** is illustrated in FIG. **17(a)** as a film that covers the entre surface of the alignment film **126, 146,** the alignment sustaining layers **162** and **164** do not have to cover the entire surface of the alignment films **126** and **146** but may also be made up of island portions. These alignment sustaining layers **162** and **164** are formed by the polymer sustained alignment technology (which will be referred to herein as "PSA technology") and such a liquid crystal display device **100E** is called a "PSA mode device".

The PSA technology is disclosed in Japanese Laid-Open Patent Publications No. 2002-357830, No. 2003-177418, and No. 2006-78968 and by K. Hanaoka et al in "A New MVA-LCD by Polymer Sustained Alignment Technology", SID 04 DIGEST 1200-1203 (2004), for example. The entire disclosures of all of these four documents are hereby incorporated by reference.

According to the PSA technology, a small amount of a polymerizable compound (such as a photopolymerizable monomer or oligomer) is introduced into the liquid crystal material, and the polymerizable material is irradiated with an active energy ray (such as an ultraviolet ray) with a predetermined voltage applied to the liquid crystal layer after the liquid crystal cell has been assembled, thereby controlling the pretilt direction of liquid crystal molecules with the polymer thus produced. The alignment state of the liquid crystal molecules when the polymer is produced is sustained (i.e., memorized) even after the voltage is removed (i.e., no longer applied). A layer of such a polymer will be referred to herein as an "alignment sustained layer". The alignment sustained layer is formed on the surface of an alignment film (i.e., to face the liquid crystal layer). However, the alignment sustained layer does not always have to be a film that covers the entire surface of the alignment film but may also be a layer in which particles of the polymer are present discretely.

According to the PSA technology, by controlling the electric field generated in the liquid crystal layer, the pretilt direction and pretilt angle of liquid crystal molecules can be adjusted, which is beneficial. In addition, the alignment sustained layer can exert the alignment control force on almost the entire surface that contacts with the liquid crystal layer. As a result, the PSA-mode liquid crystal display device achieves a good response characteristic, which is also advantageous.

FIG. **17(b)** is a schematic top view of the liquid crystal display device **100E.** One pixel of the liquid crystal display device **100E** is schematically illustrated in FIG. **18** on a larger scale. Even though subpixel electrodes **124a** and **124b** with the fine line slit structure are illustrated in detail in FIGS. **17(b)** and **18,** these schematic representations would be the same as what is illustrated in FIG. **12,** and the equivalent circuit of the liquid crystal display device **100E** would be the same as what is shown in FIG. **11,** were it not for the subpixel electrodes **124a** and **124b.**

In this liquid crystal display device **100E,** the subpixel **Spa** includes a storage capacitor electrode **EC** which is electrically connected to the drain of the TFT **130a** and the subpixel electrode **124a.** A storage capacitor counter electrode **EO,** which forms a storage capacitor along with the storage capacitor electrode **EC,** is electrically connected to the storage capacitor line **Lcs.** The subpixel **Spb** includes a storage capacitor electrode **ECb1** which is electrically connected to the drain of the TFT **130b** and the subpixel electrode **124b,** and also includes a storage capacitor electrode **ECb2** which is electrically connected to the subpixel electrode **124b.**

The drain of the TFT **130a** is electrically connected to the storage capacitor electrode **EC** via the drain electrode **Ed.** The subpixel electrode **124a** is electrically connected to the storage capacitor electrode **EC** through a contact hole that has been cut through the insulating layer. The storage capacitor electrode **EC** is arranged so as to overlap with the CS line **Lcsa,** and a storage capacitor is formed between the storage capacitor electrode **EC** and the CS line **Lcsa.**

The drain of the TFT **130b** is electrically connected to the storage capacitor electrode **ECb1** and the subpixel electrode **124b** via the drain electrode **Edb.** The storage capacitor electrode **ECb1** is arranged so as to overlap with the CS line **Lcsa,** and a storage capacitor **CCb1** is formed between the storage capacitor electrode **ECb1** and the CS line **Lcsa.** On the other hand, the storage capacitor electrode **ECb2** which is electrically connected to the subpixel electrode **124b** via an insulating layer is arranged so as to overlap with the CS line **Lcsb,** and a storage capacitor **CCb2** is formed between the storage capacitor electrode **ECb2** and the CS line **Lcsb.**

As shown in FIGS. **17(b)** and **18,** in this liquid crystal display device **100E,** the subpixel electrode **124a** includes trunk portions **124s1** through **124s4** which are arranged to run parallel to the polarization axes of the two polarizers, and a plurality of branch portions **124t1** through **124t4** which run obliquely with respect to the trunk portions **124s1** through **124s4.** Meanwhile, the subpixel electrode **124b** includes trunk portions **124u1** through **124u4** which are arranged to run parallel to the polarization axes of the two polarizers, and a plurality of branch portions **124v1** through **124v4** which run obliquely with respect to the trunk portions **124u1** through **124u4.**

Specifically, the trunk portions **124s1, 124s3, 124u1** and **124u3** run in the column direction, while the trunk portions **124s2, 124s2, 124u2** and **124u4** run in the row direction. The branch portions **124t1** and **124t2** run in 135 degree and 225 degree directions, respectively, with respect to the trunk portions **124s1** and **124s2.** And the branch portions **124t3** and **124t4** run in 45 degree and 315 degree directions, respectively, with respect to the trunk portions **124s3** and **124s4.** In this case, the counterclockwise direction with respect to the horizontal (i.e., lateral) direction of the display screen (or the paper of the drawings) is positive (e.g., supposing the three o'clock direction defines an azimuthal angle of 0 degrees and the counterclockwise direction is positive if the display screen is compared to the face of a clock). The branch portions **124v1** and **124v2** run in 45 degree and 135 degree directions, respectively, with respect to the trunk portions **124u1** and **124u2.** And the branch portions **124v3** and **124v4** run in 135 degree and 225 degree directions, respectively, with respect to the trunk portions **124u3** and **124u4.**

The trunk portion **124s1** is electrically connected to the trunk portion **124s3** via the branch portion **124t3.** The trunk portion **124u1** is electrically connected to the trunk portion **124u3** via the branch portion **124v2.** These trunk portions **124s1** and **124u1** are arranged adjacent to each other. And the trunk portions **124s2** and **124u2** are respectively adjacent to the trunks **124u3** and **124s3** of other pixels that are adjacent to them in the row direction.

Under the oblique electric fields generated by the trunk portions **124s1** through **124u4** and the branch portions **124t1** through **124v4,** the liquid crystal molecules of the vertical alignment liquid crystal layer get tilted in the directions in which the branch portions **124t1** through **124v4** run. The reason is that the oblique electric field generated by the branch portions **124t1** through **124v4** that run parallel to each other causes the liquid crystal molecules to tilt perpendicularly to the direction in which the branch portions **124t1** through **124v4** run, and that the oblique electric field generated by the trunk portions **124s1** through **124u4** causes the liquid crystal molecules to tilt in the direction in which the branch portions **124t1** through **124v4** run. By adopting the PSA technology, the alignment of the liquid crystal molecules induced when a voltage is applied to the liquid crystal layer can get stabilized. In this liquid crystal display device **100E,** the CS line **Lcs** is arranged so as to overlap with the boundary between different liquid crystal domains. As a result, a substantial decrease in aperture ratio can be minimized.

As described above, in the liquid crystal display device **100E** with the fine line slit structure, the subpixel **Spb** has two storage capacitors **CCb1** and **CCb2.** However, this is just an example of the present invention. Optionally, the subpixel **Spb** may have no storage capacitors and the equivalent circuit of the liquid crystal display device with the fine line slit structure may be the same as what is shown in FIG. 5 or 7.

(EMBODIMENT 7)

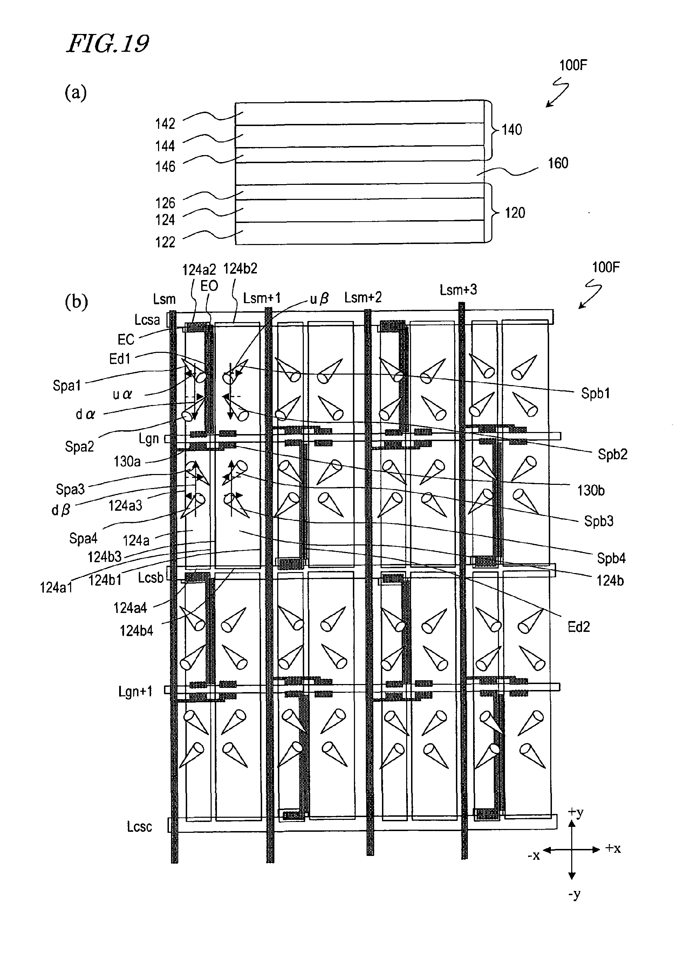

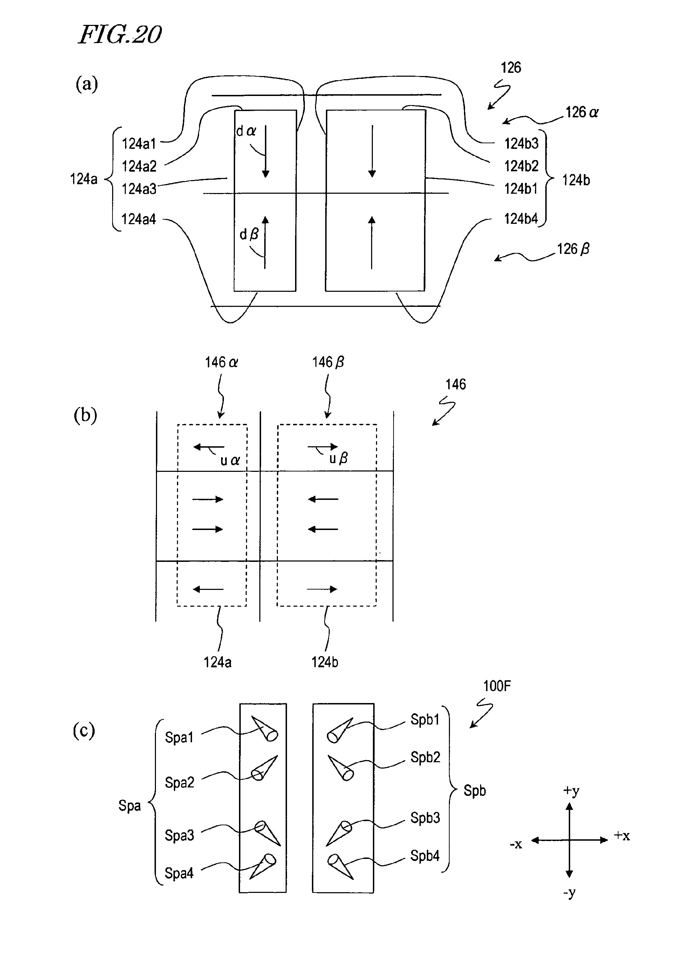

Hereinafter, a seventh embodiment of a liquid crystal display device according to the present invention will be described with reference to FIGS. **19** and **20.** The liquid crystal display device **100F** of this embodiment has the same configuration as the liquid crystal display device described above except that the alignment film gives pretilt to the liquid crystal molecules. Thus, their common features will not be described all over again to avoid redundancies. For example, the equivalent circuit of the liquid crystal display device **100F** may be the same as what is shown in FIG. **14.**

FIG. **19(a)** schematically illustrates the liquid crystal display device **100F.** In the liquid crystal display device **100F,** the active-matrix substrate **120** includes an alignment film **126** that covers pixel electrodes **124** on an insulating substrate **122,** while the counter substrate **140** includes an alignment film **146** that covers a counter electrode **144** on a transparent insulating substrate **142.** In this example, the alignment films **126** and **146** are obtained by treating the surface of a vertical alignment film so that the liquid crystal molecules have a pretilt angle of less than 90 degrees. The pretilt angle is the angle defined between the principal surface of the alignment films **126** and **146** and the major axis of the liquid crystal molecules that is defined in the pretilt direction. These alignment films **126** and **146** define the pretilt direction of the liquid crystal molecules.

Examples of known methods for forming such an alignment film include subjecting the alignment film to a rubbing treatment or an optical alignment treatment, by forming a microstructure on an undercoat film for each alignment film and transferring the pattern of the microstructure onto the surface of the alignment film, or by evaporating obliquely an inorganic material such as SiO on an alignment film to define a microstructure thereon. Considering its mass productivity, however, either the rubbing treatment or the optical alignment treatment is preferred. Among other things, the optical alignment treatment is particularly preferred to increase the yield because that treatment is a non-contact method and generates no static electricity due to friction unlike the rubbing treatment. Also, as described in PCT International Application Publication No. 2006/121220, by using an optical alignment film including a photosensitive group, the variation in pretilt angle can be reduced to one degree or less. It is recommended that the optical alignment film includes at least one photosensitive group selected from the group consisting of a 4-chalcone group, a 4'-chalcone group, a coumarin group, and a cinnamoyl group.

The liquid crystal layer **160** is a vertical alignment type and has liquid crystal molecules with negative dielectric anisotropy. By applying these alignment films **126** and **146,** liquid crystal molecules that are located near the alignment films **126** and **146** slightly tilt with respect to a normal to the principal surface of the alignment films. In this example, the liquid crystal layer **160** has no chiral agent. Thus, when a voltage is applied to the liquid crystal layer **160,** the liquid crystal molecules in the liquid crystal layer **160** come to have a twisted alignment under the alignment control force of the alignment films **126** and **146.** If necessary, however, a chiral agent may be added to the liquid crystal layer **160.**

FIG. **19(b)** schematically illustrates the liquid crystal display device **100F.** In FIG. **19(b),** illustration of the counter substrate **140** is omitted to avoid an overly complicated drawing. FIG. **19(b)** corresponds to a top view of the active-matrix substrate **120.**

The liquid crystal display device **100F** typically includes alignment films **126** and **146** that have regions to make the pretilt directions of the liquid crystal molecules antiparallel to each other. And those alignment films **126** and **146** are arranged so that the pretilt directions of each pair of opposing regions intersect with each other substantially at right angles. In the vicinity of the alignment films **126** and **146,** the liquid crystal molecules slightly tilt with respect to a normal to the principal surface of the alignment films **126** and **146.** Also, in the liquid crystal display device **100F,** the gate lines **Lg** are arranged so as to overlap with the boundary between multiple different liquid crystal domains.

FIG. **19(b)** schematically indicates the alignment directions of the liquid crystal molecules as viewed by the viewer. Also, in FIG. **19(b),** the circular conical liquid crystal molecules tilt so that their (substantially round) bottom points at the viewer. The liquid crystal molecules tilt just slightly with respect to a normal to the principal surface of the alignment films **126** and **146** (i.e., have relatively large tilt angles). As described above, the pretilt angle may fall within the range of 85 degrees to less than 90 degrees.

In this liquid crystal display device **100F,** four liquid crystal domains are arranged in line in the column direction in the subpixel **Spa.** In the following description, those four liquid crystal domains will be referred to herein as the first, second, third and fourth liquid crystal domains **Spa1, Spa2, Spa3** and **Spa4,** respectively, of the subpixel **Spa** in this order from the +y direction toward the -y direction. In the same way, in the subpixel **Spb,** four liquid crystal domains are also arranged in line in the column direction. In the following description, those four liquid crystal domains will be referred to herein as the first, second, third and fourth liquid crystal domains **Spb1, Spb2, Spb3** and **Spb4,** respectively, of the subpixel **Spb** in this order from the +y direction toward the -y direction.

In each of the subpixels **Spa** and **Spb,** the liquid crystal molecules located at the respective centers of the four liquid crystal domains **Spa1** through **Spa4, Spb1** through **Spb4** have mutually different alignment directions. The alignment direction of the liquid crystal molecules located at the center of the first through fourth liquid crystal domains **Spa1** through **Spa4, Spb1** through **Spb4** becomes an intermediate direction between the two pretilt directions of liquid crystal molecules defined by the alignment films **126** and **146.** In the following description, the alignment direction of liquid crystal molecules at the center of a liquid crystal domain will be referred to herein as a "reference alignment direction" and the azimuthal component of the reference alignment direction that points forward (i.e., from the rear side toward the front side along the major axis of liquid crystal molecules), which is defined by projecting the reference alignment direction onto the principal surface of the alignment film **126** or **146,** will be referred to herein as a "reference alignment azimuth". The reference alignment azimuth is characteristic of its associated liquid crystal domain and has dominant influence on the viewing angle characteristic of that liquid crystal domain. Supposing the counterclockwise direction with respect to the horizontal (i.e., lateral) direction of the display screen (or the paper of the drawings) is positive (e.g., supposing the three o'clock direction defines an azimuthal angle of 0 degrees and the counterclockwise direction is positive if the display screen is compared to the face of a clock), the reference alignment azimuths of the first through fourth liquid crystal domains are defined so that the difference between any two of those four directions becomes substantially an integral multiple of 90 degrees. Specifically, the reference alignment azimuths of the first through fourth liquid crystal domains **Spa1, Spa2, Spa3** and **Spa4** of the subpixel **Spa** may be 315, 225, 135 and 45 degrees, respectively, and the reference alignment azimuths of the first through fourth liquid crystal domains **Spb1, Spb2, Spb3** and **Spb4** of the subpixel **Spb** may be 225, 315, 45 and 135 degrees, respectively. In the liquid crystal display device **100F,** in each of the subpixels **Spa** and **Spb,** two adjacent ones of the first through fourth liquid crystal domains have reference alignment azimuths that are different from each other by almost 90 degrees, and therefore, the disclination line can have a relatively small width.

The two polarizers that are arranged so as to face each other with the liquid crystal layer interposed between themselves are arranged so that their polarization axes (or transmission axes) cross each other at right angles (i.e., so that one of the two axes is parallel to the horizontal direction and the other is parallel to the vertical direction). Unless otherwise stated, the polarization axes of the polarizers are supposed to be arranged in this manner. Each of the four reference alignment azimuths of the four liquid crystal domains described above defines an angle of substantially 45 degrees with respect to the polarization axis directions of the two polarizers.

FIG. **20(a)** is a schematic representation showing the tilt directions of liquid crystal molecules in the vicinity of the alignment film **126** in the liquid crystal display device **100F.** FIG. **20(b)** is a schematic representation showing the tilt directions of liquid crystal molecules in the vicinity of the alignment film **146.** And FIG. **20(c)** is a schematic representation showing the alignment directions of the liquid crystal domains of the subpixels **Spa** and **Spb.**

In FIG. **20(a),** the arrows $\mathbf{d}\alpha$ and $\mathbf{d}\beta$ indicate the tilt directions of liquid crystal molecules in the vicinity of the alignment film **126** with respect to a normal to the principal surface of the alignment film **126** when viewed from over the principal surface of the alignment film **126.** The alignment film **126** has a region **126**$\alpha$ that gives neighboring liquid crystal molecules a pretilt toward the -y direction with respect to a normal to the principal surface and a region **126**$\beta$ that gives neighboring liquid crystal molecules a pretilt toward the +y direction with respect to a normal to the principal surface. Check out the relation between the subpixel electrodes **124a** and **124b** and the alignment film **126,** and it can be seen that the region **126**$\alpha$ is arranged so as to overlap with respective portions of the subpixel electrodes **124a** and **124b** in the +y direction and that the region **126**$\beta$ is arranged so as to overlap with respective portions of the subpixel electrodes **124a** and **124b** in the -y direction.

It should be noted that the subpixel electrode **124a** is a rectangular one and has four edges **124a1** through **124a4.** The edges **124a1** and **124a3** run in the y direction, while the edges **124b2** and **124b4** run in the x direction. Likewise, the subpixel electrode **124b** is also a rectangular one and has four edges **124b1** through **124b4.** The edges **124b1** and **124b3** run in the y direction, while the edges **124b2** and **124b4** run in the x direction.

In FIG. **20(b),** the arrows $\mathbf{u}\alpha$ and $\mathbf{u}\beta$ indicate the tilt directions of liquid crystal molecules in the vicinity of the alignment film **146** with respect to a normal to the principal surface of the alignment film **146** when viewed from over the principal surface of the alignment film **146.** In FIG. **20(b),** the subpixel electrodes **124a** and **124b** are indicated by the dotted lines.

The alignment film **146** has a region **146**$\alpha$ that gives neighboring liquid crystal molecules a pretilt toward the -x direction with respect to a normal to the principal surface and a region **146**$\beta$ that gives neighboring liquid crystal molecules a pretilt toward the +x direction with respect to a normal to the principal surface. Check out the relation between the subpixel electrode **124a** and the alignment film **146,** and it can be seen that the region **146**$\alpha$ is arranged so as to overlap with an end portion of the subpixel electrode **124a** and that the region **146**$\beta$ is arranged between the regions **146**$\alpha$. Meanwhile, check out the relation between the subpixel electrode **124b** and the alignment film **146,** and it can be seen that the region **146**$\beta$ is arranged so as to overlap with an end portion of the subpixel electrode **124b** and that the region **146**$\alpha$ is arranged between the regions **146**$\beta$.

The alignment films **126** and **146** may be formed in the following manner, for example. Specifically, after an optical alignment film material has been deposited, the alignment film is irradiated with a plane polarized light ray from a particular direction that tilts with respect to a normal to the principal surface of the alignment film with a predetermined region masked with a photomask. Thereafter, the photomask is shifted by a predetermined distance with respect to the alignment film and the alignment film is irradiated with a plane polarized light ray again from a direction that tilts antiparallel with respect to a normal to the principal surface of the alignment film with another region masked. If a certain material is used as the optical alignment film material, then the liquid crystal molecules in the vicinity of the alignment films **126** and **146** will tilt parallel to the incoming direction of an ultraviolet ray. On the other hand, if another material is used as the optical alignment film material, then the liquid crystal molecules in the vicinity of the alignment films **126** and **146** will tilt perpendicularly to the incoming direction of the ultraviolet ray. In this liquid crystal display device **100F,** the lengths of the regions **126**$\alpha$ and **126**$\beta$ of the alignment film **126** as measured in the column direction are a half of the length of the pixel as measured in the column direction and those regions **126**$\alpha$ and **126**$\beta$ are relatively long. That is why the optical alignment treatment can get done using an exposure mask that can be made relatively easily.

FIG. **20(c)** schematically shows the alignment directions of liquid crystal molecules in the first through fourth liquid crystal domains **Spa1** through **Spa4** of the subpixel **Spa** and in the first through fourth liquid crystal domains **Spb1** through **Spb4** of the subpixel **Spb** as viewed from the viewer side. As for the subpixel **Spa,** a portion interposed between the region **126**$\alpha$ of the alignment film **126** and the region **146**$\alpha$ of the alignment film **146** becomes a first liquid crystal domain **Spa1;** a portion interposed between the regions **126**$\alpha$ and **146**$\beta$ becomes a second liquid crystal domain **Spa2;** a portion interposed between the regions **126**$\beta$ and **146**$\beta$ becomes a third liquid crystal domain **Spa3;** and a portion interposed between the regions **126**$\beta$ and the **146**$\alpha$ becomes a fourth liquid crystal domain **Spa4.** As for the subpixel **Spb,** on the other hand, a portion interposed between the region **126**$\alpha$ of the alignment film **126** and the region **146**$\beta$ of the alignment film **146** becomes a first liquid crystal domain **Spb1;** a portion interposed between the region **126**$\alpha$ of the alignment film **126** and the region **146**$\alpha$ of the alignment film **146** becomes a second liquid crystal domain **Spb2;** a portion interposed between the region **126**$\beta$ of the alignment film **126** and the region **146**$\alpha$ of the alignment film **146** becomes a third liquid crystal domain **Spb3;** and a portion interposed between the region **126**$\beta$ of the alignment film **126** and the region **146**$\beta$ of the alignment film **146** becomes a fourth liquid crystal domain **Spb4.** In each of the liquid crystal domains **Spa1** through **Spb4,** the tilt direction of the liquid crystal molecules in the regions **126**$\alpha$ and **126**$\beta$ is different by approximately 90 degrees from that of the liquid crystal molecules in the regions **146**$\alpha$ and **146**$\beta$.

Although the alignment direction of the liquid crystal molecules in the entire liquid crystal domain is represented by the reference alignment azimuth, the alignment direction of liquid crystal molecules in the vicinity of an edge (or a side) of the subpixel electrode is affected by an oblique electric field. Specifically, the oblique electric field generated in the vicinity of an edge of the subpixel electrode exerts an alignment control force, which has a directional component (i.e., a component of the azimuth angle direction) that crosses that edge at right angles and that points inward in the subpixel electrode, on the liquid crystal molecules. The edges of each subpixel electrode have two horizontally parallel edges and two vertically parallel edges. That is to say, each subpixel electrode has two edges that are parallel to one of the two axes of polarization of the pair of polarizers and two more edges that are parallel to the other axis of polarization. Optionally, the subpixel electrode may include not only those four edges but also an edge that is parallel to none of those edges.

If the reference alignment azimuth of a liquid crystal domain and the direction of the alignment control force exerted by the oblique electric field that has been generated in the vicinity of an edge of a subpixel electrode form an angle of over 90 degrees between them, then the alignment of liquid crystal molecules is disturbed in the vicinity of that edge. When the alignment of the liquid crystal molecules is disturbed in this manner, an area that should look darker than a middle grayscale to display when viewed straight on is produced inside of, and substantially parallel to, the edge of the subpixel electrode, and is observed as a dark line. As for such a dark line producing phenomenon, the entire disclosure of PCT International Application Publication No. 2006/132369 is hereby incorporated by reference.

In the subpixels **Spa** and **Spb** shown in FIG. **20 (c),** if in any of the edges **124a1** through **124a4** of the subpixel electrode **124a** and the edges **124b1** through **124b4** of the subpixel electrode **124b,** the direction of the alignment control force exerted by the oblique electric field that has been generated in the vicinity of that edge and the reference alignment azimuth of the first through fourth liquid crystal domains **Spa1** through **Spa4** and **Spb1** through **Spb4** form an angle of over 90 degrees between them, then a dark line is produced inside of, and substantially parallel to, that edge. It should be noted that the edges (that are parallel to each other either horizontally or vertically) and the reference alignment azimuth form an angle of more than 0 degrees and less than 90 degrees. In a display mode that uses the birefringence of the liquid crystal layer, the reference alignment azimuth needs to be defined so as not to be parallel to any of the polarization axes of the two polarizers that are arranged as crossed Nicols. Typically, the reference alignment azimuth defines an angle of approximately 45 degrees with respect to the directions of the polarization axes of the two polarizers as in this example.

Specifically, in the subpixel **Spa,** dark lines are produced inside of the edge **124a1** of the subpixel electrode **124a** in the liquid crystal domain **Spa1,** inside of the edge **124a3** of the subpixel electrode **124a** in the liquid crystal domain **Spa2,** inside of the edge **124a3** of the subpixel electrode **124a** in the liquid crystal domain **Spa3,** and inside of the edge **124a1** of the subpixel electrode **124a** in the liquid crystal domain **Spa4,** respectively. On the other hand, in the subpixel **Spb,** dark lines are produced inside of the edge **124b3** of the subpixel electrode **124b** in the liquid crystal domain **Spb1,** inside of the edge **124b1** of the subpixel electrode **124b** in the liquid crystal domain **Spb2,** inside of the edge **124b1** of the subpixel electrode **124b** in the liquid crystal domain **Spb3,** and inside of the edge **124b3** of the subpixel electrode **124b** in the liquid crystal domain **Spb4,** respectively.

In this liquid crystal display device **100F,** the drain electrode **Ed** that is connected to the drain of the TFT **130a** and the storage capacitor electrode **EC** associated with the CS line **Lcs** is used to make the dark line less sensible. Specifically, in the pixel **P** at the row n, column m position, the drain electrode **Ed1** is arranged so as to overlap with not only the gap between the subpixels **Spa** and **Spb** belonging to the same pixel **P** but also an inner portion of the edge **124a1** of the subpixel electrode **124a.** As a result, the dark line to be produced inside of the edge **124a1** of the subpixel electrode **124a** in the liquid crystal domain **Spa1** can be made less sensible. Also, in the pixel **P** at the row n, column m+1 position, the drain electrode **Ed2** that is connected to the drain of the TFT **130a** and the storage capacitor electrode **EC** is arranged so as to overlap with not only the gap between the subpixels **Spa** and **Spb** belonging to the same pixel **P** but also an inner portion of the edge **124a1** of the subpixel electrode **124a.** As a result, the dark line to be produced inside of the edge **124a1** of the subpixel electrode **124a** in the liquid crystal domain **Spa4** can be made less sensible. In this manner, in the subpixel **Spa,** the drain electrodes **Ed1** and **Ed2** that connect the drain of the TFT **130a** and the storage capacitor electrode **EC** are arranged so as to overlap with an inner portion of the edge **124a1** of the subpixel electrode **124a,** and therefore, the dark lines can be made much less sensible.

(EMBODIMENT 8)

In the liquid crystal display device 100F that has just been described with reference to FIGS. 19 and 20, regions with different pretilt directions are defined in two subpixels that are adjacent to each other in the row direction in one of the two alignment films thereof. However, this is just an example of the present invention.

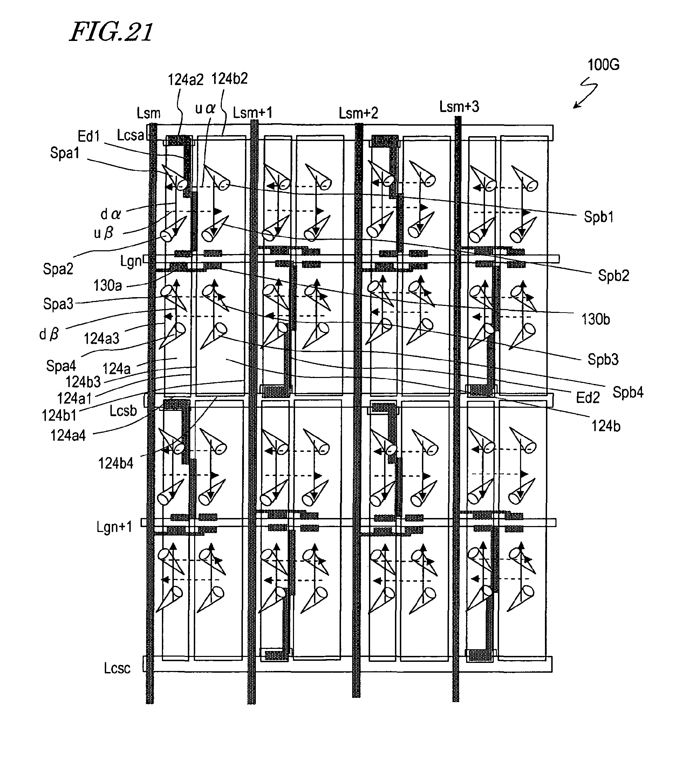

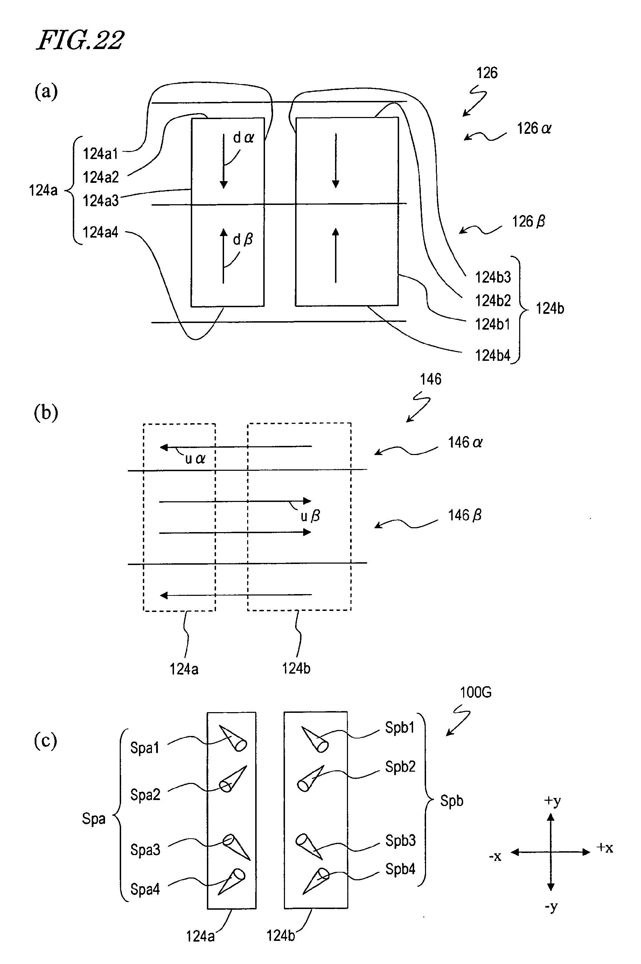

Hereinafter, an eighth embodiment of a liquid crystal display device according to the present invention will be described with reference to FIGS. 21 and 22. The liquid crystal display device 100G of this embodiment has the same configuration as the liquid crystal display device 100F described above except that an alignment region is defined to cover multiple adjacent subpixels continuously and that the drain electrode Ed is bent. Thus, their common features will not be described all over again to avoid redundancies. The equivalent circuit of the liquid crystal display device 100G may be the same as what is shown in FIG. 14, for example.

FIG. 21 schematically illustrates the liquid crystal display device 100G of this embodiment. In the pixel P at the row n, column m position, the drain electrode **Ed1** is bent so as to overlap with an inner portion of the edge **124a1** of the liquid crystal domain **Spa1** but not to overlap with an inner portion of the edge **124a1** of the liquid crystal domain **Spa2.** On the other hand, in the pixel P at the row n+1, column m position, the drain electrode Ed2 is bent so as to overlap with an inner portion of the edge **124a1** of the liquid crystal domain **Spa4** but not to overlap with an inner portion of the edge **124a1** of the liquid crystal domain **Spa3.**

FIG. **22(a)** is a schematic representation showing the tilt directions of liquid crystal molecules in the vicinity of the alignment film 126 in the liquid crystal display device 100G. FIG. 22(b) is a schematic representation showing the tilt directions of liquid crystal molecules in the vicinity of the alignment film 146. And FIG. 22(c) is a schematic representation showing the alignment directions of the liquid crystal domains of the subpixels **Spa** and **Spb.**

In FIG. **22(a),** the arrows **d**$\alpha$ and **d**$\beta$ indicate the tilt directions of liquid crystal molecules in the vicinity of the alignment film **126** with respect to a normal to the principal surface of the alignment film **126** when viewed from over the principal surface of the alignment film **126.** The alignment film **126** has a region **126**$\alpha$ that gives neighboring liquid crystal molecules a pretilt toward the -y direction with respect to a normal to the principal surface and a region **126**$\beta$ that gives neighboring liquid crystal molecules a pretilt toward the +y direction with respect to a normal to the principal surface. The region **126**$\alpha$ is arranged so as to overlap with respective portions of the subpixel electrodes **124a** and **124b** in the +y direction and the region **126**$\beta$ is arranged so as to overlap with respective portions of the subpixel electrodes **124a** and **124b** in the -y direction.

In FIG. **22(b),** the arrows **u**$\alpha$ and **u**$\beta$ indicate the tilt directions of liquid crystal molecules in the vicinity of the alignment film **146** with respect to a normal to the principal surface of the alignment film **146** when viewed from over the principal surface of the alignment film **146.** In FIG. **22(b),** the subpixel electrodes **124a** and **124b** are indicated by the dotted lines.

The alignment film **146** has a region **146**$\alpha$ that gives neighboring liquid crystal molecules a pretilt toward the -x direction with respect to a normal to the principal surface and a region **146**$\beta$ that gives neighboring liquid crystal molecules a pretilt toward the +x direction with respect to a normal to the principal surface. Check out the relation between the subpixel electrodes **124a, 124b** and the alignment film **146,** and it can be seen that the region **146**$\alpha$ is arranged so as to overlap with respective end portions of the subpixel electrodes **124a, 124b** and that the region **146**$\beta$ is arranged between the regions **146**$\alpha$.

In this liquid crystal display device **100G,** the region **146**$\alpha$ is arranged to cover the subpixel electrodes **124a** and **124b** continuously and the region **146**$\beta$ is arranged to cover the subpixel electrodes **124a** and **124b** continuously, unlike the liquid crystal display device **100F** described above. That is why when the alignment film **146** is formed through an optical alignment treatment, the alignment treatment can be performed using an exposure mask that can be made relatively easily.

In this liquid crystal display device **100G,** dark lines are produced, too. Specifically, in the subpixel **Spa,** dark lines are produced inside of the edge **124a1** of the subpixel electrode **124a** in the liquid crystal domain **Spa1,** inside of the edge **124a3** of the subpixel electrode **124a** in the liquid crystal domain **Spa2,** inside of the edge **124a3** of the subpixel electrode **124a** in the liquid crystal domain **Spa3,** and inside of the edge **124a1** of the subpixel electrode **124a** in the liquid crystal domain **Spa4,** respectively. On the other hand, in the subpixel **Spb,** dark lines are produced inside of the edge **124b1** of the subpixel electrode **124b** in the liquid crystal domain **Spb1,** inside of the edge **124b3** of the subpixel electrode **124b** in the liquid crystal domain **Spb2,** inside of the edge **124b3** of the subpixel electrode **124b** in the liquid crystal domain **Spb3,** and inside of the edge **124b1** of the subpixel electrode **124b** in the liquid crystal domain **Spb4,** respectively.

In this liquid crystal display device **100G,** the drain electrode **Ed** that is connected to the drain of the TFT **130a** and the storage capacitor electrode **EC** associated with the CS line **Lcs** is used to make the dark line less sensible. Specifically, in the pixel **P** at the row n, column m position, the drain electrode **Ed1** is arranged so as to overlap with an inner portion of the edge **124a1** of the subpixel electrode **124a** in the liquid crystal domain **Spa1** and the gap between the subpixel electrodes **124a** and **124b** in the liquid crystal domain **Spa2.** As a result, the dark line to be produced inside of the edge **124a1** of the subpixel electrode **124a** in the liquid crystal domain **Spa1** can be made less sensible.

Also, in the pixel **P** at the row n, column m+1 position, the drain electrode **Ed2** is arranged so as to overlap with an inner portion of the edge **124a1** of the subpixel electrode **124a** in the fourth liquid crystal domain **Spa4** and the gap between the subpixel electrodes **124a** and **124b** in the liquid crystal domain **Spa3.** As a result, the dark line to be produced inside of the edge **124a1** of the subpixel electrode **124a** in the liquid crystal domain **Spa4** can be made less sensible.

(EMBODIMENT 9)

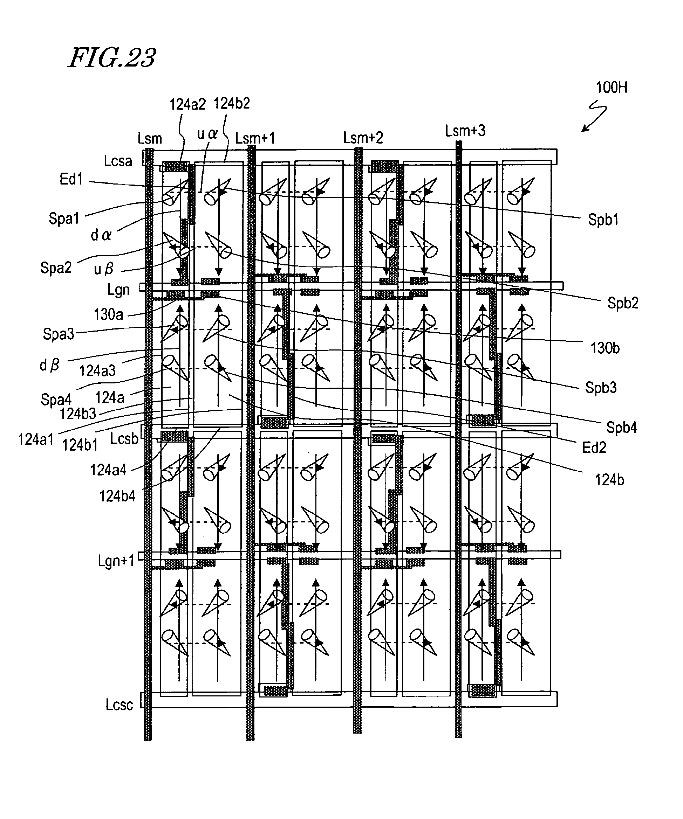

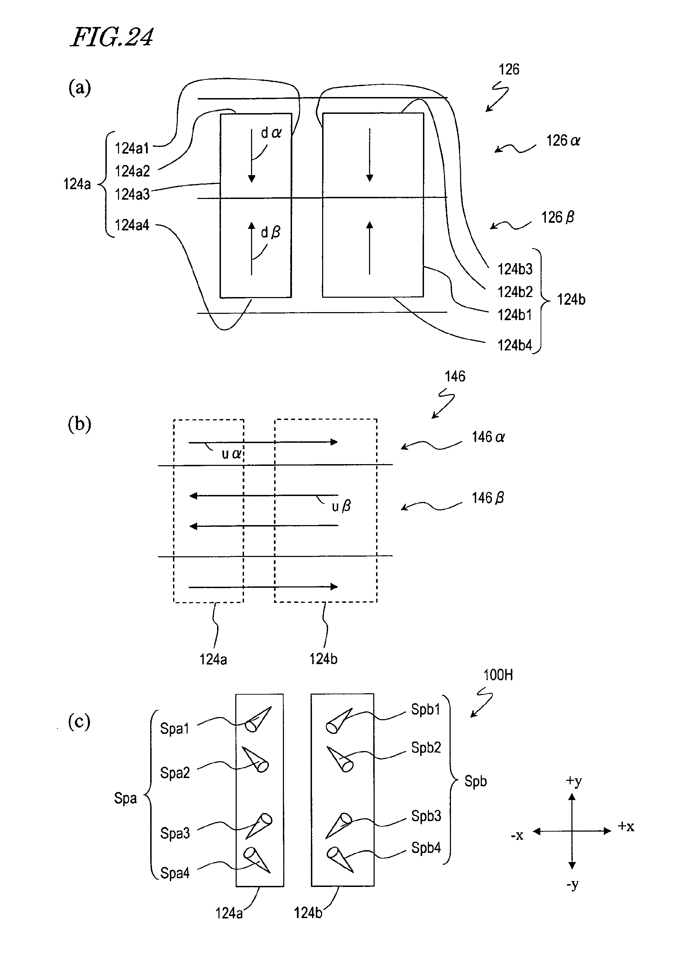

Hereinafter, a ninth embodiment of a liquid crystal display device according to the present invention will be described with reference to FIGS. **23** and **24.** FIG. **23** schematically illustrates a liquid crystal display device **100H** as the ninth embodiment of the present invention. The liquid crystal display device **100H** has the same configuration as the liquid crystal display device **100G** described above except that the drain electrode has a different shape and the liquid crystal domains are arranged differently. Thus, their common features will not be described all over again to avoid redundancies. The equivalent circuit of the liquid crystal display device **100H** may be the same as what is shown in FIG. **14,** for example.

In the pixel **P** at the row n, column m position, the drain electrode **Ed1** is bent so as to overlap with an inner portion of the edge **124a1** of the liquid crystal domain **Spa2** but not to overlap with an inner portion of the edge **124a1** of the liquid crystal domain **Spa1.** On the other hand, in the pixel **P** at the row n+1, column m position, the drain electrode **Ed2** is bent so as to overlap with an inner portion of the edge **124a1** of the liquid crystal domain **Spa3** but not to overlap with an inner portion of the edge **124a1** of the liquid crystal domain **Spa4.**

FIG. **24(a)** is a schematic representation showing the tilt directions of liquid crystal molecules in the vicinity of the alignment film **126** in the liquid crystal display device **100H.** FIG. **24(b)** is a schematic representation showing the tilt directions of liquid crystal molecules in the vicinity of the alignment film **146.** And FIG. **24(c)** is a schematic representation showing the alignment directions of the liquid crystal domains of the subpixels **Spa** and **Spb.**

In FIG. **24(a),** the arrows **d**$\alpha$ and **d**$\beta$ indicate the tilt directions of liquid crystal molecules in the vicinity of the alignment film **126** with respect to a normal to the principal surface of the alignment film **126** when viewed from over the principal surface of the alignment film **126.** The alignment film **126** has a region **126**$\alpha$ that gives neighboring liquid crystal molecules a pretilt toward the -y direction with respect to a normal to the principal surface and a region **126**$\beta$ that gives neighboring liquid crystal molecules a pretilt toward the +y direction with respect to a normal to the principal surface. The region **126**$\alpha$ is arranged so as to overlap with respective portions of the subpixel electrodes **124a** and **124b** in the +y direction and the region **126**$\beta$ is arranged so as to overlap with respective portions of the subpixel electrodes **124a** and **124b** in the -y direction.

In FIG. **24(b),** the arrows **u**$\alpha$ and **u**$\beta$ indicate the tilt directions of liquid crystal molecules in the vicinity of the alignment film **146** with respect to a normal to the principal surface of the alignment film **146** when viewed from over the principal surface of the alignment film **146.** In FIG. **24(b),** the subpixel electrodes **124a** and **124b** are indicated by the dotted lines.

The alignment film **146** has a region **146**$\alpha$ that gives neighboring liquid crystal molecules a pretilt toward the +x direction with respect to a normal to the principal surface and a region **146**$\beta$ that gives neighboring liquid crystal molecules a pretilt toward the -x direction with respect to a normal to the principal surface. Check out the relation between the subpixel electrodes **124a, 124b** and the alignment film **146,** and it can be seen that the regions **146**$\alpha$ and **146**$\beta$ are arranged alternately and that the region **146**$\alpha$ is arranged so as to overlap with respective end portions of the subpixel electrodes **124a, 124b** and that the region **146**$\beta$ is arranged between the regions **146**$\alpha$.

In this liquid crystal display device **100H,** the region **146**$\alpha$ is arranged to cover the subpixel electrodes **124a** and **124b** continuously and the region **146**$\beta$ is arranged to cover the subpixel electrodes **124a** and **124b** continuously, unlike the liquid crystal display device **100F** described above. That is why when the alignment film **146** is formed through an optical alignment treatment, the alignment treatment can be performed using an exposure mask that can be made relatively easily.

In this liquid crystal display device **100H,** dark lines are produced, too. Specifically, in the subpixel **Spa,** dark lines are produced inside of the edge **124a3** of the subpixel electrode **124a** in the liquid crystal domain **Spa1,** inside of the edge **124a1** of the subpixel electrode **124a** in the liquid crystal domain **Spa2,** inside of the edge **124a1** of the subpixel electrode **124a** in the liquid crystal domain **Spa3,** and inside of the edge **124a3** of the subpixel electrode **124a** in the liquid crystal domain **Spa4,** respectively. On the other hand, in the subpixel **Spb,** dark lines are produced inside of the edge **124b3** of the subpixel electrode **124b** in the liquid crystal domain **Spb1,** inside of the edge **124b1** of the subpixel electrode **124b** in the liquid crystal domain **Spb2,** inside of the edge **124b1** of the subpixel electrode **124b** in the liquid crystal domain **Spb3,** and inside of the edge **124b3** of the subpixel electrode **124b** in the liquid crystal domain **Spb4,** respectively.

In this liquid crystal display device **100H,** the drain electrode **Ed** that is connected to the drain of the TFT **130a** and the storage capacitor electrode **EC** associated with the CS line **Lcs** is used to make the dark line less sensible. Specifically, in the pixel **P** at the row n, column m position, the drain electrode **Ed1** is arranged so as to overlap with an inner portion of the edge **124a1** of the subpixel electrode **124a** in the liquid crystal domain **Spa2** of the subpixel **Spa** and the gap between the subpixel electrodes **124a** and **124b** in the liquid crystal domain **Spa1.** As a result, the dark line to be produced inside of the edge **124a1** of the subpixel electrode **124a** in the liquid crystal domain **Spa2** can be made less sensible.

Also, in the pixel **P** at the row n, column m+1 position, the drain electrode **Ed2** is arranged so as to overlap with an inner portion of the edge **124a1** of the subpixel electrode **124a** in the third liquid crystal domain **Spa3** of the subpixel **Spa** and the gap between the subpixel electrodes **124a** and **124b** in the liquid crystal domain **Spa4** of the subpixel **Spa.** As a result, the dark line to be produced inside of the edge **124a1** of the subpixel electrode **124a** in the liquid crystal domain **Spa3** can be made less sensible.

In the foregoing description, the drain electrode **Ed** is arranged so as to overlap with an inner portion of some of the edges of the subpixel electrode **124a** in order to hide the dark line that has been produced in the subpixel **Spa.** However, this is just an example of the present invention. Alternatively, the drain electrode **Ed** may also be arranged so as to overlap with an inner portion of some of the edges of the subpixel electrode **124b** in order to hide the dark line that has been produced in the subpixel **Spb.**

In the liquid crystal display devices **100F** through **100H** with the alignment films **126** and **146** to give a pretilt that have been described with reference to FIGS. **19** through **24,** the subpixel **Spb** has no storage capacitors. However, the present invention is in no way limited to those specific embodiments. Alternatively, the subpixel **Spb** may have two storage capacitors **CCb1** and **CCb2.** And the equivalent circuit of the liquid crystal display device with the alignment films **126** and **146** to give a pretilt may be the same as what is shown in FIG. **11.**

Furthermore, in the foregoing description, the active-matrix substrate **120** and the counter substrate **140** are provided with the alignment films **126** and **146,** respectively. However, this is only an example of the present invention. Alternatively, the alignment film **126** or **146** may be provided for only one of the active-matrix substrate **120** and the counter substrate **140.**

(EMBODIMENT 10)

In the liquid crystal display devices **100** through **100H** described above, the lengths of the subpixels **Spa** and **Spb** as measured in the column direction are supposed to be equal to each other and the subpixels **Spa** and **Spb** are supposed to be arranged in the row direction. However, this is just an example of the present invention.

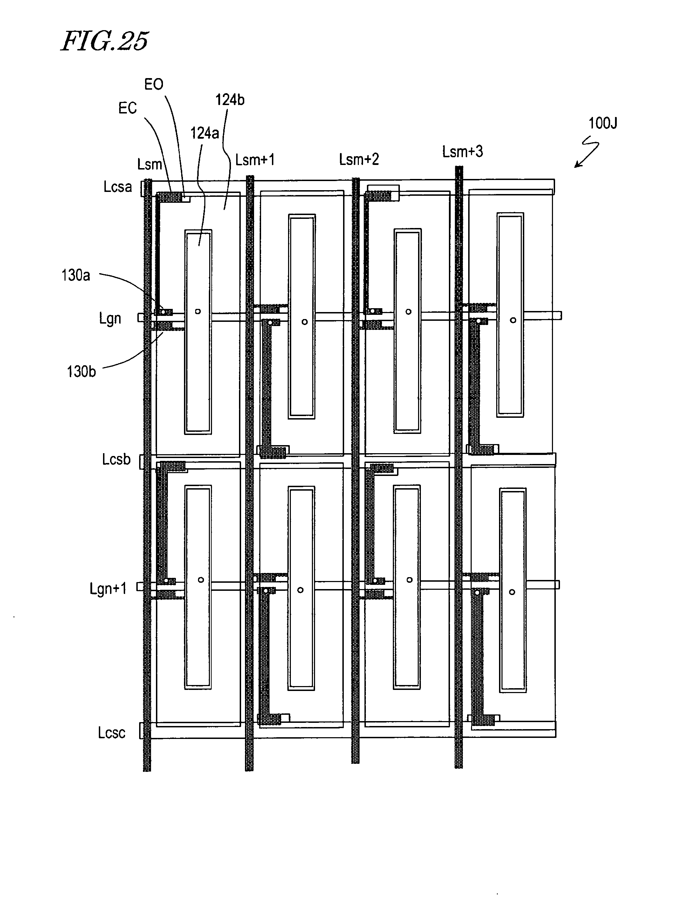

Hereinafter, a tenth embodiment of a liquid crystal display device according to the present invention will be described with reference to FIG. **25.** The liquid crystal display device **100J** of this embodiment has the same configuration as the liquid crystal display devices **100** through **100H** described above except that when measured in the column direction, the length of one of the subpixels **Spa** and **Spb** is different from that of the other. Thus, their common features will not be described all over again to avoid redundancies. The equivalent circuit of the liquid crystal display device **100J** may be the same as what is shown in FIG. **5.**

In this liquid crystal display device **100J,** the subpixel **Spb** is arranged so as to surround the subpixel **Spa.** That is why when measured in the column direction, the length of the subpixel **Spb** is greater than that of the subpixel **Spa.** In the liquid crystal display device **100J,** the length of each pixel **P** as measured in the column direction is defined by its subpixel **Spb.**

In this example, the subpixel **Spa** has a smaller area and a higher luminance than the subpixel **Spb.** In this liquid crystal display device **100J,** if the polarity of the pixel **P** is positive, the first change of the voltage supplied to the CS line **Lcs** after the TFTs **130a** and **130b** have turned OFF is increase. Conversely, if the polarity of the pixel **P** is negative, the first change of the voltage supplied to the CS line **Lcs** after the TFTs **130a** and **130b** have turned OFF is decrease.

In the example just described, the subpixel **Spb** surrounds the subpixel **Spa.** However, this is only an example of the present invention. Alternatively, the subpixel **Spa** may surround the subpixel **Spb.** In that case, if the luminance of the subpixel **Spa** is set to be lower than that of the subpixel **Spb,** then the viewing angle characteristic can be improved efficiently.

Also, in the liquid crystal display device **100J** described above, the subpixel **Spb** is supposed to have no storage capacitors. However, this is just an example of the present invention. Alternatively, the subpixel **Spb** may have two storage capacitors **CCb1** and **CCb2.** Optionally, in this liquid crystal display device **100J,** the subpixel electrodes **124a** and **124b** may have a fine-line slit structure. Or the liquid crystal display device **100J** may have alignment sustaining layers **162** and **164.** Still alternatively, in the alignment films **126** and **146** of the liquid crystal display device **100J,** the liquid crystal molecules may be given a pretilt.

Although liquid crystal display devices of various modes have been described in the foregoing description, any of those liquid crystal display devices **100** through **100J** may operate in a so-called "MVA mode". In an MVA mode liquid crystal display device, linear slits that have been cut through an electrode and linear dielectric projections (or ribs) that have been formed on the electrode to face the liquid crystal layer may be alternately arranged parallel to each other on a pair of substrates that face each other with a liquid crystal layer interposed between them when viewed along a normal to the substrate. In this manner, the director directions of liquid crystal domains to be produced when a voltage is applied thereto are controlled. In that case, the direction of a liquid crystal domain will intersect at right angles with the direction in which the linear slits or the dielectric projections (which will sometimes be collectively referred to herein as "linear structures") run.

Optionally, the liquid crystal display devices **100** through **100J** may operate in a CPA mode. In that case, the subpixel electrodes **124a** and **124b** may have a highly symmetric shape and the liquid crystal molecules in each liquid crystal domain may be aligned axisymmetrically with a tilt when a voltage is applied to the liquid crystal layer **160.**

Also, although the liquid crystal display devices **100** through **100J** are supposed to operate in a vertical alignment mode in the foregoing description, these are just an example of the present invention. Rather, the liquid crystal display device may operate in any other mode.

Furthermore, even though the subpixel electrodes **124a** and **124b** are supposed to be rectangular ones in the foregoing description, this is just an example of the present invention. Alternatively, the subpixel electrodes may also have any other shape.

## INDUSTRIAL APPLICABILITY

A liquid crystal display device according to the present invention achieves improved display quality.

## REFERENCE SIGNS LIST

| | |
|---|---|
| **100** | liquid crystal display device |
| **120** | active-matrix substrate |
| **122** | insulating substrate |
| **124** | pixel electrode |
| **140** | counter substrate |
| **142** | transparent insulating substrate |
| **144** | counter electrode |

## Claims

1. A liquid crystal display device comprising an active-matrix substrate, a counter substrate, and a liquid crystal layer which is interposed between the active-matrix substrate and the counter substrate,
   wherein the liquid crystal display device has a plurality of pixels which are arranged in columns and rows to form a matrix pattern,
   each of the plurality of pixels has a first subpixel and a second subpixel, and
   the length of each said pixel as measured in a column direction is defined by at least one of the first and second subpixels, and
   wherein the active-matrix substrate includes:

   a plurality of pixel electrodes, each of which includes first and second subpixel electrodes that define the first and second subpixels, respectively;
   a plurality of first thin-film transistors, each of which has a gate, a source and a drain that is electrically connected to the first subpixel electrode;
   a plurality of second thin-film transistors, each of which has a gate, a source and a drain that is electrically connected to the second subpixel electrode;
   a plurality of gate lines, each of which is electrically connected to the respective gates of the first and second thin-film transistors;
   a plurality of source lines, each of which is electrically connected to the respective sources of the first and second thin-film transistors;
   a plurality of storage capacitor electrodes, each of which is electrically connected to the first subpixel electrode and the drain of the first thin-film transistor; and
   a plurality of storage capacitor lines, each of which is electrically connected to at least one of a plurality of storage capacitor counter electrodes that form storage capacitors with the plurality of storage capacitor electrodes, and

   wherein the counter substrate has a counter electrode, and
   wherein after the first and second thin-film transistors that have been in OFF state have turned ON in an arbitrary one of the pixels, an average potential of the first subpixel electrode has varied from a potential corresponding to a source signal voltage that was supplied to the source line when the first and second thin-film transistors were ON, while an average potential of the second subpixel electrode corresponds to the source signal voltage that was supplied to the source line when the first and second thin-film transistors were ON.

**2.** The liquid crystal display device of claim 1, wherein the plurality of storage capacitor lines include a first storage capacitor line, which is associated with the first subpixel of one pixel in two of the pixels that are adjacent to each other in the row direction, and a second storage capacitor line, which is associated with the first subpixel of the other pixel.

**3.** The liquid crystal display device of claim 2, wherein the one pixel has a different polarity from the other pixel.

**4.** The liquid crystal display device of claim 2 or 3, wherein after the respective first and second thin-film transistors of the two adjacent pixels that have been in ON state have turned OFF, the first change in the voltage of a storage capacitor signal supplied to the first storage capacitor line occurs in a different direction from the first change in the voltage of a storage capacitor signal supplied to the second storage capacitor line.

**5.** The liquid crystal display device of one of claims 2 to 4, wherein it is not until a gate signal voltage supplied to a gate line that is electrically connected to the respective gates of the first and second thin-film transistors of the two adjacent pixels has changed into an OFF-state voltage that the voltages of the storage capacitor signals supplied to the first and second storage capacitor lines change.

**6.** The liquid crystal display device of one of claims 1 to 5, wherein the potential of the first subpixel electrode changes in one direction in one of the respective first subpixels of the plurality of pixels, in which the potential of the first subpixel electrode is higher than that of the counter electrode, and changes in another direction in another one of the first subpixels in which the potential of the first subpixel electrode is lower than that of the counter electrode.

**7.** The liquid crystal display device of one of claims 1 to 6, wherein one of the first and second subpixels has a larger area than the other subpixel.

**8.** The liquid crystal display device of claim 7, wherein the area of the one subpixel is 1.5 to 4 times as large as that of the other subpixel.

**9.** The liquid crystal display device of claim 8, wherein the one subpixel has a lower luminance than the other subpixel.

**10.** The liquid crystal display device of one of claims 7 to 9, wherein the one subpixel is the first subpixel, and
wherein after the first and second thin-film transistors that have been in ON state have turned OFF in an arbitrary one of the pixels, the first change in the voltage of the storage capacitor signal supplied to the storage capacitor line that is associated with the first subpixel, in which the first subpixel electrode has a lower potential than the counter electrode, is increase, while the first change in the voltage of the storage capacitor signal supplied to the storage capacitor line that is associated with the first subpixel, in which the first subpixel electrode has a higher potential than the counter electrode, is decrease.

**11.** The liquid crystal display device of one of claims 7 to 9, wherein the one subpixel is the second subpixel, and
wherein after the first and second thin-film transistors that have been in ON state have turned OFF in an arbitrary one of the pixels, the first change in the voltage of the storage capacitor signal supplied to the storage capacitor line that is associated with the first subpixel, in which the first subpixel electrode has a higher potential than the counter electrode, is increase, while the first change in the voltage of the storage capacitor signal supplied to the storage capacitor line that is associated with the first subpixel, in which the first subpixel electrode has a lower potential than the counter electrode, is decrease.

**12.** The liquid crystal display device of one of claims 1 to 11, wherein the first subpixel includes the storage capacitor.

**13.** The liquid crystal display device of claim 12, wherein the second subpixel includes no storage capacitors.

**14.** The liquid crystal display device of one of claims 1 to 12, wherein the active-matrix substrate further includes multiple pairs of storage capacitor electrodes, each pair of which are electrically connected to the second subpixel electrode and the drain of the second thin-film transistor, respectively, and
wherein in each of the multiple pairs of storage capacitor electrodes, one storage capacitor electrode and a storage capacitor counter electrode, which is electrically connected to a storage capacitor line associated with the first subpixel of an arbitrary one of pixels, form a storage capacitor, while the other storage capacitor electrode and a storage capacitor counter electrode, which is electrically connected to a storage capacitor line associated with the first subpixel of a pixel that is adjacent to the arbitrary pixel in the row direction, form another storage capacitor.

**15.** The liquid crystal display device of claim 14, wherein after the first and second thin-film transistors have turned OFF, the first change in the voltage of a storage capacitor signal supplied to the storage capacitor line that is associated with one of the pair of storage capacitor electrodes occurs in a different direction from the first change in the voltage of a storage capacitor signal supplied to the storage capacitor line associated with the other storage capacitor electrode.

16. The liquid crystal display device of one of claims 1 to 15, wherein the plurality of source lines runs in the column direction, and the plurality of gate lines runs in a row direction.

17. The liquid crystal display device of one of claims 1 to 16, wherein the first and second subpixels are adjacent to each other in the row direction.

18. The liquid crystal display device of one of claims 1 to 17, wherein among ones of the pixels that are arranged in the column direction, the first and second subpixels are arranged in line.

19. The liquid crystal display device of one of claims 1 to 18, wherein among ones of the pixels that are arranged in the row direction, the first and second subpixels are arranged alternately.

20. The liquid crystal display device of one of claims 1 to 16, wherein the first and second subpixels are arranged so that one of the first and second subpixels surrounds the other subpixel.

21. The liquid crystal display device of one of claims 1 to 20, wherein among ones of the pixels that form two adjacent rows in the column direction, the potential of the first subpixel electrodes varies according to a storage capacitor signal supplied to the same storage capacitor line.

22. The liquid crystal display device of one of claims 1 to 21, wherein each of the first and second subpixel electrodes includes a trunk portion that runs in the row and column directions and a branch portion that is extended from the trunk portion.

23. The liquid crystal display device of one of claims 1 to 22, wherein at least one of the active-matrix substrate and the counter substrate further includes an alignment film.

24. The liquid crystal display device of claim 23, wherein the alignment film includes an optical alignment film.

25. The liquid crystal display device of one of claims 1 to 24, further comprising alignment sustaining layers which are arranged between the active-matrix substrate and the liquid crystal layer and between the counter substrate and the liquid crystal layer, respectively.

26. The liquid crystal display device of one of claims 1 to 25, wherein the active-matrix substrate further includes a plurality of drain electrodes, each of which is connected to the drain of the first thin-film transistor and the storage capacitor electrode.

27. The liquid crystal display device of claim 26, wherein each of the plurality of drain electrodes is arranged so as to overlap with the edge of at least one of the first and second subpixel electrodes.

28. The liquid crystal display device of claim 26 or 27, wherein each of the plurality of drain electrodes overlaps with a region where the reference alignment azimuth of liquid crystal molecules in at least one liquid crystal domain in the liquid crystal layer intersects with the edge of at least one of the first and second subpixel electrodes.

29. The liquid crystal display device of one of claims 1 to 28, wherein each of the first and second subpixels has four liquid crystal domains, in any two of which the reference alignment azimuths of liquid crystal molecules are different from each other substantially by an integral multiple of 90 degrees.

30. The liquid crystal display device of claim 29, wherein in each of the first and second subpixels, regions corresponding to the four liquid crystal domains are arranged in line in the column direction, and wherein in two adjacent ones of the four liquid crystal domains, the reference alignment azimuths of the liquid crystal molecules are different from each other by approximately 90 degrees.

## FIG.1

(a)

(b)

*FIG.2*

## FIG.3

## FIG.4

(a)

(b)

FRONTAL NORMALIZED LUMINANCE$^{(1/2.2)}$

FRONTAL NORMALIZED LUMINANCE$^{(1/2.2)}$

## FIG.5

*FIG.6*

*FIG.7*

100A

## *FIG.8*

# FIG.9

## FIG.10

*FIG.11*

FIG.12

*FIG.13*

## FIG.14

100D

## FIG.15

## FIG.16

VLsm

VLgn

VLgn+1

VLgn+2

VLgn+3

VLgn+4

Td

1H

VLcsa

VLcsb

VCLa_m,n
VCLb_m,n

VCLa_m,n+1

VCLb_m,n+1

VCLa_m,n+2

VCLb_m,n+2

VCLa_m,n+3

VCLb_m,n+3

VCLa_m,n+4

VCLb_m,n+4

*FIG.17*

(a)

(b)

**FIG.18**

## FIG.19

(a)

(b)

*FIG.20*

(a)

(b)

(c)

## FIG.21

## FIG.22

(a)

(b)

(c)

# FIG.23

*FIG.24*

(a)

(b)

(c)

## FIG.25

# FIG.26

800

Ls

824b(Spb)

824a
(Spa)

830a

830b

Lg

*FIG.27*

## FIG.28

P

Lsm  Lsm+1

900

| | Lsm | Lsm+1 | | | | |
|---|---|---|---|---|---|---|
| **Lcsa** | | | | | | |
| Spa | A + H | A − L | A + H | A − L | A + H | A − L |
| **Lgn** | | | | | | |
| Spb | B + L | B − H | B + L | B − H | B + L | B − H |
| **Lcsb** | | | | | | |
| | B − H | B + L | B − H | B + L | B − H | B + L |
| **Lgn+1** | | | | | | |
| | A − L | A + H | A − L | A + H | A − L | A + H |
| **Lcsa** | | | | | | |
| | A + H | A − L | A + H | A − L | A + H | A − L |
| **Lgn+2** | | | | | | |
| | B + L | B − H | B + L | B − H | B + L | B − H |
| **Lcsb** | | | | | | |
| | B − H | B + L | B − H | B + L | B − H | B + L |
| **Lgn+3** | | | | | | |
| | A − L | A + H | A − L | A + H | A − L | A + H |
| **Lcsa** | | | | | | |

## INTERNATIONAL SEARCH REPORT

| | International application No. |
|---|---|
| | PCT/JP2011/056343 |

**A. CLASSIFICATION OF SUBJECT MATTER**
*G02F1/133*(2006.01)i, *G02F1/1337*(2006.01)i, *G02F1/1368*(2006.01)i, *G09G3/20*(2006.01)i, *G09G3/36*(2006.01)i

According to International Patent Classification (IPC) or to both national classification and IPC

**B. FIELDS SEARCHED**

Minimum documentation searched (classification system followed by classification symbols)
G02F1/133, G02F1/1337, G02F1/1368, G09G3/20, G09G3/36

Documentation searched other than minimum documentation to the extent that such documents are included in the fields searched
| Jitsuyo Shinan Koho | 1922-1996 | Jitsuyo Shinan Toroku Koho | 1996-2011 |
| Kokai Jitsuyo Shinan Koho | 1971-2011 | Toroku Jitsuyo Shinan Koho | 1994-2011 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2008/018552 A1 (Sharp Corp.), 14 February 2008 (14.02.2008), entire text; all drawings & US 2010/0182345 A & EP 2051136 A1 & EP 2051136 A4 & CN 101501561 A & CN 101501561 B | 1-30 |
| A | WO 2008/111490 A1 (Sharp Corp.), 18 September 2008 (18.09.2008), entire text; all drawings & US 2010/0103339 A & EP 2136247 A1 & EP 2136247 A4 & CN 101636690 A | 1-30 |

☐ Further documents are listed in the continuation of Box C.  ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 April, 2011 (21.04.11) | 10 May, 2011 (10.05.11) |

| Name and mailing address of the ISA/ | Authorized officer |
|---|---|
| Japanese Patent Office | |
| Facsimile No. | Telephone No. |

Form PCT/ISA/210 (second sheet) (July 2009)

60

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006209135 A
- JP 2005189804 A
- JP 2002357830 A
- JP 2003177418 A
- JP 2006078968 A
- WO 2006121220 PCT
- WO 2006132369 PCT

**Non-patent literature cited in the description**

- **K. HANAOKA et al.** A New MVA-LCD by Polymer Sustained Alignment Technology. *SID 04 DIGEST,* 2004, 1200-1203